(19) Europäisches Patentamt
European Patent Office
Office européen des brevets

(11) EP 3 663 349 A1

(12) EUROPEAN PATENT APPLICATION
published in accordance with Art. 153(4) EPC

(43) Date of publication:
**10.06.2020 Bulletin 2020/24**

(21) Application number: **18841457.7**

(22) Date of filing: **02.08.2018**

(51) Int Cl.:
***C08L 21/00*** *(2006.01)* ***B60C 1/00*** *(2006.01)*
***C08J 3/24*** *(2006.01)* ***C08K 3/04*** *(2006.01)*
***C08K 3/34*** *(2006.01)* ***C08K 3/36*** *(2006.01)*
***C08L 101/02*** *(2006.01)*

(86) International application number:
**PCT/JP2018/029135**

(87) International publication number:
**WO 2019/027022 (07.02.2019 Gazette 2019/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2017 JP 2017149738**
**13.04.2018 JP 2018077626**

(71) Applicant: **JXTG Nippon Oil & Energy Corporation**
**Chiyoda-ku**
**Tokyo 100-8162 (JP)**

(72) Inventors:
- **CHINO Keisuke**
**Tokyo 100-8162 (JP)**
- **MATSUO Yusuke**
**Tokyo 100-8162 (JP)**
- **MORINAGA Yoshihiro**
**Tokyo 100-8162 (JP)**
- **TSUTSUMI Toshiyuki**
**Tokyo 100-8162 (JP)**

(74) Representative: **Hoffmann Eitle**
**Patent- und Rechtsanwälte PartmbB**
**Arabellastraße 30**
**81925 München (DE)**

# (54) RUBBER COMPOSITION, CROSSLINKED RUBBER COMPOSITION, TIRE, AND RUBBER PART FOR INDUSTRIAL USE

(57) A rubber composition comprises: a rubber having no hydrogen-bond cross-linkable moiety; a specific polymer component; and a clay, wherein a content of the polymer component is 0.01 to 300 parts by mass relative to 100 parts by mass of the rubber, and an amount of the clay contained is 20 parts by mass or less relative to 100 parts by mass of the polymer component.

EP 3 663 349 A1

## Description

[Technical Field]

The present invention relates to a rubber composition, a cross-linked rubber composition, a tire, and an industrial rubber part.

[Background Art]

Conventionally, rubber compositions (for example, diene-based rubber compositions) have been used as materials for tire tread portions, and various types of rubber compositions have been developed in order to further improve various properties required for tires. As the above rubber compositions, PTL 1 (JP 2010-196004 A) discloses, for example, a diene-based rubber composition obtained by adding 0.1 to 15 parts by weight of a specific hydrogen-bond thermoplastic elastomer to 100 parts by weight of a diene-based rubber. In addition, PTL 2 (JP 2011-148892 A) discloses a diene-based rubber composition obtained by blending 30 to 50 parts by weight of a specific carbon black per 100 parts by weight of a diene-based rubber composed of (A) 95 to 99% by weight of a diene-based rubber and (B) 5 to 1% by weight of a hydrogen-bond thermoplastic elastomer which has a main chain made of a diene-based rubber, has a carbonyl-containing group and a nitrogen-containing heterocycle in the molecule, and has a weight average molecular weight Mw of 50,000 or less.

However, in the case where such a conventional diene-based rubber composition as described in PTLs 1 and 2 is used and cross-linked to produce a tire, it is impossible to obtain a tire having a sufficiently high balance, such that a sufficiently high value of loss tangent at 0°C [loss coefficient: tanδ (0°C)] as an index of wet grip and a sufficiently low value of loss tangent at 60°C [loss coefficient: tanδ (60°C)] as an index of low fuel consumption can be achieved simultaneously, between the value of tanδ (0°C) and the value of tanδ (60°C) . Moreover, in the field of such rubber compositions (for example, diene-based rubber compositions), it is also desired that the compositions have a higher cross-linking rate (vulcanization rate in the case of vulcanization) from the viewpoint of improving the productivity of rubber products such as tires.

[Citation List]

[Patent Literature]

[PTL 1] Japanese Unexamined Patent Application Publication No. 2010-196004
[PTL 2] Japanese Unexamined Patent Application Publication No. 2011-148892

[Summary of Invention]

[Technical Problem]

The present invention has been made in view of the above-described problems of the conventional techniques, and an object of the present invention is to provide a rubber composition which can achieve a sufficiently high value of tanδ at 0°C (loss tangent: tanδ (0°C)) and simultaneously a sufficiently low value of tanδ at 60°C (loss tangent: tanδ (60°C)) after cross-linking, which can achieve a sufficiently high balance between the value of tanS (0°C) and the value of tanδ (60°C), and which further has a faster cross-linking rate, a cross-linked rubber composition which is a cross-linked product thereof, a tire, and an industrial rubber part containing the cross-linked rubber composition.

[Solution to Problem]

The present inventors have made earnest studies in order to achieve the above object, and have found as a result that, when a rubber composition (for example, a diene-based rubber composition) contains a rubber having no hydrogen-bond cross-linkable moiety (for example, a diene-based rubber having no hydrogen-bond cross-linkable moiety), a polymer component described later, and clay, when a content of the polymer component in the composition is 0.01 to 300 parts by mass relative to 100 parts by mass of the rubber, and when an amount of the clay contained is 20 parts by mass or less relative to 100 parts by mass of the polymer component, it is possible to achieve a sufficiently high value of tanδ (0°C) and simultaneously a sufficiently low value of tanδ (60°C) after cross-linking, to achieve a sufficiently high balance between the value of tanδ (0°C) and the value of tanδ (60°C), and moreover to achieve a faster

cross-linking rate. These findings have led to the completion of the present invention.

Specifically, a rubber composition of the present invention comprises:

a rubber having no hydrogen-bond cross-linkable moiety (more preferably a diene-based rubber having no hydrogen-bond cross-linkable moiety);
at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below, and polymers (B) each of which contains a hydrogen-bond cross-linkable moiety and a covalent-bond cross-linking moiety in a side chain and has a glass-transition point of 25°C or below (more preferably, at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below); and
a clay, wherein
a content of the polymer component (more preferably, the elastomer component) is 0.01 to 300 parts by mass relative to 100 parts by mass of the rubber (when the rubber is a diene-based rubber having no hydrogen-bond cross-linkable moiety, 100 parts by mass of the diene-based rubber), and
an amount of the clay contained is 20 parts by mass or less relative to 100 parts by mass of the polymer component (100 parts by mass of the elastomer component, when the polymer component is the elastomer component).

In addition, in the rubber composition of the present invention, it is preferable to further comprise at least one bulking agent selected from the group consisting of silica and carbon black at a ratio of 10 to 150 parts by mass relative to 100 parts by mass of the rubber (more preferably a diene-based rubber having no hydrogen-bond cross-linkable moiety). In addition, in the rubber composition of the present invention, the hydrogen-bond cross-linkable moiety contained in the side chain of the polymer (B) (more preferably the elastomeric polymer (B)) is preferably a hydrogen-bond cross-linkable moiety having a carbonyl-containing group and/or a nitrogen-containing heterocycle. Moreover, in the rubber composition of the present invention, the clay is preferably an organically modified clay. In addition, in the rubber composition of the present invention, a cross-link in the covalent-bond cross-linking moiety contained in the side chain of the polymer (B) (more preferably the elastomeric polymer (B)) is preferably formed by at least one bond selected from the group consisting of amide, ester, lactone, urethane, ether, thiourethane, and thioether.

The cross-linked rubber composition of the present invention is a cross-linked product of the rubber composition of the present invention.

In addition, the tire and the industrial rubber part of the present invention each comprises the cross-linked rubber composition of the present invention.

[Advantageous Effects of Invention]

The resent invention makes it possible to provide a rubber composition which can achieve a sufficiently high value of tanδ at 0°C (loss tangent: tanδ (0°C)) and simultaneously a sufficiently low value of tanδ at 60°C (loss tangent: tanδ (60°C)) after cross-linking, which can achieve a sufficiently high balance between the value of tanS (0°C) and the value of tanδ (60°C), and which further has a faster cross-linking rate, a cross-linked rubber composition which is a cross-linked product thereof, a tire, and an industrial rubber part containing the cross-linked rubber composition.

[Description of Embodiments]

Hereinafter, the present invention is described in detail with reference to preferred embodiments thereof.

[Rubber Composition]

A rubber composition of the present invention comprises:

a rubber having no hydrogen-bond cross-linkable moiety (more preferably a diene-based rubber having no hydrogen-bond cross-linkable moiety);
at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below, and polymers (B) each of which contains a hydrogen-bond cross-linkable moiety and a covalent-bond cross-linking moiety in a side chain and has a glass-transition point of 25°C or below (more preferably, at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below); and
a clay, wherein
a content of the polymer component (more preferably, the elastomer component) is 0.01 to 300 parts by mass relative to 100 parts by mass of the rubber (when the rubber is a diene-based rubber having no hydrogen-bond cross-linkable moiety, 100 parts by mass of the diene-based rubber), and
an amount of the clay contained is 20 parts by mass or less relative to 100 parts by mass of the polymer component (100 parts by mass of the elastomer component, when the polymer component is the elastomer component). Note that the rubber composition in the case where the rubber having no hydrogen-bond cross-linkable moiety is a diene-based rubber having no hydrogen-bond cross-linkable moiety is sometimes referred to as the "diene-based rubber composition" in the present specification. Hereinafter, first, each of the components is described.

(Rubber)

The rubber according to the present invention is a rubber having no hydrogen-bond cross-linkable moiety (more preferably a diene-based rubber having no hydrogen-bond cross-linkable moiety). Note that, in such a rubber (more preferably a diene-based rubber), "having no hydrogen-bond cross-linkable moiety" means that there is no moiety for cross-linking by hydrogen bonding between rubbers (between diene-based rubbers when the rubber is a diene-based rubber, for example) and between other components, and means that there is no structural part that can form a cross-link by hydrogen bonding (for example, a group such as a hydroxyl group or a carbonyl group that can form a cross-link by hydrogen bonding).

Preferable examples of such a rubber having no hydrogen-bond cross-linkable moiety include diene-based rubber having no hydrogen-bond cross-linkable moiety, silicone-based rubber having no hydrogen-bond cross-linkable moiety, chlorosulfonated polyethylene rubber having no hydrogen-bond cross-linkable moiety, epichlorohydrin rubber having no hydrogen-bond cross-linkable moiety, polysulfide rubber having no hydrogen-bond cross-linkable moiety, fluororubber having no hydrogen-bond cross-linkable moiety, diene-based elastomer having no hydrogen-bond cross-linkable moiety, vinyl chloride-based elastomer having no hydrogen-bond cross-linkable moiety, fluorine-based elastomer having no hydrogen-bond cross-linkable moiety (however, such a rubber having no hydrogen-bond cross-linkable moiety excludes those corresponding to the "styrene block copolymer having no chemical-bond cross-linking moiety" and the "$\alpha$-olefin-based resin having no chemical-bond cross-linking moiety" described later). The rubber having no hydrogen-bond cross-linkable moiety may be used alone, or two or more kinds thereof may be used in combination (blended).

The rubber having no hydrogen-bond cross-linkable moiety is more preferably at least one rubber component selected from the group consisting of diene-based rubbers having no hydrogen-bond cross-linkable moiety, silicone-based rubbers having no hydrogen-bond cross-linkable moiety, chlorosulfonated polyethylene-based rubbers having no hydrogen-bond cross-linkable moiety, epichlorohydrin-based rubbers having no hydrogen-bond cross-linkable moiety, polysulfide-based rubbers having no hydrogen-bond cross-linkable moiety, and fluorine-based rubbers having no hydrogen-bond cross-linkable moiety. Note that the "diene-based rubber" mentioned here may be a rubber having a double bond in the molecular structure . For this reason, the "diene-based rubber" described in the present specification is a concept including EPDM (ethylene-propylene-diene copolymer), butyl rubber (IIR), and the like as exemplified below. In addition, the "silicone-based rubber" in the present specification may be a rubber containing a siloxane structure.

The diene-based rubber which can be suitably used as such a rubber having no hydrogen-bond cross-linkable moiety may be any rubber having no hydrogen-bond cross-linkable moiety, and it is possible to appropriately use a known diene-based rubber which can be used for the production of industrial rubber parts (preferably tires) (for example, a known diene-based rubber such as natural rubber (NR), isoprene rubber (IR), butadiene rubber (BR), 1,2-butadiene rubber, styrene-butadiene rubber (SBR), acrylonitrile-butadiene rubber (NBR), chloroprene rubber (CR), butyl rubber (IIR), and ethylene-propylene-diene rubber (EPDM)). Among these diene-based rubbers, it is possible to suitably use natural rubber (NR), styrene butadiene rubber (SBR), butadiene rubber (BR), and butyl rubber (IIR) from the viewpoint that, when the composition is a material for producing an industrial rubber part (preferably a tire), it is possible to obtain an industrial rubber part (preferably a tire) with better performance. Such diene-based rubbers may be used alone, or two or more kinds thereof may be used in combination (blended).

In addition, SBR which can be used as such a diene-based rubber may be either emulsion polymerization SBR (E-SBR) or solution polymerization SBR (S-SBR). In addition, when SBR is blended with an additional diene-based rubber, it is preferable to use natural rubber, butadiene rubber, or both as the additional diene-based rubber. In addition, as such a diene-based rubber, a blended product of diene-based rubbers may be used in order to exhibit more optimal performance depending on the application. As such a diene-based rubber, for example, it is possible to suitably use one

containing 40 to 100% by mass of SBR from the viewpoint of using the composition as a material for forming a tread portion of a tire, and it is possible suitably to use one containing 50 to 100% by mass of SBR from the viewpoint of using the composition as a material for forming a cap tread portion of a tire.

The silicone-based rubber which can be suitably used as such a rubber having no hydrogen-bond cross-linkable moiety may be one having no hydrogen-bond cross-linkable moiety, and it is possible to appropriately select and use a known silicone-based rubber which can be used for production of an industrial rubber part. Such silicone-based rubber is preferably dimethyl silicone rubber (MQ), vinyl methyl silicone rubber (VMQ), phenyl methyl silicone rubber (PMQ), phenyl vinyl methyl silicone rubber (PVMQ), and fluoro silicone rubber (FVMQ), and more preferably dimethyl silicone rubber (MQ) and vinyl methyl silicone rubber (VMQ). In addition, such a silicone-based rubber may be a liquid silicone rubber or a millable silicone rubber, but is preferably a millable silicone rubber from the viewpoint of ease of mixing. As such silicone-based rubbers, commercially available ones can be used as appropriate. Such silicone-based rubbers may be used alone, or two or more kinds thereof may be used in combination (blended).

In addition, as the chlorosulfonated polyethylene rubber which can be suitably used as the rubber having no hydrogen-bond cross-linkable moiety, it is possible to appropriately select and use a known one that has no hydrogen-bond cross-linkable moiety, and can be used for production of an industrial rubber part. Note that the chlorosulfonated polyethylene rubber mentioned here may be a polyethylene having a chlorine group and a chlorosulfonyl group. Such chlorosulfonated polyethylene rubber is preferably chlorosulfonated polyethylene rubber or chlorosulfonated ethylene·propylene rubber, and more preferably chlorosulfonated polyethylene rubber. As such chlorosulfonated polyethylene rubbers, commercially available ones can be used as appropriate. Such chlorosulfonated polyethylene rubbers may be used alone, or two or more kinds thereof may be used in combination (blended).

In addition, the epichlorohydrin rubber which can be suitably used as the rubber having no hydrogen-bond cross-linkable moiety may be a polyether rubber which has no hydrogen-bond cross-linkable moiety, has an ether bond in the main chain, and has a chloromethyl group in the side chain. As such epichlorohydrin rubber, it is possible to appropriately select and use a known one that has no hydrogen-bond cross-linkable moiety and can be used for production of an industrial rubber part. Such epichlorohydrin rubber is preferably epichlorohydrin (ECH) homopolymer (CO), epichlorohydrin (ECH)-ethylene oxide (EO) copolymer (ECO), allyl glycidyl ether (AGE)-ECH copolymer (GCO), or AGE-EO-ECH terpolymer (GECO), and more preferably epichlorohydrin (ECH) homopolymer (CO), epichlorohydrin (ECH) -ethylene oxide (EO) copolymer (ECO), or AGE-EO-ECH terpolymer (GECO) . As such epichlorohydrin rubbers, commercially available ones can be used as appropriate. Such epichlorohydrin rubbers may be used alone, or two or more kinds thereof may be used in combination (blended).

Moreover, as the polysulfide rubber which can be suitably used as the rubber having no hydrogen-bond cross-linkable moiety, it is possible to appropriately select and use a known one that has no hydrogen-bond cross-linkable moiety, and can be used for production of an industrial rubber part. Such a polysulfide rubber may be a rubber having an ether bond and a (poly) sulfide bond in the main chain. As such polysulfide rubbers, commercially available ones can be used as appropriate as long as they have no hydrogen-bond cross-linkable moiety. Such polysulfide rubbers may be used alone, or two or more kinds thereof may be used in combination (blended).

In addition, the fluororubber which can be suitably used as the rubber having no hydrogen-bond cross-linkable moiety may be one having no hydrogen-bond cross-linkable moiety, and it is possible to appropriately select and use a known one that can be used for production of an industrial rubber part. Note that the fluororubber mentioned here is a general term for rubbers containing fluorine in the molecule, and it is possible to use a known one as long as it is one having no hydrogen-bond cross-linkable moiety. Such fluororubber is preferably vinylidene fluoride-based (FKM), tetrafluoroethylene-propylene-based (FEPM), or tetrafluoroethylene-perfluorovinyl ether-based (FFKM), and more preferably vinylidene fluoride-based (FKM). As such fluororubbers, commercially available ones can be used as appropriate. Such fluororubbers may be used alone, or two or more kinds thereof may be used in combination (blended).

Moreover, the diene-based elastomer which can be suitably used as the rubber having no hydrogen-bond cross-linkable moiety may be one having no hydrogen-bond cross-linkable moiety, and it is possible to appropriately select and use a known one that can be used for production of an industrial rubber part. Such a diene-based elastomer may be a diene-based polymer which has no hydrogen-bond cross-linkable moiety and has a hard segment (crystalline layer) and a soft segment (amorphous layer) to exhibit an elastomeric property, and among others, preferably syndiotactic-1,2-polybutadiene (RB), trans-1,4-polyisoprene (TPI), or trans-1,5-polyisoprene (TPI). As such diene-based elastomers, commercially available ones can be used as appropriate. Such diene-based elastomers may be used alone, or two or more kinds thereof may be used in combination (blended).

In addition, the vinyl chloride-based elastomer which can be suitably used as the rubber having no hydrogen-bond cross-linkable moiety may be one having no hydrogen-bond cross-linkable moiety, and it is possible to appropriately select and use a known one that can be used for production of an industrial rubber part. Examples of such a vinyl chloride-based elastomer include partially cross-linked PVC, high molecular weight PVC, and a blended product of partially cross-linked NBR and plasticized PVC. In addition, as such vinyl chloride-based elastomers, commercially available ones can be used as appropriate. Such vinyl chloride-based elastomers may be used alone, or two or more kinds thereof may be

used in combination (blended).

In addition, the fluorine-based elastomer which can be suitably used as the rubber having no hydrogen-bond cross-linkable moiety may be one having no hydrogen-bond cross-linkable moiety, and it is possible to appropriately select and use a known one that can be used for production of an industrial rubber part. Note that the fluorine-based elastomer mentioned here contains a fluororubber as a soft segment and a fluororesin as a hard segment. As such fluorine-based elastomers, commercially available ones can be used as appropriate. Such fluorine-based elastomers may be used alone, or two or more kinds thereof may be used in combination (blended) .

Among the above rubbers having no hydrogen-bond cross-linkable moiety, diene-based rubber having no hydrogen-bond cross-linkable moiety and silicone-based rubber having no hydrogen-bond cross-linkable moiety are further preferable, and diene-based rubber having no hydrogen-bond cross-linkable moiety is particularly preferable from the viewpoint of versatility and performance. Note that such a rubber having no hydrogen-bond cross-linkable moiety may be used alone, or may be a mixture of two or more kinds.

In addition, from the viewpoint of versatility and performance, such a rubber having no hydrogen-bond cross-linkable moiety is more preferably styrene butadiene rubber (SBR), chloroprene rubber (CR), butyl rubber (IIR), ethylene-propylene-diene rubber (EPDM), millable silicone rubber, natural rubber (NR), isoprene rubber (IR), butadiene rubber (BR), or acrylonitrile-butadiene rubber (NBR), and particularly preferably styrene butadiene rubber (SBR), chloroprene rubber (CR), butyl rubber (IIR), ethylene-propylene-diene rubber (EPDM), millable silicone rubber, or natural rubber (NR). Note that such a rubber having no hydrogen-bond cross-linkable moiety may be used alone, or may be a mixture of two or more kinds.

(Polymer Component)

The polymer component according to the present invention is at least one selected from the group consisting of the above-described polymers (A) and (B). In each of the polymers (A) and (B), the "side chain" refers to a side chain and a terminal of the polymer (elastomeric polymer when the polymers (A) and (B) are elastomeric polymers). In addition, "a side chain (a) containing a hydrogen-bond cross-linkable moiety having a carbonyl-containing group and/or a nitrogen-containing heterocycle" means that a carbonyl-containing group and/or a nitrogen-containing heterocycle (more preferably a carbonyl-containing group and a nitrogen-containing heterocycle) serving as a hydrogen-bond cross-linkable moiety is chemically stably bonded (covalently bonded) to an atom (generally, a carbon atom) forming a main chain of the polymer (elastomeric polymer when the polymers (A) and (B) are elastomeric polymers). In addition, the "containing a hydrogen-bond cross-linkable moiety and a covalent-bond cross-linking moiety in a side chain" is a concept including a case where side chains of both a side chain having a hydrogen-bond cross-linkable moiety (hereinafter, sometimes referred to as "side chain (a')" for convenience) and a side chain having a covalent-bond cross-linking moiety (hereinafter, sometimes referred to as "side chain (b) " for convenience) are contained, so that the side chains of the polymer contain both a hydrogen-bond cross-linkable moiety and a covalent-bond cross-linking moiety, as well as a case where a side chain having both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as "side chain (c)" for convenience) is contained, so that the side chain of the polymer contain both a hydrogen-bond cross-linkable moiety and a covalent-bond cross-linking moiety. Here, such a polymer component is preferably at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below. Specifically, in such a polymer component, it is preferable that the polymer (A) be the elastomeric polymer (A) and the polymer (B) be the elastomeric polymer (B). Note that the elastomer component suitable as such a polymer component is synonymous with the elastomer component described in Japanese Patent No. 5918878, and it is possible to suitably use those described in paragraph [0032] to paragraph [0145] of that publication.

In addition, the main chain (polymer forming a main chain portion) of each of the polymer components (the polymers (A) and (B)) may be generally a known natural polymer or a synthetic polymer, wherein the polymer has a glass-transition point of room temperature (25°C) or lower, and is not particularly limited. The main chains of the polymers (A) and (B) are each preferably at least one selected from diene-based rubbers, hydrogenated products of diene-based rubbers, olefin-based rubbers, silicone-based rubbers, chlorosulfonated polyethylene rubbers, epichlorohydrin rubbers, polysulfide rubbers, fluororubbers, acrylic rubbers, urethane rubbers, optionally hydrogenated polystyrene-based polymers (preferably polystyrene-based elastomeric polymers), polyolefin-based polymers (preferably high density polyethylenes (HDPE) and polyolefin-based elastomeric polymers), polyvinyl chloride-based polymers (preferably polyvinyl chloride-based elastomeric polymers), polyurethane-based polymers (preferably polyurethane-based elastomeric polymers), polyester-based polymers (preferably polyester-based elastomeric polymers), and polyamide-based polymers

(preferably polyamide-based elastomeric polymers) . Note that examples of such polyolefin-based polymers include low density polyethylenes (LDPE), high density polyethylenes (HDPE), linear polyethylenes (LLDPE), and polypropylenes. In addition, the main chains of the polymer components (the polymers (A) and (B)) are each preferably a hydrogenated product of a diene-based rubber, an olefin-based rubber, or a polyolefin-based polymer from the viewpoint of the absence of a double bond susceptible to aging, and preferably a diene-based rubber from the viewpoint of the high reactivity (the presence of many double bonds capable of an ene reaction with a compound such as maleic anhydride).

Moreover, when the polymer components are the elastomeric polymers (A) and (B), the main chain (polymer forming a main chain portion) of each of the elastomeric polymers (A) and (B) may be generally a known natural polymer or synthetic polymer, wherein the elastomeric polymer has a glass-transition point of room temperature (25°C) or lower (the main chain may be a so-called elastomer), and is not particularly limited. As the main chain of each of the elastomeric polymers (A) and (B) (polymer forming a main chain portion), it is possible to appropriately use a known elastomeric polymer having a glass-transition point of room temperature (25°C) or lower (for example, those described in paragraphs [0033] to [0036] of JP 5918878 B).

The main chains of the elastomeric polymers (A) and (B) suitable as such polymer components are each preferably at least one selected from diene -based rubbers, hydrogenated products of diene-based rubbers, olefin-based rubbers, silicone-based rubbers, chlorosulfonated polyethylene rubbers, epichlorohydrin rubbers, polysulfide rubbers, fluororubbers, acrylic rubbers, urethane rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers. In addition, the main chains of the elastomeric polymers (A) and (B) suitable as such polymer components are each preferably a hydrogenated product of a diene-based rubber or an olefin-based rubber from the viewpoint of the absence of a double bond susceptible to aging, and preferably a diene-based rubber from the viewpoints of the low cost and the high reactivity (the presence of many double bonds capable of an ene reaction with a compound such as maleic anhydride). In addition, when an olefin-based rubber is used for each of the main chains of the elastomeric polymers (A) and (B), deterioration tends to be more sufficiently suppressed due to the absence of double bond.

In addition, among others, the main chains of the polymer components (the polymers (A) and (B)) are each more preferably at least one selected from the group consisting of polyethylenes (more preferably high density polyethylenes (HDPE)), ethylene-butene copolymers, ethylene-propylene copolymers, ethylene-octene copolymers, and polypropylenes from the viewpoint of an excellent balance between compression set and fluidity, and particularly preferably at least one selected from the group consisting of polyethylenes (more preferably high density polyethylenes (HDPE)) and ethylene-butene copolymers. Note that the high density polyethylenes refer to polyethylenes having a density of 0.93 g/cm$^3$ or more.

In addition, as such polymer components (more preferably elastomeric components), the polymers (A) and (B) (more preferably the elastomeric polymers (A) and (B)) may be used alone, or may be a mixture of two or more kinds . In addition, the glass-transition point of such polymers (A) and (B) (more preferably the elastomeric polymers (A) and (B)) is 25°C or below as described above. Note that when the polymers (A) and (B) are elastomeric polymers, they exhibit rubber-like elasticity at room temperature. Additionally, in the present invention, the "glass-transition point" is a glass-transition point measured by differential scanning calorimetry (DSC - Differential Scanning Calorimetry). In the measurement, the rate of temperature rise is preferably 10°C/min.

In addition, as described above, the polymers (A) and (B) (more preferably the above-described elastomeric polymers (A) and (B)) have, as a side chain, at least one of a side chain (a) containing a hydrogen-bond cross-linkable moiety having a carbonyl-containing group and/or a nitrogen-containing heterocycle; a side chain a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety. Note that, in the present invention, the side chain (c) can also be regarded as a side chain functioning as a side chain (a') and also as a side chain (b). Each of the side chains is described below.

<Side Chain (a'): Side Chain Containing Hydrogen-Bond Cross-Linkable Moiety>

The side chain (a') containing a hydrogen-bond cross-linkable moiety may be any, and the structure thereof is not particularly limited, as long as the side chain has a group that can form a cross-linkage by a hydrogen bond (for example, a hydroxy group, a hydrogen-bond cross-linkable moiety contained in the side chain (a) described later, or the like), and forms a hydrogen bond on the basis of the group. Here, the hydrogen-bond cross-linkable moiety is a moiety through which polymer molecules (more preferably elastomer molecules) are cross-linked by a hydrogen bond. Note that the cross-linkage by a hydrogen bond is formed only when there are a hydrogen acceptor (a group containing an atom containing lone pair electrons, or the like) and a hydrogen donor (a group having a hydrogen atom covalently bonded to an atom having a high electronegativity, or the like) . Hence, when both a hydrogen acceptor and a hydrogen donor are not present in side chains of polymer molecules (more preferably elastomer molecules), no cross-linkage by

a hydrogen bond is formed. For this reason, only when both a hydrogen acceptor and a hydrogen donor are present in side chains of polymer molecules (more preferably elastomer molecules), a hydrogen-bond cross-linkable moiety can be considered to be present in the system. Note that, in the present invention, if both a portion that can functions as a hydrogen acceptor (for example, a carbonyl group or the like) and a portion that can functions as a hydrogen donor (for example, a hydroxy group or the like) are present in side chains of polymer molecules (more preferably elastomer molecules), the portion that can functions as a hydrogen acceptor and the portion that can functions as a donor of the side chains are considered to be hydrogen-bond cross-linkable moieties.

The hydrogen-bond cross-linkable moiety in such a side chain (a') is more preferably the side chain (a) described later from the viewpoints of the formation of a stronger hydrogen bond and the like. Moreover, from the same viewpoints, the hydrogen-bond cross-linkable moiety in the side chain a') is more preferably a hydrogen-bond cross-linkable moiety having a carbonyl-containing group and a nitrogen-containing heterocycle.

<Side Chain (a): Side Chain Containing Hydrogen-bond cross-linkable moiety Having Carbonyl-Containing Group and/or Nitrogen-Containing Heterocycle>

The side chain (a) containing a hydrogen-bond cross-linkable moiety having a carbonyl-containing group and/or a nitrogen-containing heterocycle may be any, as long as the side chain (a) has a carbonyl-containing group and/or a nitrogen-containing heterocycle, and the other aspect of the structure are not particularly limited. The hydrogen-bond cross-linkable moiety more preferably has a carbonyl-containing group and a nitrogen-containing heterocycle.

The carbonyl-containing group is not particularly limited, as long as the group contains a carbonyl group. Specific examples thereof include amide, ester, imide, carboxy group, carbonyl group, and the like. The carbonyl-containing group may be a group introduced to the main chain (the polymer of the main chain portion) by using a compound capable of introducing a carbonyl-containing group to a main chain. The compound capable of introducing a carbonyl-containing group to a main chain is not particularly limited, and specific examples thereof include ketones, carboxylic acids, derivatives thereof, and the like. Note that, as compounds capable of introducing carbonyl-containing groups into the main chain such as carboxylic acids and derivatives thereof, it is possible to appropriately use known ones (for example, those described in paragraphs [0051] to [0053] of JP 5918878 B). In addition, the compounds capable of introducing such a carbonyl group (carbonyl-containing group) are preferably cyclic acid anhydrides such as succinic anhydride, maleic anhydride, glutaric anhydride, and phthalic anhydride, and particularly preferably maleic anhydride.

In addition, when the side chain (a) has a nitrogen-containing heterocycle, the structure or the like of the nitrogen-containing heterocycle is not particularly limited, as long as the nitrogen-containing heterocycle is introduced to the main chain directly or through an organic group. It is also possible to use, as the nitrogen-containing heterocycle, one containing a heteroatom other than a nitrogen atom, such as a sulfur atom, an oxygen atom, or a phosphorus atom, in the heterocycle, as long as a nitrogen atom is contained in the heterocycle. Here, the use of the nitrogen-containing heterocycle in the side chain (a) is preferable because the presence of the heterocycle structure results in a stronger hydrogen bond forming the cross-linkage, so that the obtained rubber composition of the present invention has an improved tensile strength. Note that, as such a nitrogen-containing heterocycle, it is possible to appropriately use known ones (for example, those described in paragraphs [0054] to [0067] of JP 5918878 B). Note that such a nitrogen-containing heterocycle may have a substituent.

The nitrogen-containing heterocycle is preferably at least one selected from a triazole ring, an isocyanurate ring, a thiadiazole ring, a pyridine ring, an imidazole ring, a triazine ring, and a hydantoin ring each of which may have a substituent, and is preferably at least one selected from a triazole ring, a thiadiazole ring, a pyridine ring, an imidazole ring, and a hydantoin ring each of which may have a substituent, because of excellence in recyclability, compression set, hardness, and mechanical strengths, especially, tensile strength. Examples of the substituent that such a nitrogen-containing heterocycle may have include a hydroxyl group, a thiol group, an amino group, a carboxy group, an isocyanate group, an epoxy group, and an alkoxysilyl group.

In addition, when the side chain (a) contains both the above-described carbonyl-containing group and the above-described nitrogen-containing heterocycle, the above-described carbonyl-containing group and the above-described nitrogen-containing heterocycle may be introduced to the main chain as side chains independent from each other, and are preferably introduced to the main chain as a single side chain in which the above-described carbonyl-containing group and the above-described nitrogen-containing heterocycle are linked to each other through another group. Such a structure of the side chain (a) may be, for example, a structure described in paragraphs [0068] to [0081] of JP 5918878 B.

In addition, the side chain (a) is preferably a side chain (a) introduced as a side chain of a polymer by using, as a polymer (polymer-forming material (more preferably elastomeric polymer-forming material)) which forms the main chain after reaction, a polymer (polymer having a cyclic acid anhydride group in a side chain (more preferably an elastomeric polymer having a cyclic acid anhydride group in a side chain)) having a cyclic acid anhydride group (more preferably a maleic anhydride group) as a functional group, and reacting the functional group (cyclic acid anhydride

group) with a compound (a compound capable of introducing a nitrogen-containing heterocycle) that forms a hydrogen-bond cross-linkable moiety upon a reaction with the cyclic acid anhydride group, to form a hydrogen-bond cross-linkable moiety. Such a compound forming a hydrogen-bond cross-linkable moiety (compound capable of introducing a nitrogen-containing heterocycle) may be one of the above nitrogen-containing heterocycles itself, or may be a nitrogen-containing heterocycle having a substituent (for example, a hydroxy group, a thiol group, an amino group, or the like) that reacts with a cyclic acid anhydride group such as maleic anhydride.

<Side Chain (b): Side Chain Containing Covalent-Bond Cross-Linking Moiety>

In the present description, the "side chain (b) containing a covalent-bond cross-linking moiety" means that a covalent-bond cross-linking moiety (a functional group or the like capable of forming at least one bond selected from the group consisting of amide, ester, lactone, urethane, ether, thiourethane, and thioether upon a reaction with "a compound that forms a covalent bond " such as an amino group-containing compound described later) is chemically stably bonded (covalently bonded) to an atom (generally, a carbon atom) forming the main chain of a polymer (more preferably an elastomeric polymer). Here, the side chain (b) is one containing a covalent-bond cross-linking moiety. Note that when the side chain (b) further has a group capable of forming a hydrogen bond to form a cross-linkage by a hydrogen bond between side chains, while having the covalent-bonding moiety, such a side chain (b) is used as a side chain (c) described later (note that, when both a hydrogen donor and a hydrogen acceptor, which allow the formation of a hydrogen bond between side chains of the polymer (preferably the elastomer), are not contained, for example, when only a side chain simply containing an ester group (-COO-) is present in the system, such a group does not function as the hydrogen-bond cross-linkable moiety, because two ester groups (-COO-) do not form a hydrogen bond. Meanwhile, for example, when each side chain of the polymer (preferably the elastomer) contains a structure having both a moiety serving as a hydrogen donor and a moiety serving as a hydrogen acceptor in a hydrogen bond, such as a carboxy group or a triazole ring, a hydrogen bond is formed between the side chains of the polymer (preferably the elastomer), and hence a hydrogen-bond cross-linkable moiety is considered to be contained. In addition, for example, when an ester group and a hydroxy group are coexistent in side chains of a polymer (preferably an elastomer), and these groups form a hydrogen bond between the side chains, the moiety forming the hydrogen bond serves as a hydrogen-bond cross-linkable moiety. For this reason, the side chain (b) may be used as the side chain (c) in some cases depending on the structure of the side chain (b) itself, the structure of the side chain (b) and the type of the substituent of another side chain, or the like). In addition, the "covalent-bond cross-linking moiety" mentioned here is a moiety which cross-links polymer molecules (preferably elastomer molecules) to each other by a covalent bond.

The side chain (b) containing a covalent-bond cross-linking moiety is not particularly limited, and is preferably, for example, one containing a covalent-bond cross-linking moiety formed by a reaction of a polymer having a functional group in a side chain (the polymer for forming a main chain portion (note that such a polymer having a functional group in the side chain is preferably an elastomeric polymer having a functional group in the side chain)) with a compound that forms a covalent-bond cross-linking moiety upon a reaction with the functional group (a compound that forms a covalent bond). The cross-linkage at the covalent-bond cross-linking moiety of the side chain (b) is preferably formed by at least one bond selected from the group consisting of amide, ester, lactone, urethane, ether, thiourethane, and thioether. For this reason, the functional group of the polymer for forming the main chain portion (hereinafter sometimes referred to as the "polymer constituting the main chain") is preferably a functional group capable of forming at least one bond selected from the group consisting of amide, ester, lactone, urethane, ether, thiourethane, and thioether.

Examples of the "compound that forms a covalent-bond cross-linking moiety (the compound that forms a covalent bond)" include polyamine compounds having two or more amino and/or imino groups in one molecule (when both amino and imino groups are present, the total number of these groups is two or more) ; polyol compounds having two or more hydroxy groups in one molecule; polyisocyanate compounds having two or more isocyanate (NCO) groups in one molecule; polythiol compounds having two or more thiol groups (mercapto groups) in one molecule; and the like. The "compound that forms a covalent-bond cross-linking moiety (the compound that forms a covalent bond)" herein can be a compound capable of introducing both the hydrogen-bond cross-linkable moiety and the covalent-bond cross-linking moiety depending on the type of the substituent contained in the compound, the degree of the progress of a reaction in a case where the reaction is carried out by using such compound, or the like (for example, when a covalent bond cross-linking moiety is formed by using a compound having three or more hydroxy groups, two of the hydroxy groups react with a functional group of a polymer having the functional group in side chains (more preferably an elastomeric polymer having the functional group in side chains), and the remaining one hydroxy group is left as a hydroxy group in some cases depending on the degree of the progress of the reaction, and in this case, a moiety that can form a hydrogen-bond cross-linking can also be introduced). For this reason, "compounds that each form a covalent-bond cross-linking moiety (compounds that each forms a covalent bond)" listed as examples herein also include "compounds that each form both a hydrogen-bond cross-linkable moiety and a covalent-bond cross-linking moiety." From such a viewpoint, in the case of forming the side chain (b), the side chain (b) may be formed by selecting a compound from the "compounds

that each form a covalent-bond cross-linking moiety (compounds that each form a covalent bond)" according to a target design, as appropriate, controlling the degree of the progress of the reaction, as appropriate, or doing the like. Note that when the compound that forms a covalent-bond cross-linking moiety has a heterocycle, it is possible to also simultaneously produce a hydrogen-bond cross-linkable moiety more efficiently, and it is possible to efficiently form a side chain having a covalent-bond cross-linking moiety as the side chain (c) described later. For this reason, specific examples of such compounds each having a heterocycle are described especially together with the side chain (c) as preferred compounds for producing the side chain (c). Note that because of its structure, the side chain (c) can also be regarded as a preferred mode of side chains such as the side chain (a) and the side chain (b) .

As the polyamine compounds, the polyol compounds, the polyisocyanate compounds, and the polythiol compounds usable as the "compound that forms a covalent-bond cross-linking moiety (the compound that forms a covalent bond), " it is possible to appropriately use known ones (for example, those described in paragraphs [0094] to [0106] of JP 5918878 B).

In addition, such a "compound that forms a covalent-bond cross-linking moiety (compound that forms a covalent bond)" is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine) .

A functional group which is contained in the polymer constituting the main chain, and which reacts with the "compound that forms a covalent-bond cross-linking moiety (compound that forms a covalent bond)" is preferably a functional group which can create (generate: form) at least one bond selected from the group consisting of amide, ester, lactone, urethane, thiourethane, and thioether. Preferred examples of such functional group include cyclic acid anhydride groups, hydroxy groups, amino groups, carboxy groups, isocyanate groups, thiol groups, and the like.

<Side Chain (c) : Side Chain Containing Both Hydrogen-bond cross-linkable moiety and Covalent-Bond Cross-Linking Moiety>

The side chain (c) contains both a hydrogen-bond cross-linkable moiety and a covalent-bond cross-linking moiety in a single side chain. The hydrogen-bond cross-linkable moiety contained in the side chain (c) is the same as the hydrogen-bond cross-linkable moiety described for the side chain (a'), and preferred ones thereof are the same as those for the hydrogen-bond cross-linkable moiety in the side chain (a) . In addition, as the covalent-bond cross-linking moiety contained in the side chain (c), the same covalent-bond cross-linking moiety as that in the side chain (b) can be used (the same cross-linkages can be used as preferred cross-linkage thereof).

The side chain (c) is preferably one formed by a reaction of a polymer having a functional group in a side chain (the polymer for forming a main chain portion: more preferably an elastomeric polymer having a functional group in a side chain) with a compound that forms both a hydrogen-bond cross-linkable moiety and a covalent-bond cross-linking moiety upon a reaction with the functional group (a compound that introduces both a hydrogen-bond cross-linkable moiety and a covalent-bond cross-linking moiety).

The compound that forms both a hydrogen-bond cross-linkable moiety and a covalent-bond cross-linking moiety (compound that introduces both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (a compound that forms a covalent bond), and, especially, the compound is more preferably a heterocycle-containing polyol, a heterocycle-containing polyamine, a heterocycle-containing polythiol, or the like. Note that, as the heterocycle-containing polyols, polyamines, and polythiols, it is possible to use, as appropriate, the same ones as the polyol compounds, the polyamine compounds, and the polythiol compounds described for the above-described "compound capable of forming a covalent-bond cross-linking moiety (compound that forms a covalent bond)," except that a heterocycle (particularly preferably a nitrogen-containing heterocycle) is present. In addition, as polyols, polyamines, and polythiols containing a heterocycle, it is possible to appropriately use known ones (for example, those described in paragraph

**[0053]** of JP 5918878 B). Note that the functional group of the polymer constituting a main chain that reacts with the "compound that forms both a hydrogen-bond cross-linkable moiety and a covalent-bond cross-linking moiety (the compound that introduces both a hydrogen-bond cross-linkable moiety and a covalent-bond cross-linking moiety)" is preferably a functional group which can create (generate: form) at least one bond selected from the group consisting of amide, ester, lactone, urethane, thiourethane, and thioether. Preferred examples of such a functional group include a cyclic acid anhydride group, a hydroxy group, an amino group, a carboxy group, an isocyanate group, a thiol group, and the like.

(Regarding Structures Preferred as Covalent-Bond Cross-Linking Moieties in Side Chains (b) and (c))

Regarding the side chains (b) and/or (c), suppose a case where the cross-linkage at the covalent-bond cross-linking moiety contains a tertiary amino bond (-N=) or an ester bond (-COO-), and the binding site of such a bond also functions as a hydrogen-bond cross-linkable moiety. Such a case is preferable because the compression set and the mechanical strengths (elongation at break and strength at break) of the obtained rubber composition are improved to higher levels. When a tertiary amino bond (-N=) or an ester bond (-COO-) in a side chain having a covalent-bond cross-linking moiety forms a hydrogen bond with another side chain as described above, the covalent-bond cross-linking moiety containing a tertiary amino bond (-N=) or an ester bond (-COO-) also comprises a hydrogen-bond cross-linkable moiety, and can function as the side chain (c).

Preferred examples of the compound that can form a covalent-bond cross-linking moiety containing the tertiary amino bond and/or the ester bond upon a reaction with a functional group of the polymer constituting a main chain (compound capable of forming both a hydrogen-bond cross-linkable moiety and a covalent-bond cross-linking moiety) include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine) .

The above-described cross-linkage at the covalent-bond cross-linking moiety in the side chain (b) and/or the side chain (c) is preferably one containing at least one structure represented by any one of the following general formulae (1) to (3), and is more preferably one in which G in the formulae contains a tertiary amino bond or an ester bond (note that when a structure shown below contains a hydrogen-bond cross-linkable moiety, the side chain having the structure is used as a side chain (c)).

[Chem. 1]

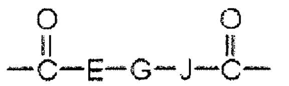
(1)

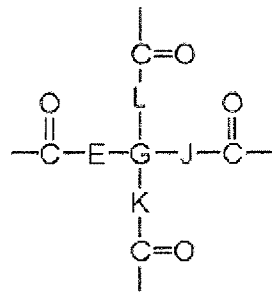
(3)

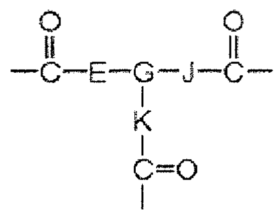
(2)

In the above-described general formulae (1) to (3), E, J, K, and L are each independently a single bond; an oxygen atom, an amino group NR' (where R' is a hydrogen atom or an alkyl group having 1 to 10 carbon atoms), or a sulfur atom; or an organic group optionally containing any of the atoms or groups, and G is a linear-chain, branched-chain, or cyclic hydrocarbon group having 1 to 20 carbon atoms and optionally containing an oxygen atom, a sulfur atom, or a nitrogen atom.

The substituent G is preferably the groups represented by the following general formulae (111) to (114), and more preferably the group represented by the following general formula (111) and the group represented by the following general formula (112) from the viewpoints of achieving high heat resistance and high strength thanks to hydrogen bonds.

[Chem. 2]

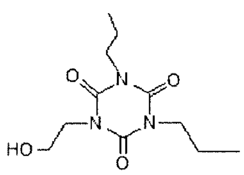
(111)

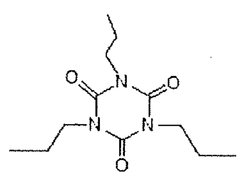
(112)

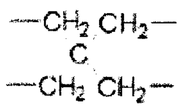
(113)

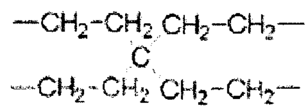
(114)

In addition, a cross-linkage at the above-described covalent-bond cross-linking moiety in each of the side chains (b) and (c) is preferably formed by a reaction of a cyclic acid anhydride group with a hydroxy group or an amino group and/or an imino group. For example, when a polymer forming a main chain portion after the reaction has a cyclic acid anhydride group (for example, a maleic anhydride group) as a functional group, the cross-linkage may be formed by a reaction of the cyclic acid anhydride group of the polymer with the compound that forms a covalent-bond cross-linking moiety having a hydroxy group or an amino group and/or an imino group (compound that forms a covalent bond), to form a moiety cross-linked by the covalent bond, thereby cross-linking polymer molecules.

In addition, the cross-linkage at the covalent-bond cross-linking moiety of each of the side chains (b) and (c) is more preferably formed by at least one bond selected from the group consisting of amide, ester, lactone, urethane, ether, thiourethane, and thioether.

Hereinabove, the side chain a') , the side chain (a), the side chain (b), and the side chain (c) are described. The groups (structures) and the like of the side chains in the polymers can be identified by ordinarily used analytic techniques such as NMR and IR spectrometry.

In addition, the polymer (A) (preferably the elastomeric polymer (A)) is a polymer having the side chain (a) and having a glass-transition point of 25°C or below (more preferably an elastomeric polymer having the side chain (a) and having a glass-transition point of 25°C or below), whereas the polymer (B) (preferably the elastomeric polymer (B)) is a polymer containing a hydrogen-bond cross-linkable moiety and a covalent-bond cross-linking moiety in a side chain and having a glass-transition point of 25°C or below (more preferably an elastomeric polymer containing a hydrogen-bond cross-linkable moiety and a covalent-bond cross-linking moiety in a side chain and having a glass-transition point of 25°C or below (a polymer having both the side chain (a') and the side chain (b) as side chains, or a polymer containing at least one side chain (c) in a side chain, or the like)). As the polymer component (more preferably the elastomer component), one of the polymers (A) and (B)

(more preferably the elastomeric polymers (A) and (B)) may be used alone, or a mixture of two or more thereof may be used.

Note that the polymer (B) (more preferably the elastomeric polymer (B)) may be either a polymer having both a side chain a') and a side chain (b), or a polymer having a side chain (c). From the viewpoint that a stronger hydrogen bond is formed, the hydrogen-bond cross-linkable moiety contained in the side chain of the polymer (B) (more preferably the elastomeric polymer (B)) is preferably a hydrogen-bond cross-linkable moiety having a carbonyl-containing group and/or a nitrogen-containing heterocycle (more preferably a hydrogen-bond cross-linkable moiety having a carbonyl-containing group and a nitrogen-containing heterocycle). In addition, the cross-link in the covalent-bond cross-linking moiety contained in the side chain of the polymer (B) (more preferably the elastomeric polymer (B)) is preferably formed by at least one bond selected from the group consisting of amide, ester, lactone, urethane, ether, thiourethane, and thioether from the viewpoint that it is possible to cause intermolecular interactions such as hydrogen bond between side chains containing the cross-linking moiety.

The method for producing such polymers (A) and (B) (more preferably the elastomeric polymers (A) and (B)) is not particularly limited, and it is possible to appropriately employ known methods (for example, the methods described in JP 5918878 B (methods described in paragraphs [0139] to [0140]). In addition, as a method for producing the polymers (A) and (B) (more preferably the elastomeric polymers (A) and (B)), it is possible to employ, for example, a method in which a polymer having a functional group (for example, a cyclic acid anhydride group or the like) in a side chain (more preferably an elastomeric polymer having a functional group (for example, a cyclic acid anhydride group or the like) in a side chain) is used, and the polymer (more preferably the elastomeric polymer) is reacted with at least one raw material compound of a compound that forms a hydrogen-bond cross-linkable moiety upon a reaction with the functional group, and a mixed raw material of a compound that forms a hydrogen-bond cross-linkable moiety upon a reaction with the functional group and a compound that forms a covalent-bond cross-linking moiety upon a reaction with the functional group, to produce a polymer having the side chain (a) (more preferably an elastomeric polymer having the side chain (a)) ; a polymer having the side chain a') with the side chain (b) (more preferably an elastomeric polymer having the side chain (a') with the side chain (b)); and/or a polymer having the side chain (c) (more preferably an elastomeric polymer having the side chain (c)) (more preferably a method for producing the elastomeric polymers (A) and (B)). Note that conditions (temperature condition, atmosphere conditions, or the like) employed for the reaction are not particularly limited, and may be set, as appropriate, according to the types of the functional group and the compound to be reacted with the functional group (compound that forms a hydrogen-bond cross-linkable moiety and/or a compound that forms a covalent-bond cross-linking moiety). Note that the polymer (A) (more preferably the elastomeric polymer (A)) may also be produced by polymerization of a monomer having a hydrogen bonding moiety.

The polymer having such a functional group (for example, a cyclic acid anhydride group) in a side chain (more preferably an elastomeric polymer having such a functional group (for example, a cyclic acid anhydride group) in a side chain) is preferably a polymer that can form a main chain of the above-described polymers (A) and (B) (more preferably

a polymer that can form a main chain of the above-described elastomeric polymers (A) and (B)) and having a functional group in a side chain. Here, the "polymer having a functional group in a side chain" refers to a polymer having a functional group (the above-described functional group or the like, for example, a cyclic acid anhydride group or the like) chemically stably bonded (covalently bonded) to an atom forming a main chain, and it is possible to preferably use one obtained by a reaction of a polymer (for example, a known natural polymer or synthetic polymer) with a compound capable of introducing a functional group. In addition, the "elastomeric polymer having a functional group in a side chain" suitable as such a polymer having a functional group in a side chain refers to an elastomeric polymer having a functional group (the above-described functional group or the like, for example, a cyclic acid anhydride group or the like) chemically stably bonded (covalently bonded) to an atom forming a main chain, and it is possible to preferably use one obtained by a reaction of an elastomeric polymer (for example, a known natural polymer or synthetic polymer) with a compound capable of introducing a functional group.

In addition, the functional group is preferably a functional group capable of forming at least one bond selected from the group consisting of amide, ester, lactone, urethane, ether, thiourethane, and thioether, among which a cyclic acid anhydride group, a hydroxy group, an amino group, a carboxy group, an isocyanate group, a thiol group, or the like is preferable. The functional group is particularly preferably a cyclic acid anhydride group, from the viewpoint that the clay can be dispersed more efficiently in the composition. In addition, the cyclic acid anhydride group is preferably a succinic anhydride group, a maleic anhydride group, a glutaric anhydride group, or a phthalic anhydride group. Especially, a maleic anhydride group is more preferable, from the viewpoint that it can be easily introduced to a side chain of a polymer and can be easily obtained industrially. In addition, when the functional group is a cyclic acid anhydride group, the functional group may be introduced to the polymer (for example, a known natural polymer or synthetic polymer: note that such a polymer is preferably an elastomeric polymer) by using, for example, a cyclic acid anhydride such as succinic anhydride, maleic anhydride, glutaric anhydride, phthalic anhydride, and an derivative thereof, as a compound enabling the introduction of the functional group.

In addition, from the viewpoint of being readily available industrially and having a high balance of mechanical strength and resistance to compression set, at least one polymer component selected from the group consisting of the polymers (A) and (B) (more preferably at least one elastomer component selected from the group consisting of the elastomeric polymers (A) and (B)) is preferably at least one selected from the group consisting of reaction products of a polymer having a cyclic acid anhydride group in a side chain (more preferably an elastomeric polymer having a cyclic acid anhydride group in a side chain, and further preferably a maleic anhydride-modified elastomeric polymer); and at least one compound (hereinafter, simply referred to as "compound (X)" in some cases) among triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(2-hydroxyethyl) isocyanurates, 2,4-diamino-6-phenyl-1,3,5-triazine, pentaerythritol, sulfamides, and polyether polyols. As described above, the polymers (A) and (B) (more preferably the elastomeric polymers (A) and (B)) are more preferably reaction products of the polymer having a cyclic acid anhydride group in a side chain (more preferably an elastomeric polymer having a cyclic acid anhydride group in a side chain, and further preferably a maleic anhydride-modified elastomeric polymer) with the compound (X). Note that, from the viewpoint that it is possible to produce a hydrogen-bond cross-linkable moiety simultaneously with the production of a covalent-bond cross-linking moiety, the compound (X) is more preferably pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(2-hydroxyethyl) isocyanurates, 2,4-diamino-6-phenyl-1,3,5-triazine, pentaerythritol, sulfamides, and polyether polyols.

Note that the present inventors speculate that, when a polymer component containing a covalent-bond cross-linking moiety in a side chain (more preferably an elastomer component containing a covalent-bond cross-linking moiety in a side chain) is contained (for example, when the polymer (B) (more preferably the elastomeric polymer (B)) is contained), the side chains containing the covalent-bond cross-linking moieties make it possible to express a higher level of resistance to compression set. Moreover, when the hydrogen-bond cross-linkable moiety and the covalent-bond cross-linking moiety are present in the polymer component (more preferably the elastomer component) (such as cases where: the polymer (B) (more preferably the elastomeric polymer (B)) is contained, a mixture of the polymer (B) (more preferably the elastomeric polymer (B)) with another polymer (more preferably another elastomeric polymer) is contained;

a mixture of the polymer (A) (more preferably the elastomeric polymer (A)) and the polymer (B) (more preferably the elastomeric polymer (B)) is contained; and a mixture of the polymer (A) (more preferably the elastomeric polymer (A)) with a polymer containing the side chain (b) other than the polymer (B) (more preferably an elastomeric polymer containing the side chain (b) other than the elastomeric polymer (B)) is used), the presence of the hydrogen-bond cross-linkable moiety and the covalent-bond cross-linking moiety enables the obtained composition to simultaneously express a higher level of mechanical strength attributed to covalent bonds during use and a higher level of flowability (formability) attributed to cleavage of hydrogen bonds during heating. The present inventors speculate that, by taking advantage of the above, properties required depending on an application can be exhibited, as appropriate, by changing, as appropriate, the constitution according to the type of a side chain. Note that, the above-described polymer having a side chain (b) other than the polymer (B) (more preferably the above-described elastomeric polymer having a side chain (b) other than the elastomeric polymer (B)) can be obtained by a method in which a polymer having a functional group (for example, cyclic acid anhydride group) in a side chain (more preferably an elastomeric polymer having a functional group (for example, cyclic acid anhydride group) in a side chain) is used, and the polymer (more preferably the elastomeric polymer) is reacted with a compound that forms a covalent-bond cross-linking moiety upon a reaction with the functional group (compound that forms a covalent bond) to produce the polymer having the side chain (b) (more preferably the elastomeric polymer having the side chain (b)) . Note that, also in this case, the above-described "compound that forms a covalent-bond cross-linking moiety (compound that forms a covalent bond) " can be used as the compound that forms a covalent-bond cross-linking moiety (compound that forms a covalent bond).

As described above, properties depending on an application can be also imparted to the obtained composition, as appropriate, according to a type of the polymer component (more preferably elastomer component) used. For example, when the polymer (A) is used as the polymer component (more preferably, when the elastomeric polymer (A) is used as an elastomer component suitable as the polymer component), the properties stemming from the side chain (a) can be imparted to the composition to a larger degree, and therefore the elongation at break, tensile strength at break, and flowability, in particular, can be improved. Meanwhile, when the polymer (B) is used as the polymer component (more preferably, when the elastomeric polymer (B) is used as an elastomer component suitable as the polymer component), the properties stemming from the covalent-bond cross-linking moiety in the side chain can be imparted to the composition to a larger degree, and therefore the resistance to compression set, in particular, can be improved. Note that, when the polymer (B) is contained as the polymer component (more preferably, when the elastomeric polymer (B) is contained as an elastomer component suitable as the polymer component), not only the properties stemming from the covalent-bond cross-linking moiety but also the properties stemming from the hydrogen-bond cross-linkable moiety (the hydrogen-bond cross-linkable moiety described for the side chain (a')) can be imparted to the composition, and therefore it is also possible to more improve the resistance to compression set while maintaining the flowability (formability). Thus, it is possible to even more efficiently exhibit properties desired for an application by changing the type of the side chain, the type of the polymer (B), and so on, as appropriate.

In addition, when the polymers (A) and (B) are contained as the polymer component (when the elastomeric polymers (A) and (B) are contained as the elastomer component in the case where the polymer component is the elastomer component), the content ratio of the polymer (A) to the polymer (B) (when the polymer component is the elastomer component, the content ratio of the elastomeric polymer (A) to the elastomeric polymer (B)) is preferably 1:9 to 9:1, and more preferably 2:8 to 8:2 in terms of the mass ratio ([polymer (A)] : [polymer (B)]). If the content ratio of the polymer (A) is less than the lower limit, the flowability (formability) and the mechanical strength tend to be insufficient. Meanwhile, if the content ratio of the polymer (A) exceeds the upper limit, the resistance to compression set tends to decrease.

In addition, derived from a polymer component (preferably an elastomer component), when both the side chain (a') and the side chain (b) are present in the rubber composition (preferably the diene-based rubber composition), the total amount of the side chain (a') and the total amount of the side chain (b) are preferably 1:9 to 9:1, and more preferably 2:8 to 8:2 based on the mass ratio. If the total amount of the side chain (a') is less than the lower limit, the flowability (formability) and the mechanical strength tend to be insufficient. Meanwhile, if the total amount of the side chain (a') exceeds the upper limit, the resistance to compression set tends to decrease. Note that such a side chain (a') is a concept including the side chain (a). For this reason, also when only the side chain (a) is contained as the side chain (a'), it is preferable that both the side chain (a) and the side chain (b) be present in the composition at the above-described mass ratio.

(Clay)

The clay according to the present invention is not particularly limited, and it is possible to appropriately use known clays (for example, those described in paragraph [0146] to paragraph [0156] of JP 5918878 B). Among such clays, at least one selected from the group consisting of clays mainly containing silicon and magnesium as main components and organically modified clays is preferable from the viewpoint of high dispersibility. The clay is particularly

preferably an organically modified clay because a higher level of tensile stress (modulus) can be obtained.

In addition, the organically modified clay is preferably, but not particularly limited to, one formed by organically modifying a clay with an organically modifying agent. In addition, the organically modifying agent is not particularly limited, and it is possible to appropriately use a known organically modifying agent capable of organically modifying clay (for example, those described in paragraph [0152] of JP 5918878 B). In addition, from the viewpoint of single-layer dispersibility, a quaternary ammonium salt of a clay can be used preferably as the organically modified clay. Examples of the quaternary ammonium salt of the organically modified clay which can be preferably used include, but are not particularly limited to, trimethylstearylammonium salts, salts of oleylbis(2-hydroxylethyl), methylammonium salts, dimethylstearylbenzylammonium salts, dimethyloctadecylammonium salts, and mixtures of two or more thereof. Note that as the quaternary ammonium salt of an organically modified clay, a dimethylstearylbenzylammonium salt, a dimethyloctadecylammonium salt, or a mixture thereof can be used more preferably, and a mixture of a dimethylstearylbenzylammonium salt and a dimethyloctadecylammonium salt can be used further preferably, from the viewpoint of improvement in tensile strength and heat resistance.

(Composition)

The rubber composition of the present invention contains the rubber having no hydrogen-bond cross-linkable moiety (more preferably a diene-based rubber), the polymer component (more preferably an elastomer component), and the clay.

In such a rubber composition (more preferably a diene-based rubber composition), the content (content ratio) of the polymer component (more preferably the elastomer component) is 0.01 to 300 parts by mass with relative to 100 parts by mass of the rubber having no hydrogen-bond cross-linkable moiety (more preferably the diene-based rubber). If the content of such a polymer component (more preferably an elastomer component) is less than the lower limit, the content is too little and thus it is impossible to fully express the effects acquired when a polymer component (for example, an elastomer component) is contained. Meanwhile, if the content exceeds the upper limit, the proportion of the rubber having no hydrogen-bond cross-linkable moiety (for example, a diene-based rubber) is too small, so that when a cross-linked rubber composition is produced by cross-linking, the cross-linking density is lowered and the rubber physical properties of the cross-linked rubber composition are lowered. In addition, from the same viewpoint, the content (content ratio) of the polymer component (more preferably the elastomer component) in the rubber composition (more preferably the diene-based rubber composition) is more preferably 0.05 to 200 parts by mass, and further preferably 0.1 to 100 parts by mass relative to 100 parts by mass of the rubber having no hydrogen-bond cross-linkable moiety (more preferably, the diene-based rubber).

In addition, in such a rubber composition (more preferably a diene-based rubber composition), the content (content ratio) of the clay is 20 parts by mass or less relative to 100 parts by mass of the polymer component (100 parts by mass of the elastomer component when the polymer component is the elastomer component) . If the amount of the clay contained exceeds the upper limit, the tensile properties are lowered. The amount of the clay contained is more preferably 0.01 to 10 parts by mass, further preferably 0.05 to 5 parts by mass, and particularly preferably 0.08 to 3 parts by mass relative to 100 parts by mass of the polymer component (100 parts by mass of the elastomer component when the polymer component is the elastomer component) . If the amount of the clay contained is less than the lower limit, the amount of the clay contained is so small that sufficient effects tend not to be obtained. Meanwhile, if the amount of the clay contained exceeds the upper limit, the cross-linking is so strong that the elongation and the strength tend to decrease rather, making it difficult to use the thermoplastic elastomer composition for various applications (deteriorating the practicability).

Note that the present inventors speculate that, in the rubber composition of the present invention, the polymer component (more preferably the elastomer component) and the clay are in the following state. Specifically, first, as described above, the polymer component (for example, the elastomer component) contains a polymer containing a side chain having at least a hydrogen-bond cross-linkable moiety (a polymer containing at least any of: the side chain (a); the side chain (a') and the side chain (b); and the side chain (c) in a side chain(s); note that the polymer containing a side chain having a hydrogen-bond cross-linkable moiety is preferably an elastomeric polymer containing a side chain having a hydrogen-bond cross-linkable moiety). For this reason, it is speculated that, when such a polymer (more preferably an elastomeric polymer) is used in combination with a clay, interactions between the clay and hydrogen-bond cross-linkable moieties occur (such as the formation of new hydrogen bonds), so that the polymer component (more preferably the elastomer component) undergoes plane cross-linking by utilizing the surface of the clay. Then, it is speculated that the formation of the plane cross-linking makes uniform the cross-linking points by covalent bonds and hydrogen bonds . As described above, the present inventors speculate that the polymer component (more preferably the elastomer component) and the clay are present as components in the composition in a state where the polymer component (more preferably the elastomer component) has undergone plane cross-linking by utilizing the surface of the clay. In addition, in the present invention, the polymer component (for example, the elastomer component) and the clay are contained in

the composition at a specific ratio, and thereby the polymer component (for example, the elastomer component) and the clay undergo plane cross-linking in the composition. Therefore, the present inventors speculate that it is possible to inhibit the free movement of entanglement of the cross-linked product of the rubber having no hydrogen-bond cross-linkable moiety (more preferably the cross-linked product of the diene-based rubber) upon cross-linking of the composition, thereby suppressing energy loss to reduce tanδ (60°C), and it is possible to achieve a sufficiently high balance between the value of tanS (0°C) and the value of tanδ (60°C) after cross-linking.

In addition, unless the object of the present invention is not impaired, the rubber composition of the present invention (more preferably a diene-based rubber composition) may contain components other than the rubber having no hydrogen-bond cross-linkable moiety (for example, the diene-based rubber), the polymer component (for example, the elastomer component), and the clay (hereinafter, such components are referred to as "additives") as necessary. Such additives are not particularly limited as long as they can be used for the rubber composition, and known additives can be appropriately used.

Such additives may be, for example, polymers other than the rubber having no hydrogen-bond cross-linkable moiety (for example, the diene-based rubber) and the polymer component (for example, the elastomer component) (for example, styrene block copolymer having no chemical-bond cross-linking moiety and α-olefin-based resin having no chemical-bond cross-linking moiety), cross-linking agents, reinforcing agents (which may be hydrogen bond reinforcing agents (bulking agents), and bulking agents to which amino groups are introduced (amino group-introduced bulking agents. Note that examples of such reinforcing agents (bulking agents) include silica and carbon black), amino group-containing compounds other than the amino group-introduced bulking agents (one type of the reinforcing agents), compounds containing metal elements (hereinafter, simply referred to as "metal salts"), maleic anhydride-modified polymers, anti-aging agents, antioxidants, pigments (dyes), plasticizers (softening agents), thioxotropy-imparting agents, ultraviolet absorbers, flame retardants, solvents, surfactants (including leveling agents), various oils (for example, process oils (aromatic oils (aromatic group-based oils), paraffinic oils, naphthenic oils, and the like)), dispersing agents, dehydrating agents, corrosion inhibitors, tackiness agents, antistats, fillers, lubricants, and processing aids (vulcanization acceleration aids such as stearic acid and zinc oxide in the case of vulcanization) . Note that such additives and the like are not particularly limited, and it is possible to appropriately use generally used ones (known ones: for example, those described in paragraphs [0169] to [0174] of JP 5918878 B, those exemplified in Japanese Unexamined Patent Application Publication No. 2006-131663, and the like) . Thus, the additives which can be contained in the composition are not particularly limited, and it is possible to appropriately use known additives normally added to rubber, such as slip agents, antioxidants, ultraviolet absorbers, light stabilizers, conductivity enhancers, antistats, dispersing agents, flame retardants, antibacterial agents, neutralizers, softening agents, bulking agents, colorants, and thermally conductive bulking agents.

In addition, the rubber composition of the present invention (more preferably the diene-based rubber composition) preferably further contains at least one bulking agent selected from the group consisting of silica and carbon black. When such a bulking agent composed of silica and/or carbon black is contained, it is possible to further increase the hardness and to further improve the modulus and tensile strength at break.

In addition, when the rubber composition of the present invention (more preferably the diene-based rubber composition) contains at least one bulking agent selected from the group consisting of silica and carbon black, the total amount of silica and carbon black is preferably 10 to 150 parts by mass (more preferably 15 to 120 parts by mass, and further preferably 30 to 100 parts by mass) relative to 100 parts by mass of the rubber having no hydrogen-bond cross-linkable moiety (more preferably the diene-based rubber). If the total amount of the bulking agent composed of silica and/or carbon black is less than the lower limit, the effects (reinforcing effects) obtained by containing the bulking agent tend to be not necessarily sufficient. Meanwhile, if the total amount exceeds the upper limit, the tensile strength at break tends to be lowered.

In addition, such silica is preferably one having a BET specific surface area (in accordance with ASTM D1993-03) of 70 to 200 $m^2/g$ (more preferably 70 to 190 $m^2/g$). Examples of such silica include dry-process silica (for example, fumed silica and the like) produced by a thermal decomposition method or the like for silicon halide or organosilicon compound, and wet-process silica produced by an acid decomposition method or the like for sodium silicate. In addition, such silica is more preferably wet-process silica from the viewpoint of cost and performance. Moreover, as such silica, it is possible to use those marketed as silica for the rubber industry (commercial products) as it is. Such silica may be used alone, or may be used in combination with carbon black.

In addition, when the rubber composition of the present invention (more preferably the diene-based rubber composition) is allowed to contain silica, it is preferable to further contain a silane coupling agent from the viewpoint of further improving the properties required for silica and from the viewpoint of further improving dispersibility in the rubber having no hydrogen-bond cross-linkable moiety (more preferably the diene-based rubber) (silica has poor affinity with rubber polymers, and has a property that the silicas in the rubber form hydrogen bonds through silanol groups to lower the dispersibility of the silica in rubber). In addition, when such a silane coupling agent is contained, the content thereof is preferably about 0.5 to 15 parts by weight relative to 100 parts by weight of silica. Moreover, as such a silane coupling agent, it is possible to appropriately use a polysulfide-based silane coupling agent having an alkoxysilyl group that reacts

with a silanol group on the silica surface and a sulfur chain that reacts with a polymer, such as bis(3-triethoxysilylpropyl) tetrasulfide, bis(2-triethoxysilylethyl) tetrasulfide, bis(3-trimethoxysilylpropyl) tetrasulfide, and bis(3-triethoxysilylpropyl) disulfide. Note that as such a silane coupling agent, it is possible to appropriately use a commercially available product. For example, the trade name "Si-69" manufactured by Evonik Industries AG (former company name: Evonik Degussa) may be used.

In addition, the carbon black is not particularly limited, and it is possible to appropriately use a known carbon black that can be used for the rubber composition. Among such carbon blacks, furnace blacks such as SAF, ISAF, HAF, FEF, GPF, and SRF are preferable from the viewpoint of reinforcement and dispersibility. As such a carbon black, a commercially available product (commercial product) may be used as it is. Note that such a carbon black is an effective component for forming a tread portion of a tire, particularly a cap tread portion. Such a carbon black may be used alone or in combination with silica.

In addition, such a rubber composition (more preferably a diene-based rubber composition) preferably further contains an $\alpha$-olefin-based resin having no chemical-bond cross-linking moiety from the viewpoint of formability (fluidity). The "$\alpha$-olefin-based resin" mentioned here is an $\alpha$-olefin homopolymer or an $\alpha$-olefin copolymer, and the "$\alpha$-olefin" mentioned here is an alkene containing a carbon-carbon double bond at the $\alpha$ position. Examples thereof include ethylene, propylene, 1-butene, 1-pentene, 1-hexene, 1-heptene, 1-octene, 1-nonene, 1-decene, and the like.

In addition, in the present specification, the "chemical-bond cross-linking moiety" means a moiety in which a cross linkage is formed by a chemical bond such as a hydrogen bond, a covalent bond, a chelate formed between a metal ion and a polar functional group, and a bond formed by $\sigma$-$\pi$ interaction in a metal-unsaturated bond (double bond, triple bond). Accordingly, "having no chemical-bond cross-linking moiety" in the present invention means a state where a resin does not contain any moiety forming a cross-linkage by a chemical bond such as the hydrogen bond, the covalent bond, the chelate formed between a metal ion and a polar functional group, or the bond formed by $\sigma$-$\pi$ interaction in a metal-unsaturated bond (double bond, triple bond).

As such an $\alpha$-olefin-based resin having no chemical-bond cross-linking moiety, it is possible to appropriately use, for example, those described in paragraphs [0204] to [0214] of Japanese Unexamined Patent Application Publication No. 2017-57322.

In addition, such an $\alpha$-olefin-based resin having no chemical-bond cross-linking moiety is preferably polypropylene, polyethylene, ethylene-propylene copolymer, and ethylene-butene copolymer from the viewpoint of compatibility with the polymer component (more preferably the elastomer component). In addition, among such $\alpha$-olefin-based resins having no chemical-bond cross-linking moiety, it is possible to suitably use $\alpha$-olefin resins having a crystallinity of 10% or more (polypropylene, ethylene-propylene copolymer, ethylene-butene copolymer, polyethylene, polybutene, and the like) . There is no particular limitation on the method for producing such an $\alpha$-olefin-based resin having no chemical-bond cross-linking moiety, and it is possible to appropriately employ a known method. As such an $\alpha$-olefin resin, a commercially available product may be used. Note that such an $\alpha$-olefin-based resin having no chemical-bond cross-linking moiety may be used alone, or two or more kinds thereof may be used in combination.

In addition, the content ratio of such an $\alpha$-olefin-based resin having no chemical-bond cross-linking moiety can be appropriately changed according to the intended use and design, and is not particularly limited. For example, it is more preferable to use the $\alpha$-olefin-based resin such that its content is 300 parts by mass or less (more preferably 5 to 250 parts by mass, further preferably 10 to 225 parts by mass, particularly preferably 25 to 200 parts by mass, and most preferably 35 to 175 parts by mass) relative to 100 parts by mass of the polymer component (more preferably the elastomer component). If the content is less than the lower limit, sufficient fluidity tends not to be obtained. Meanwhile, if the content exceeds the upper limit, the rubber elasticity decreases and the resin property tends to increase (the hardness is higher than necessary).

In addition, when such a rubber composition (more preferably a diene-based rubber composition) is allowed to contain the $\alpha$-olefin-based resin having no chemical-bond cross-linking moiety, the content ratio of the $\alpha$-olefin-based resin is preferably 0.1 to 100 parts by mass, and more preferably 0.5 to 80 parts by mass relative to 100 parts by mass of the rubber having no hydrogen-bond cross-linkable moiety (more preferably the diene-based rubber). If the content ratio is less than the lower limit, sufficient fluidity tends not to be obtained. Meanwhile, if the content ratio exceeds the upper limit, the rubber elasticity decreases and the resin property tends to increase (the hardness is higher than necessary).

Moreover, such a rubber composition (more preferably a diene-based rubber composition) preferably further contains a styrene block copolymer having no chemical-bond cross-linking moiety. As such a styrene block copolymer having no chemical-bond cross-linking moiety, it is possible to suitably use those described in paragraph [0156] to paragraph [0163] of Japanese Unexamined Patent Application Publication No. 2017-57393. Note that the "styrene block copolymer" may be a polymer having a styrene block structure at any moiety.

Such a styrene block copolymer having no chemical-bond cross-linking moiety is preferably a styrene block copolymer having a styrene content of 10 to 50% by mass (more preferably 20 to 40% by mass) from the viewpoint of mechanical strength and oil absorbability. Also, consider the weight average molecular weight (Mw), number average

molecular weight (Mn), and molecular weight distribution dispersity (Mw/Mn) of the styrene block copolymer. From the viewpoint of mechanical strength and oil absorbability, Mw is preferably 200,000 or more and 700,000 or less, more preferably 300,000 or more and 600,000 or less, and further preferably 350,000 or more and 550,000 or less. Meanwhile, Mn is preferably 100,000 or more and 600,000 or less, more preferably 150,000 or more and 550,000 or less, and further preferably 200,000 or more and 500,000 or less. Furthermore, Mw/Mn is preferably 5 or less, and more preferably 1 to 3. The glass-transition point of such a styrene block copolymer is preferably -80 to -30°C, and more preferably -70 to -40 °C from the viewpoint of elastomeric properties. The methods for measuring such various properties (Mw, Mn, and the like) employed are the methods described in paragraph [0156] to paragraph [0163] of JP 2017-57393 A.

From the viewpoint that the rubber elasticity and thermoplasticity can be both achieved, preferable copolymers as the styrene block copolymer having no chemical-bond cross-linking moiety include a styrene-isoprene-styrene block copolymer (SIS), a styrene-ethylene-propylene-styrene block copolymer (SEPS), styrene-ethylene-ethylene-propylene-styrene block copolymer (SEEPS), a styrene-butadiene-styrene block copolymer (SBS), a styrene-ethylene-butylene-styrene block copolymer (SEBS), a styrene-isoprene-butadiene-styrene block copolymer (SIBS), and products thereof generated by addition of hydrogen (so-called hydrogenated products). Among them, SEBS and SEEPS are more preferable. One of these styrene block copolymers may be used alone, or two or more thereof may be used in combination. As such a styrene block copolymer, a commercially available product can be appropriately used.

When such styrene block copolymers are used, the content ratio is not particularly limited, but is preferably 1 to 5000 parts by mass relative to 100 parts by mass of the polymer component (more preferably the elastomer component) (Note that although the upper limit value of a suitable numerical range of such a content ratio is 5000 parts by mass relative to 100 parts by mass of the polymer component (more preferably the elastomer component), the upper limit value is more preferably 3000 parts by mass, further preferably 1000 parts by mass, and particularly preferably 800 parts by mass. Moreover, although the lower limit value of a suitable numerical range of such a content ratio is 1 part by mass relative to 100 parts by mass of the polymer component (more preferably the elastomer component), the lower limit value is more preferably 5 parts by mass, and further preferably 10 parts by mass). In addition, the content ratio of such a styrene block copolymer is more preferably 1 to 1000 parts by mass, and further preferably 5 to 800 parts by mass relative to 100 parts by mass of the polymer component (more preferably the elastomer component). If the content ratio is less than the lower limit, the oil tends to bleed when the oil is added. Meanwhile, if the content ratio exceeds the upper limit, the formability tends to decrease.

In addition, when such a rubber composition (more preferably a diene-based rubber composition) is allowed to contain the styrene block copolymer having no chemical-bond cross-linking moiety, the content ratio of the styrene block copolymer is preferably 0.1 to 100 parts by mass, and more preferably 0.5 to 80 parts by mass relative to 100 parts by mass of the rubber having no hydrogen-bond cross-linkable moiety (more preferably the diene-based rubber). If the content ratio is less than the lower limit, the oil tends to bleed when the oil is added. Meanwhile, if the content ratio exceeds the upper limit, the formability tends to decrease.

In addition, such a rubber composition (more preferably a diene-based rubber composition) more preferably further contains a process oil (examples of such process oil include paraffin oils (paraffinic oils), naphthene oils (naphthenic oils), and aroma oils (aromatic oils)), and especially, particularly preferably further contains a paraffin oil. In addition, regarding such paraffin oils, naphthene oils, and aroma oils, when the rubber having no hydrogen-bond cross-linkable moiety is a diene-based rubber, it is particularly preferable to use a combination of paraffin oils and/or aroma oils, and when the rubber having no hydrogen-bond cross-linkable moiety is a chloroprene rubber or a butyl rubber, it is particularly preferable to use a combination of naphthenic oils. Such process oils are not particularly limited, it is possible to appropriately use known process oils, and commercially available oils can be used as appropriate. In addition, paraffin oils suitable as such process oils are not particularly limited, and it is possible to appropriately use known paraffin oils. For example, it is possible to suitably use those described in paragraph [0153] to paragraph [0157] of Japanese Unexamined Patent Application Publication No. 2017-57323. Note that, when such a paraffin oil is measured by correlation ring analysis (n-d-M ring analysis) according to ASTM D3238-85 to obtain a percentage of the number of paraffin's carbon atoms to the total number of carbon atoms (paraffin part: CP), a percentage of the number of naphthene's carbon atoms to the total number of carbon atoms (naphthene part: CN), and a percentage of the number of aromatic carbon atoms to the total number of carbon atoms (aromatic part: CA), it is preferable that the paraffin oil have 60% or more as the percentage (CP) of the number of paraffin's carbon atoms to the total number of carbon atoms. In addition, in the paraffin oil, a kinematic viscosity at 40°C measured according to JIS K 2283 (published in 2000) is preferably 10 $mm^2/s$ to 700 $mm^2/s$, more preferably 20 to 600 $mm^2/s$, and further preferably 30 to 500 $mm^2/s$ from the viewpoint of flowability and safety. Further, in the paraffin oil, an aniline point measured by a U-tube method according to JIS K 2256 (published in 2013) is preferably 80°C to 145°C, more preferably 100 to 145°C, and further preferably 105 to 145°C from the viewpoint of flowability and safety. Note that, as methods for measuring these kinematic viscosity and aniline point, it is possible to employ the methods described in paragraph [0153] to paragraph [0157] of JP 2017-57323 A. As such paraffin oils, commercially available ones can be used as appropriate.

When such process oils (more preferably paraffin oils) are used, the content ratio is not particularly limited, but

is preferably 1 to 30000 parts by mass relative to 100 parts by mass of the polymer component (100 parts by mass of the elastomer component when the polymer component is the elastomer component) (Note that although the upper limit value of a suitable numerical range of such a content ratio is 30000 parts by mass relative to 100 mass parts of the polymer component (100 parts by mass of the elastomer component when the polymer component is the elastomer component), the upper limit value is more preferably 25000 parts by mass, further preferably 20000 parts by mass, more preferably 15000 parts by mass, further preferably 10000 parts by mass, more preferably 8000 parts by mass, further preferably 7000 parts by mass, particularly preferably 6000 parts by mass, and most preferably 5000 parts by mass. In addition, although the lower limit value of a suitable numerical range of such a content ratio is 1 part by mass relative to 100 parts by mass of the polymer component (100 parts by mass of the elastomer component when the polymer component is the elastomer component), the lower limit value is more preferably 10 parts by mass, further preferably 30 parts by mass, particularly preferably 50 parts by mass, and most preferably 75 parts by mass). In addition, the content ratio of such process oil (more preferably paraffin oil) is more preferably 10 to 1000 parts by mass, further preferably 30 to 900 parts by mass, particularly preferably 50 to 800 parts by mass, and most preferably 75 to 700 parts by mass relative to 100 parts by mass of the polymer component (more preferably the elastomer component). If the content of such process oil (more preferably paraffin oil) is less than the lower limit, the content of process oil (for example, paraffin oil) is so small that sufficient effects tend not to be obtained particularly in terms of flowability and processability. Meanwhile, if the content exceeds the upper limit, bleeding of the process oil (for example, the paraffin oil) tends to be induced easily.

In addition, when such a rubber composition (more preferably a diene-based rubber composition) is allowed to contain process oil (more preferably paraffin oil), the content ratio of the process oil (more preferably paraffin oil) is preferably 0.1 to 300 parts by mass, and more preferably 0.5 to 200 parts by mass relative to 100 parts by mass of the rubber having no hydrogen-bond cross-linkable moiety (more preferably the diene-based rubber). If the content ratio of such process oil (more preferably paraffin oil) is less than the lower limit, the content ratio of process oil (for example, paraffin oil) is so small that sufficient effects tend not to be obtained particularly in terms of flowability and processability. Meanwhile, if the content ratio exceeds the upper limit, bleeding of the process oil (for example, the paraffin oil) tends to be induced easily.

In addition, such a rubber composition (more preferably a diene-based rubber composition) may further contain a cross-linking agent in order to be used after cross-linking. Such a cross-linking agent is not particularly limited as long as it can cross-link (vulcanize or the like) the rubber having no hydrogen-bond cross-linkable moiety (for example, the diene-based rubber), and known cross-linking agents can be used as appropriate. In addition, as such cross-linking agents, it is possible to suitably use peroxide-based cross-linking agents, phenolic resin-based cross-linking agents, sulfur-based cross-linking agents, and silane-based cross-linking agents.

Such peroxide-based cross-linking agents are not particularly limited, and it is possible to appropriately use cross-linking agents made of known peroxides used as a cross-linking agent for the rubber having no hydrogen-bond cross-linkable moiety (for example, the diene-based rubber). Such peroxide-based cross-linking agents are preferably organic peroxides. In addition, examples of such organic peroxides include dialkyl peroxides such as di-t-butyl peroxide, t-butyl cumyl peroxide, dicumyl peroxide, 2,5-dimethyl-2,5-di(t-butylperoxy)hexane, 2,5-dimethyl-2,5-di(t-butylperoxy) hexyne-3,1,3-bis(t-butylperoxyisopropyl)benzene, and 1,1-di(t-hexylperoxy)-3,3,5-trimethylcyclohexane; peroxyesters such as t-butyl peroxybenzoate, t-butyl peroxyisopropyl monocarbonate, n-butyl-4,4-bis(t-butylperoxy)valerate, 2,5-dimethyl-2,5-di(benzoylperoxy)hexane, and 2,5-dimethyl-2,5-di(benzoylperoxy)hexyne-3; and diacyl peroxides such as diacetyl peroxide, lauroyl peroxide, dibenzoyl peroxide, p-chlorobenzoyl peroxide, and 2,4-dichlorobenzoyl peroxide. Among these, it is possible to preferably use 2,5-dimethyl-2,5-di(t-butylperoxy)hexane and 1,3-bis(t-butylperoxyisopropyl)benzene.

In addition, such organic peroxides preferably have a 1-minute half-life temperature of 140°C to 230°C. Examples of organic peroxides satisfying such conditions include dialkyl peroxides such as di-t-butyl peroxide, t-butyl cumyl peroxide, dicumyl peroxide, 2,5-dimethyl-2,5-di(t-butylperoxy)hexane, 2,5-dimethyl-2,5-di(t-butylperoxy) hexyne-3,1,3-bis(t-butylperoxyisopropyl)benzene, and 1,1-di(t-hexylperoxy)-3,3,5-trimethylcyclohexane; and t-butyl peroxybenzoate, t-butyl peroxyisopropyl monocarbonate, n-butyl-4,4-bis(t-butylperoxy)valerate, 2,5-dimethyl-2,5-di(benzoylperoxy)hexane, and 2,5-dimethyl-2,5-di(benzoylperoxy)hexyne-3.

When an organic peroxide (a type of peroxide-based cross-linking agent) is used as the cross-linking agent, a cross-linking aid may be further blended and used. Examples of such cross-linking aid include divinyl compounds such as divinylbenzene; oxime compounds such as p-quinone dioxime and p,p'-dibenzoylquinone dioxime; nitroso compounds such as N-methyl-N-4-dinitrosoaniline and nitrosobenzene; maleimide compounds such as trimethylolpropane-N,N'-m-phenylenedimaleimide; polyfunctional methacrylate monomers such as ethylene glycol dimethacrylate, diethylene glycol dimethacrylate, polyethylene glycol dimethacrylate, trimethylolpropane trimethacrylate, and allyl methacrylate; polyfunctional vinyl monomers such as vinyl butyrate and vinyl stearate; and moreover sulfur, diphenylguanidine, triallyl cyanurate, zinc dimethacrylate, and zinc diacrylate.

In addition, from the viewpoint of cross-linkability, such peroxide-based cross-linking agents are preferably

benzoyl peroxide, di-t-butyl peroxide, dicumyl peroxide, 3M, P, and 25P, and more preferably dicumyl peroxide.

In addition, the phenolic resin-based cross-linking agents are not particularly limited, and it is possible to appropriately use cross-linking agents made of known phenolic resins used as a cross-linking agent for the rubber having no hydrogen-bond cross-linkable moiety (for example, the diene-based rubber). For example, it is possible to suitably use phenolic resins described in Japanese Patent No. 6000714, US Patent No. 3,287,440, US Patent No. 3,709,840 and US Patent No. 4,311,628.

Examples of such phenolic resin-based cross-linking agents include phenolic resins obtained by condensation of substituted phenols or unsubstituted phenols with aldehydes (preferably formaldehyde) and phenolic resins obtained by condensation of substituted phenols or unsubstituted phenols with bifunctional phenol dialcohols. In addition, such substituted phenols are preferably substituted alkyl groups having 1 to 10 carbon atoms. Moreover, as such phenolic resin-based cross-linking agent, it is also possible to suitably use halogenated phenolic resins.

As such phenolic resin-based cross-linking agents, commercially available phenolic resins can be appropriately selected and used. Examples of commercially available products that can be used as such phenolic resin-based cross-linking agents can include TACKIROL 201 (alkylphenol-formaldehyde resin, manufactured by Taoka Chemical Co., Ltd.), TACKIROL 250-I (brominated alkylphenol-formaldehyde resin with 4% bromination, manufactured by Taoka Chemical Co., Ltd.), TACKIROL 250-III (brominated alkylphenol-formaldehyde resin, manufactured by Taoka Chemical Co., Ltd.), PR-4507 (manufactured by Gunei Chemical Industry Co., Ltd.), Vulkaresat510E (manufactured by Hoechst), Vulkaresat532E (manufactured by Hoechst), Vulkaresen E (manufactured by Hoechst), Vulkaresen 105E (manufactured by Hoechst), Vulkaresen 130E (manufactured by Hoechst), Vulkaresol 315E (manufactured by Hoechst), Amberol ST 137X (manufactured by Rohm & Haas), SUMILITERESIN PR-22193 (manufactured by Sumitomo Durez Co. Ltd.), Symphorm-C-100 (manufactured by Anchor Chem.), Symphorm-C-1001 (manufactured by Anchor Chem.), Tamanol 531 (manufactured by Arakawa Chemical Industries, Ltd.), Schenectady SP1059 (manufactured by Schenectady Chem.), Schenectady SP1045 (manufactured by SchenectadyChem.), CRR-0803 (manufactured by U.C.C), Schenectady SP-1055 (manufactured by Schenectady Chem.), Schenectady SP-1056 (manufactured by Schenectady Chem.), CRM-0803 (Manufactured by Showa Union Synthesis K.K.), and Vulkadur A (manufactured by Bayer). Among these, brominated alkylphenol formaldehyde resins can be preferably used.

In addition, in the case of using a phenolic resin-based cross-linking agent as such a cross-linking agent, it is preferable to use this cross-linking agent with an activator. As such an activator, known ones can be suitably used, and examples used include halogen donors such as stannous chloride, ferric chloride, chlorinated paraffin, chlorinated polyethylene, and chlorosulfonated polyethylene, and acid acceptors such as iron oxide, titanium oxide, magnesium oxide, silicon dioxide, and zinc oxide. When the phenolic resin is halogenated, a halogen donor does not have to be used. Note that, when such a halogen donor is used, the amount of the halogen donor added is preferably 0.01 to 10 parts by mass, and more preferably 0.05 to 5 parts by mass relative to 100 parts by mass of the rubber having no hydrogen-bond cross-linkable moiety (more preferably the diene-based rubber) . In addition, when the acid acceptor is used, the amount of the acid acceptor added is preferably 0.01 to 5 parts by mass, and more preferably 0.05 to 3 parts by mass relative to 100 parts by mass of the rubber having no hydrogen-bond cross-linkable moiety (more preferably the diene-based rubber).

Furthermore, the sulfur-based cross-linking agents are not particularly limited, and it is possible to appropriately use known sulfur-based cross-linking agents used as a cross-linking agent for the rubber having no hydrogen-bond cross-linkable moiety (more preferably a cross-linking agent for a diene-based rubber). Examples of such sulfur cross-linking agents include sulfur-based vulcanizing agents such as powdered sulfur, precipitated sulfur, highly dispersible sulfur, surface treated sulfur, inert sulfur, oil treated sulfur, dimorpholine disulfide, and alkylphenol disulfide, zinc white, magnesium oxide, litharge, p-quinone dioxime, p-dibenzoylquinone dioxime, tetrachloro-p-benzoquinone, poly-p-dinitrosobenzene, and methylene dianiline. From the viewpoint of reactivity, powdered sulfur, precipitated sulfur, highly dispersible sulfur, surface treated sulfur, inert sulfur, and oil treated sulfur are preferable, among which powdered sulfur and oil treated sulfur are more preferable, and oil treated sulfur is further preferable.

Moreover, in the case of using such sulfur-based cross-linking agents, it is preferable to use vulcanization accelerators (thiazole-based (MBT, MBTS, ZnMBT, and the like), sulfenamide-based (CBS, DCBS, BBS, and the like), guanidine-based (DPG, DOTG, OTBG, and the like), thiuram-based (TMTD, TMTM, TBzTD, TETD, TBTD, TOTN (tetrakis (2-ethylhexyl) thiuram disulfide), and the like), dithiocarbamate-based (ZTC, NaBDC, and the like), thiourea-based (ETU and the like), and xanthate-based (ZnBX and the like) vulcanization accelerators). In addition, the vulcanization acceleration aid contained together with the sulfur-based cross-linking agent is preferably zinc oxide (for example, type III zinc oxide) ; fatty acids such as stearic acid, acetyl acid, propionic acid, butanoic acid, acrylic acid, and maleic acid; and zinc fatty acids such as zinc acetylate, zinc propionate, zinc butanoate, zinc stearate, zinc acrylate, and zinc maleate.

In addition, the silane-based cross-linking agents are not particularly limited, and it is possible to appropriately use known silane-based cross-linking agents used as a cross-linking agent for the rubber having no hydrogen-bond cross-linkable moiety (more preferably a cross-linking agent for a diene-based rubber). For example, it is possible to suitably use silane-based cross-linking agents described in Japanese Unexamined Patent Application Publication No.

2016-20450 and the like.

In addition, in the case of using such a silane-based cross-linking agent, a silane compound may be graft copolymerized in order to subject the rubber having no hydrogen-bond cross-linkable moiety (more preferably the diene-based rubber) to silane cross-linking. Such a silane compound is preferably one having both a group which can react with the rubber having no hydrogen-bond cross-linkable moiety (for example, the diene-based rubber), and an alkoxy group which forms a cross-linkage by silanol condensation. Examples of such silane compounds can include vinylsilane compounds such as vinyltrimethoxysilane, vinyltriethoxysilane, and vinyltris(β-methoxyethoxy) silane, aminosilane compounds such as γ-aminopropyl trimethoxysilane, γ-aminopropyl triethoxysilane, N-β-(aminoethyl) γ-aminopropyl trimethoxysilane, β-(aminoethyl) γ-aminopropyl methyldimethoxysilane, and N-phenyl-γ-aminopropyl trimethoxysilane, epoxysilane compounds such as β-(3,4 epoxycyclohexyl) ethyltrimethoxysilane, γ-glycidoxypropyl trimethoxysilane, and γ-glycidoxypropyl methyldiethoxysilane, acrylic silane compounds such as γ-methacryloxypropyltrimethoxysilane, polysulfide silane compounds such as bis (3-(triethoxysilyl) propyl) disulfide and bis(3-(triethoxysilyl) propyl) tetrasulfide, and mercaptosilane compounds such as 3-mercaptopropyl trimethoxysilane and 3-mercaptopropyl triethoxysilane.

Note that, when a silane compound is graft copolymerized with the rubber having no hydrogen-bond cross-linkable moiety (more preferably the diene-based rubber), one may use a known general method, that is, a method in which a predetermined amount of silane compound and free radical generator are mixed with the rubber having no hydrogen-bond cross-linkable moiety (for example, the diene-based rubber) and melt-kneaded at a temperature of 80 to 200°C. Moreover, as such a silane-based cross-linking agent, polysilane is more preferable from the viewpoint of cross-linkability.

Among these cross-linking agents, from the viewpoint of improving the physical properties, sulfur-based cross-linking agents (further preferably, a sulfur-based cross-linking agent and a vulcanization accelerator are used in combination) and peroxide-based cross-linking agents are preferable, and a sulfur-based cross-linking agent (further preferably, a sulfur-based cross-linking agent and a vulcanization accelerator are used in combination) is more preferable. Among these cross-linking agents, peroxide-based cross-linking agents are preferable from the viewpoint of heat aging resistance. As described above, from the viewpoint of heat aging resistance, those having cross-linkage (peroxide cross-linkage) formed by a peroxide-based cross-linking agent after cross-linking are more preferable. Note that in the case of using a combination of a sulfur-based cross-linking agent and a vulcanization accelerator, the combination is not particularly limited, and can be appropriately selected and used in accordance with the type of the rubber having no hydrogen-bond cross-linkable moiety (more preferably the diene-based rubber) . For example, when the type of the rubber having no hydrogen-bond cross-linkable moiety (more preferably the diene-based rubber) has a halogen group such as chloroprene rubber (CR), a so-called metal oxide such as magnesium oxide is used as a cross-linking agent (vulcanizing agent), and may be cross-linked (vulcanized) using a vulcanization accelerator such as ethylenethiourea (2-imidazoline-2-thiol: ETU) in combination. Note that even in the case of a cross-linking agent other than the sulfur-based cross-linking agent, the vulcanization accelerator, the vulcanization acceleration aid, and the like may be used in appropriate combination when forming a cross-linkage.

In addition, the content of such a cross-linking agent is preferably 0.1 to 10 parts by mass (more preferably 0.1 to 5 parts by mass) relative to 100 parts by mass of the rubber having no hydrogen-bond cross-linkable moiety (more preferably the diene-based rubber) . If the content (amount used) of such a cross-linking agent is less than the lower limit, when cross-linked, the cross-linking density is so low that the physical properties tend to be lowered. Meanwhile, if the content exceeds the upper limit, the cross-linking density is so high that the physical properties tend to be lowered.

Moreover, when utilizing an anti-aging agent as an additive, it is possible to suitably use a known one which can be used for rubber compositions. Examples of such an anti-aging agent include hindered phenol-based compounds, aliphatic and aromatic hindered amine-based compounds, quinoline-based compounds, and the like. The content of such an antioxidant is preferably 0.1 to 10 parts by mass (more preferably 1 to 5 parts by mass) relative to 100 parts by mass of the rubber having no hydrogen-bond cross-linkable moiety (more preferably the diene-based rubber).

In addition, in the case of using an antioxidant as an additive, such an antioxidant is not particularly limited, and examples thereof include butylhydroxytoluene (BHT) and butylhydroxyanisole (BHA). In addition, the content of the antioxidant is preferably 0.1 to 10 parts by mass (more preferably 1 to 5 parts by mass) relative to 100 parts by mass of the rubber having no hydrogen-bond cross-linkable moiety (more preferably the diene-based rubber).

Moreover, in the case of using a pigment as an additive, such a pigment is not particularly limited, and examples thereof include inorganic pigments such as titanium dioxide, zinc oxide, ultramarine, red iron oxide, lithopone, lead, cadmium, iron, cobalt, aluminum, hydrochloride, and sulfate, and organic pigments such as azo pigments and copper phthalocyanine pigments. The content is preferably 0.1 to 10 parts by mass, and more preferably 1 to 5 parts by mass relative to 100 parts by mass of the rubber having no hydrogen-bond cross-linkable moiety (more preferably the diene-based rubber).

The rubber composition of the present invention (more preferably the diene-based rubber composition) has been described above. Hereinafter, a method that can be suitably used for producing such a rubber composition (more preferably a diene-based rubber composition) is briefly described.

(Method for Producing Rubber Composition of Present Invention)

The method for producing the rubber composition (for example, the diene-based rubber composition) of the present invention is not particularly limited, and it is possible to employ, for example, a method of production by appropriately employing a method capable of mixing the rubber having no hydrogen-bond cross-linkable moiety (more preferably the diene-based rubber), the polymer component (more preferably the elastomer component), and the clay. Such mixing (kneading) is not particularly limited, and it is possible to appropriately use a known kneader (for example, a kneader, a pressure kneader, a Banbury mixer, a single screw or a twin screw extruder) or the like. In addition, in such mixing, the order of adding the components and the mixing method are not particularly limited.

In addition, from the viewpoint that the polymer component (more preferably the elastomer component) and clay can be more highly dispersed to further improve the performance, as the method for producing the rubber composition of the present invention, it is preferable to employ a method including mixing (kneading)

a thermoplastic polymer composition (more preferably a thermoplastic elastomer composition) containing the polymer component (more preferably the elastomer component) and clay having a content ratio of 20 parts by mass or less relative to 100 parts by mass of the polymer component (100 parts by mass of the elastomer component when the polymer component is the elastomer component); and

the rubber having no hydrogen-bond cross-linkable moiety (more preferably the diene-based rubber)

such that the content of the polymer component (component in the thermoplastic polymer composition: more preferably the elastomer component (component in the thermoplastic elastomer composition)) is 0.01 to 300 parts by mass relative to 100 parts by mass of the rubber having no hydrogen-bond cross-linkable moiety (more preferably the diene-based rubber), to thereby obtain the rubber composition of the present invention (the diene-based rubber composition when the rubber having no hydrogen-bond cross-linkable moiety is the diene-based rubber) (hereinafter, such method is simply referred to as the "Production Method (I)" for convenience). Hereinafter, such Production Method (I) is briefly described.

Here, first, the thermoplastic polymer composition (more preferably the thermoplastic elastomer composition), which is a component used in the Production Method (I), is described. Note that, here, the thermoplastic polymer composition when the polymer component is the elastomer component is sometimes referred to as a "thermoplastic elastomer composition."

<Thermoplastic Polymer Composition>

Such a thermoplastic polymer composition (more preferably a thermoplastic elastomer composition) may be one containing the polymer component (more preferably the elastomer component) and clay having a content ratio of 20 parts by mass or less relative to 100 parts by mass of the polymer component (100 parts by mass of the elastomer component when the polymer component is the elastomer component), and it is possible to appropriately use, for example, ones and the like described in JP 5918878 B and Japanese Unexamined Patent Application Publication No. 2016-193970.

In such a thermoplastic polymer composition (more preferably a thermoplastic elastomer composition), the amount of the clay contained (content ratio) is 20 parts by mass or less relative to 100 parts by mass of the polymer component (100 parts by mass of the elastomer component when the polymer component is the elastomer component), and is more preferably 0.01 to 10 parts by mass, further preferably 0.05 to 5 parts by mass, and particularly preferably 0.08 to 3 parts by mass relative to 100 parts by mass of the polymer component (100 parts by mass of the elastomer component when the polymer component is the elastomer component) . If the amount of the clay contained is less than the lower limit, the amount of the clay contained is so small that sufficient effects tend not to be obtained. Meanwhile, if the amount of the clay contained exceeds the upper limit, the cross-linking is so strong that the elongation and the strength tend to decrease rather, making it difficult to use the thermoplastic elastomer composition for various applications (deteriorating the practicability). Note that the present inventors speculate that, in the thermoplastic polymer composition (more preferably the thermoplastic elastomer composition), the polymer component (more preferably the elastomer component) and the clay are in a state in which the polymer component (more preferably the elastomer component) has undergone plane cross-linked by utilizing the surface of the clay, as described above.

In addition, the clay is preferably such that the clay in a single-layer morphology (single-layered clay) be present in the thermoplastic polymer composition (more preferably the thermoplastic elastomer composition). The presence of such a clay in the single-layered morphology may be confirmed by observing the surface of the thermoplastic polymer composition (more preferably the thermoplastic elastomer composition) under a transmission electron microscope (TEM). Moreover, in such a thermoplastic polymer composition (more preferably a thermoplastic elastomer composition), when randomly selected three or more measurement points in a size of 5.63 $\mu m^2$ on the surface of the composition are observed under a transmission electron microscope (TEM), 50% or more (more preferably 70% or more, further preferably 80 to 100%, and particularly preferably 85 to 100%) of all the clay based on the number is preferably present as the single-layered clay in all the measurement points. If the abundance ratio of the single-layered clay present is less than

the lower limit, the elongation at break and the strength at break tend to be lowered. Note that, as a method for measuring the abundance ratio (proportion) of such a single-layered clay, it is possible to employ a method same as the method described in JP 5918878 B. Note that, in a case where the single-layered clay is contained at the above-described proportion (the abundance ratio) in the composition, the clay is contained more dispersedly than in a case where a multi-layered clay is directly dispersed (this is because the multi-layered clay is decomposed to form a single-layered clay), and hence the clay can be dispersed in the composition with a higher dispersibility. Thus, if the single-layered clay is contained at the above-described proportion in the composition, the higher dispersibility than in the case where the multi-layered clay is present in the composition can be obtained, so that the heat resistance and the tensile strength at break can be enhanced to higher levels. For this reason, it is more preferable the clay in a single-layered state be contained at the above-described proportion, and this causes the clay to be more dispersed, making it possible to more efficiently improve the heat resistance and the tensile strength at break.

In addition, the thermoplastic polymer composition (more preferably the thermoplastic elastomer composition) is preferably such that when randomly selected three or more measurement points in a size of 5.63 $\mu m^2$ on the surface of the composition are observed under a transmission electron microscope, 1 to 100 (more preferably 3 to 80, and further preferably 5 to 50) be dispersed per $\mu m^2$ in all the measurement points . If the number of single layers of the clay is less than the lower limit, the amount of the clay is so small that a sufficient effect tends not to be obtained. Note that the number of the single layers of the clay can be determined by obtaining a TEM image by the same method as that for measuring the ratio of presence (proportion) of the single-layered clay.

In addition, in such a thermoplastic polymer composition (more preferably a thermoplastic elastomer composition), various additives used for a thermoplastic polymer composition (more preferably a thermoplastic elastomer composition) may be appropriately contained. Such additives are not particularly limited as long as they can be used for a thermoplastic polymer composition (more preferably a thermoplastic elastomer composition), and known additives can be appropriately used (it is possible to suitably use ones same as those described as an additive in the above-described rubber composition (more preferably the diene-based rubber composition)).

The thermoplastic polymer composition (more preferably the thermoplastic elastomer composition) is preferably one further containing the styrene block copolymer having no chemical-bond cross-linking moiety. Note that such a styrene block copolymer is the same as that described in the above-described rubber composition of the present invention (more preferably the diene-based rubber composition) . When such a styrene block copolymer is used, the content ratio is not particularly limited, but is preferably 1 to 5000 parts by mass relative to 100 parts by mass of the polymer component (100 parts by mass of the elastomer component when the polymer component is the elastomer component) (Note that although the upper limit value of a suitable numerical range of such a content ratio is 5000 mass parts, the upper limit value is more preferably 3000 parts by mass, further preferably 1000 parts by mass, and particularly preferably 800 parts by mass. Moreover, although the lower limit value of a suitable numerical range of such a content ratio is 1 part by mass, the lower limit value is more preferably 5 parts by mass, and further preferably 10 parts by mass). In addition, the content ratio of such a styrene block copolymer is more preferably 1 to 1000 parts by mass, and further preferably 5 to 800 parts by mass relative to 100 parts by mass of the polymer component (100 parts by mass of the elastomer component when the polymer component is the elastomer component) in the thermoplastic polymer composition (more preferably the thermoplastic elastomer composition). If such a content ratio is less than the lower limit, oil bleeding tends to occur easily. Meanwhile, if the content ratio exceeds the upper limit, the physical properties tend to be lowered.

In addition, the thermoplastic polymer composition (more preferably the thermoplastic elastomer composition) is preferably one further containing the process oil (particularly preferably the paraffin oil). Note that such process oil (more preferably paraffin oil) is the same as that described in the above-described rubber composition of the present invention (more preferably the diene-based rubber composition). When such process oil (more preferably paraffin oil) is used, the content ratio is not particularly limited, but is preferably 1 to 12000 parts by mass relative to 100 parts by mass of the polymer component (100 parts by mass of the elastomer component when the polymer component is the elastomer component) in the thermoplastic polymer composition (more preferably the thermoplastic elastomer composition) (Note that although the upper limit value of a suitable numerical range of such a content ratio is 12000 parts by mass, the upper limit value is more preferably 10000 parts by mass, further preferably 8000 parts by mass, more preferably 6000 parts by mass, further preferably 5000 parts by mass, more preferably 1000 parts by mass, further preferably 900 parts by mass, particularly preferably 800 parts by mass, and most preferably 700 parts by mass. In addition, although the lower limit value of a suitable numerical range of such a content ratio is 1 part by mass, the lower limit value is more preferably 10 parts by mass, further preferably 30 parts by mass, particularly preferably 50 parts by mass, and most preferably 75 parts by mass) . In addition, the content ratio of such process oil (more preferably paraffin oil) is more preferably 10 to 1000 parts by mass, further preferably 30 to 900 parts by mass, particularly preferably 50 to 800 parts by mass, and most preferably 75 to 700 parts by mass relative to 100 parts by mass of the polymer component (100 parts by mass of the elastomer component when the polymer component is the elastomer component) in the thermoplastic polymer composition (more preferably the thermoplastic elastomer composition). If the amount of the process oil (more preferably the paraffin oil) contained is less than the lower limit, the amount of the paraffin oil contained

is so small that sufficient effects in the flowability and the processability, in particular, tend not to be obtained. Meanwhile, if the amount of the process oil (more preferably the paraffin oil) contained exceeds the upper limit, bleeding of the paraffin oil tends to be induced easily.

In addition, from the viewpoint of balance between formability and mechanical properties, the thermoplastic polymer composition (more preferably the thermoplastic elastomer composition) is more preferably one containing a combination of styrene block copolymer having no chemical-bond cross-linking moiety and process oil (more preferably paraffin oil) together with the polymer component (more preferably the elastomer component) and clay.

In addition, from the viewpoint of formability (flowability), the thermoplastic polymer composition (more preferably the thermoplastic elastomer composition) is preferably one further containing an α-olefin-based resin having no chemical-bond cross-linking moiety. Note that such an α-olefin-based resin is the same as that described in the above-described rubber composition of the present invention (more preferably the diene-based rubber composition). The content ratio of such an α-olefin-based resin having no chemical-bond cross-linking moiety can be appropriately changed according to the intended use and design, and is not particularly limited. For example, it is more preferable to use the α-olefin-based resin such that its content is 250 parts by mass or less (more preferably 5 to 250 parts by mass, further preferably 10 to 225 parts by mass, particularly preferably 25 to 200 parts by mass, and most preferably 35 to 175 parts by mass) relative to 100 parts by mass of the polymer component (100 parts by mass of the elastomer component when the polymer component is the elastomer component). If the content is less than the lower limit, sufficient fluidity tends not to be obtained. Meanwhile, if the content exceeds the upper limit, the rubber elasticity decreases and the resin property tends to increase (the hardness is higher than necessary).

The method for preparing such a thermoplastic polymer composition is not particularly limited, and it is possible to appropriately employ a known method. A method for preparing a thermoplastic elastomer composition that can be suitably used as such a thermoplastic polymer composition is not particularly limited, and it is possible to appropriately employ a known method. For example, it is possible to appropriately use methods for producing a thermoplastic elastomer composition described in JP 5918878 B, JP 2016-193970 A, Japanese Unexamined Patent Application Publication No. 2017-057323, International Publication NO. WO2017/047274, and the like.

In addition, as a method for producing such a thermoplastic polymer composition (more preferably a thermoplastic elastomer composition), it is preferable to employ, among others, a method including mixing

a polymer having a cyclic acid anhydride group in a side chain (more preferably an elastomeric polymer having a cyclic acid anhydride group in a side chain);

at least one raw material compound of a compound (i) that forms a hydrogen-bond cross-linkable moiety upon a reaction with the cyclic acid anhydride group, and a mixed raw material of the compound (i) with a compound (ii) that forms a covalent-bond cross -linking moiety upon a reaction with the cyclic acid anhydride group; and

clay having a content ratio of 20 parts by mass or less relative to 100 parts by mass of the total amount of the polymer and the raw material compound (when the polymer is an elastomeric polymer, 100 parts by mass of the total amount of the elastomeric polymer and the raw material compound), and

reacting the polymer having a cyclic acid anhydride group in the side chain (more preferably the elastomeric polymer having a cyclic acid anhydride group in the side chain) with the raw material compound to form at least one polymer component selected from the group consisting of the polymers (A) and the polymers (B) (more preferably at least one elastomer component selected from the group consisting of the elastomeric polymers (A) and the elastomeric polymers (B)),

to thereby obtain a thermoplastic polymer composition (more preferably a thermoplastic elastomer composition) containing the polymer component (more preferably the elastomer component) and clay having a content ratio of 20 parts by mass or less relative to 100 parts by mass of the polymer component (100 parts by mass of the elastomer component when the polymer component is the elastomer component).

Here, the "polymer having a cyclic acid anhydride group in the side chain" refers to a polymer in which the cyclic acid anhydride group is chemically stably bonded (covalently bonded) to an atom forming a main chain of the polymer, and it is possible to suitably use one obtained by reacting a polymer capable of forming the main chain portions of the polymers (A) and (B) with a compound capable of introducing a cyclic acid anhydride group. Examples of the polymer having a cyclic acid anhydride group in the side chain include polyolefin polymers having a cyclic acid anhydride group in the side chain (for example, high density polyethylene (HDPE) having a cyclic acid anhydride group in the side chain, polypropylene (PP) having a cyclic acid anhydride group in the side chain, ethylene propylene copolymer having a cyclic acid anhydride group in the side chain, ethylene butylene copolymer having a cyclic acid anhydride group in the side chain, ethylene octene copolymer having a cyclic acid anhydride group in the side chain, polyolefin-based elastomeric polymer having a cyclic acid anhydride group in the side chain, and the like). In addition, the "elastomeric polymer having a cyclic acid anhydride group in the side chain" refers to an elastomeric polymer in which the cyclic acid anhydride group is chemically stably bonded (covalently bonded) to an atom forming a main chain of the polymer, and it is possible to suitably use one obtained by reacting a polymer capable of forming the main chain portions of the elastomeric polymers (A) and (B) with a compound capable of introducing a cyclic acid anhydride group. As such an elastomeric polymer

having a cyclic acid anhydride group in the side chain, it is possible to appropriately use known ones (for example, those described in paragraph [0183] to paragraph [0193] of JP 5918878 B) . In addition, from the viewpoints of a high molecular weight and high strength, such an elastomeric polymer having a cyclic acid anhydride group in the side chain is more preferably a maleic anhydride-modified elastomeric polymer, and further preferably a maleic anhydride-modified ethylene-propylene rubber and a maleic anhydride-modified ethylene-butene rubber.

In addition, as the compound (i) that forms a hydrogen-bond cross-linkable moiety upon a reaction with the cyclic acid anhydride group, the same compound as the compound that forms a hydrogen-bond cross-linkable moiety (the compound capable of introducing a nitrogen-containing heterocycle) described for the above-described rubber composition of the present invention (more preferably the diene-based rubber) can be used preferably. For example, the compound (i) may be the nitrogen-containing heterocycle described for the above-described rubber composition of the present invention itself, or may be a compound in which a substituent (for example, a hydroxy group, a thiol group, an amino group, or the like) that reacts with a cyclic acid anhydride group of maleic anhydride or the like is bonded to the above-described nitrogen-containing heterocycle (a nitrogen-containing heterocycle having the above-described substituent). Note that, as the compound (i), a compound that forms both a hydrogen-bond cross-linkable moiety and a covalent-bond cross-linking moiety (a compound capable of simultaneously introducing both a hydrogen-bond cross-linkable moiety and a covalent-bond cross-linking moiety) may be used (note that a side chain having both a hydrogen-bond cross-linkable moiety and a covalent-bond cross-linking moiety can be considered as a preferred mode of the side chain having a hydrogen-bond cross-linkable moiety).

Meanwhile, as the compound (ii) that forms a covalent-bond cross-linking moiety upon a reaction with the cyclic acid anhydride group, a compound which is the same as the "compound that forms a covalent-bond cross-linking moiety (the compound that forms a covalent bond)" described for the above-described rubber composition of the present invention (more preferably the diene-based rubber) can be used preferably (compounds preferred as the compound (ii) are also the same).

In addition, as the compound (ii), a compound that forms both a hydrogen-bond cross-linkable moiety and a covalent-bond cross-linking moiety (a compound capable of simultaneously introducing both a hydrogen-bond cross-linkable moiety and a covalent-bond cross-linking moiety) may also be used (note that a side chain having both a hydrogen-bond cross-linkable moiety and a covalent-bond cross-linking moiety can be considered as a preferred mode of the side chain having a covalent-bond cross-linking moiety). Such a compound that forms both a hydrogen-bond cross-linkable moiety and a covalent-bond cross-linking moiety is particularly preferably tris(2-hydroxyethyl) isocyanurate and 2,4-diamino-6-phenyl-1,3,5-triazine.

Note that, as such raw material compounds (compound (i) and compound (ii)), for example, it is possible to appropriately use those described in paragraphs [0203] to [0207] of JP 5918878 B. Moreover, as the raw material compound (compound (i) and/or compound (ii)), the above-described compound (X) is more preferable. Moreover, the amount added of the compound (i) and the compound (ii) (the total amount thereof: when only one of the compounds is used, the amount of the one compound) and the addition method are not particularly limited, and can be appropriately set according to the target design (for example, the design may be changed as appropriate with reference to paragraphs [0208] to [0210] of JP 5918878 B) .

In addition, from the viewpoint of resistance to compression set, such raw material compound (compound (i) and/or compound (ii)) is preferably tris(2-hydroxyethyl) isocyanurate, sulfamide, pentaerythritol, 2,4-diamino-6-phenyl-1,3,5-triazine, and polyether polyol, and further preferably pentaerythritol, 2,4-diamino-6-phenyl-1,3,5-triazine, and tris(2-hydroxyethyl) isocyanurate.

In addition, in the case of reacting the polymer having a cyclic acid anhydride group in the side chain (more preferably the elastomeric polymer having a cyclic acid anhydride group in the side chain) with the raw material compound (compound (i) and/or compound (ii)), the amount of the raw material compound used is preferably 0.1 to 10 parts by mass, more preferably 0.3 to 7 parts by mass, and further preferably 0.5 to 5.0 parts by mass relative to 100 parts by mass of the polymer having a cyclic acid anhydride group in the side chain (when the polymer is the elastomeric polymer, 100 parts by mass of the elastomeric polymer). If the amount of the raw material compounds added (the amount based on parts by mass) is less than the lower limit, the amount of the raw material compounds is so small that the cross-linking density does not increase, and desired physical properties tend not to be expressed. Meanwhile, if the amount exceeds the upper limit, the amount is so large that many branches tend to be formed, and the cross-linking density tends to be lowered. When reacting the polymer having a cyclic acid anhydride group in the side chain (more preferably the elastomeric polymer having a cyclic acid anhydride group in the side chain) with the raw material compound (compound (i) and/or compound (ii)), the cyclic acid anhydride group of the polymer undergoes ring-opening, so that the cyclic acid anhydride group and the raw material compound (the compound (i) and/or compound (ii)) are chemically bonded to each other. This makes it possible to form at least one polymer component selected from the group consisting of the polymers (A) and the polymers (B) (more preferably at least one elastomer component selected from the group consisting of the elastomeric polymers (A) and the elastomeric polymers (B)). A temperature condition for the reaction (ring-opening of the cyclic acid anhydride group) of the polymer with the raw material compound (the compound (i) and/or compound

(ii)) is not particularly limited, and may be adjusted to a temperature at which the compound and the cyclic acid anhydride group can react with each other according to the types of the compound and the cyclic acid anhydride group. For example, the temperature condition is preferably 100 to 250 °C, and more preferably 120 to 230 °C, from the viewpoint that the reaction is allowed to proceed in a moment by softening.

In addition, the mixing method is not particularly limited, and it is possible to appropriately employ a known method or the like. For example, it is possible to employ a method of mastication using rolls, a kneader, an extruder, an all-purpose mixer, or the like. Moreover, although the order of adding the components is not particularly limited, it is preferable to plasticize in advance the polymer having a cyclic acid anhydride group in a side chain (more preferably an elastomeric polymer having a cyclic acid anhydride group in a side chain), then add clay to obtain a mixture, and add the raw material compound (compound (i) and/or compound (ii)) thereto for mixing, from the viewpoint of further improving the dispersibility of the clay. In addition, in the case of adding various additives (such as the styrene block copolymer having no chemical-bond cross-linking moiety, paraffin oil, and the α-olefin-based resin having no chemical-bond cross-linking moiety), it is preferable to prepare in advance the polymer having a cyclic acid anhydride group in the side chain (more preferably the elastomeric polymer having a cyclic acid anhydride group in the side chain) and a mixture containing various additives and then add clay for the purpose of sufficient dispersion of the clay, and thereafter add the raw material compound (compound (i) and/or compound (ii)) for mixing. Note that, in such mixing, from the viewpoint of further improving the dispersibility of the clay, it is preferable to plasticize the polymer having a cyclic acid anhydride group in a side chain (more preferably an elastomeric polymer having a cyclic acid anhydride group in a side chain) and a polymer component among various additives optionally added. Such a plasticizing method is not particularly limited, and it is possible to appropriately employ a known method. For example, it is possible to appropriately employ a method of kneading using rolls, a kneader, an extruder, an all-purpose mixer, or the like at a temperature at which these can be plasticized (for example, about 100 to 250°C) . Note that, regarding the thermoplastic polymer composition (more preferably the thermoplastic elastomer composition), the thermoplastic polymer composition containing the polymer (A) as the polymer component (more preferably the thermoplastic elastomer composition containing the elastomeric polymer (A) as the elastomer component) and the thermoplastic polymer composition containing the polymer (B) as the polymer component (more preferably the thermoplastic elastomer composition containing the elastomeric polymer (B) as the elastomer component) may be produced separately and then mixed to form a thermoplastic polymer composition containing the polymers (A) and (B) as the polymer components (more preferably a thermoplastic elastomer composition containing the elastomeric polymers (A) and (B) as the elastomer components).

The thermoplastic polymer composition (more preferably the thermoplastic elastomer composition), which is a component used in the Production Method (I), has been described above. Hereinafter, the steps of the Production Method (I) are described.

<On Steps of Production Method (I)>

The Production Method (I) mixes the thermoplastic polymer composition and the rubber having no hydrogen-bond cross-linkable moiety such that the content of the polymer component (component in the thermoplastic polymer composition) is 0.01 to 300 parts by mass relative to 100 parts by mass of the rubber having no hydrogen-bond cross-linkable moiety, to thereby obtain the rubber composition of the present invention (more preferably the diene-based rubber composition) . Note that, in the case of using an elastomer component suitable as the polymer component and using a diene-based rubber as the rubber having no hydrogen-bond cross-linkable moiety, the Production Method (I) mixes the thermoplastic elastomer composition and the diene-based rubber such that the content of the elastomer component (component in the thermoplastic elastomer composition) is 0.01 to 300 parts by mass relative to 100 parts by mass of the diene-based rubber, to thereby obtain the diene-based rubber composition suitable as the rubber composition of the present invention.

Such a method for mixing the rubber having no hydrogen-bond cross-linkable moiety (more preferably the diene-based rubber) and the thermoplastic polymer composition (more preferably the thermoplastic elastomer composition) is not particularly limited, and it is possible to appropriately use a known method or the like. For example, it is possible to employ a method of mastication using rolls, a kneader, an extruder, an all-purpose mixer, or the like.

In addition, such a mixing step preferably includes mixing the rubber having no hydrogen-bond cross-linkable moiety (more preferably the diene-based rubber) and the thermoplastic polymer composition (more preferably the thermoplastic elastomer composition) such that the content of the polymer component, which is a component in the thermoplastic polymer composition (when the thermoplastic polymer composition is the thermoplastic elastomer composition, the elastomer component, which is a component in the thermoplastic elastomer composition), is 0.01 to 300 parts by mass (more preferably 0.05 to 200 parts by mass, and further preferably 0.1 to 100 parts by mass) relative to 100 parts by mass of the rubber having no hydrogen-bond cross-linkable moiety (more preferably the diene-based rubber) . If the content of such a polymer component (more preferably an elastomer component) is less than the lower limit, the rubber composition (more preferably the diene-based rubber composition) finally obtained contains a smaller amount of the

polymer component (more preferably the elastomer component), so that the rubber composition of the present invention (for example, the diene-based rubber composition) cannot be obtained, and sufficient performance tends not to be exhibited even if the resulting composition is cross-linked. Meanwhile, if the content exceeds the upper limit, the rubber composition (for example, the diene-based rubber composition) finally obtained contains too large an amount of the polymer component (when the polymer component is an elastomer component, the elastomer component), so that the rubber composition of the present invention (for example, the diene-based rubber composition) cannot be obtained, and the physical properties of the polymer component (when the polymer component is an elastomer component, the elastomer component) tend to be greatly increased in the resulting composition.

In addition, such a mixing step preferably includes plasticizing and mixing the rubber having no hydrogen-bond cross-linkable moiety (more preferably the diene-based rubber) and the thermoplastic polymer composition (more preferably the thermoplastic elastomer composition). Such a plasticizing method is not particularly limited, and a known method can be appropriately employed, and it is more preferable to mix (knead) under a temperature condition of 100 to 250°C (more preferably 120 to 230°C). If such a temperature is less than the lower limit, it tends to be difficult to sufficiently disperse the components (it is difficult to uniformly mix and disperse the components). Meanwhile, if the temperature exceeds the upper limit, deterioration tends to occur.

In the rubber composition (more preferably the diene-based rubber composition) thus obtained, the contents of the rubber having no hydrogen-bond cross-linkable moiety (more preferably the diene-based rubber), the polymer component (more preferably the elastomer component), and the clay contained are the same as the contents of the components described in the rubber composition of the present invention (for example, the diene-based rubber composition). Note that, when allowing the rubber composition (for example, the diene-based rubber composition) thus obtained to contain the additive, the content thereof in the rubber composition (for example, the diene-based rubber composition) finally obtained is preferably adjusted as appropriate so that the content is the same as the content of each component already described as a component in the rubber composition of the present invention (for example, the diene-based rubber composition) (note that, in the case where an additive is contained in advance in the thermoplastic polymer composition (more preferably the thermoplastic elastomer composition), it is preferable to appropriately adjust the content of the additive in the rubber composition (more preferably the diene-based rubber composition) finally obtained so that the content is the same as the content of each component already described as a component in the rubber composition of the present invention (more preferably the diene-based rubber composition)). As described above, by suitably adjusting the usage amount of the raw materials (components) used in the production of a rubber composition (more preferably a diene-based rubber composition), each component can be easily made into the above content.

Moreover, when preparing a rubber composition (more preferably a diene-based rubber composition) in this way, cross-linking agents may be further contained. The order of adding such a cross-linking agent is not particularly limited. However, from the viewpoint of obtaining a composition in an uncross-linked state, it is preferable to mix the thermoplastic polymer composition (more preferably the thermoplastic elastomer composition) and the rubber having no hydrogen-bond cross-linkable moiety (more preferably the diene-based rubber) to thereby obtain a mixture, and then to add the cross-linking agent to the resulting mixture and knead it under a temperature condition of 20 to 150°C (the optimum temperature condition may be appropriately selected from the temperature range so that the cross-linking reaction does not proceed depending on the type of the cross-linking agent or the rubber having no hydrogen-bond cross-linkable moiety (more preferably the diene-based rubber)). The method for kneading such a cross-linking agent is not particularly limited, and it is possible to appropriately employ a known method. For example, it is possible to employ a kneading method including adding a cross-linking agent to the mixture by using a Banbury mixer, a kneader, an open roll, or the like.

In addition, depending on the application to be used, the rubber composition of the present invention (more preferably the diene-based rubber composition) can also exhibit properties suitable for its use more efficiently by appropriately changing the type of the rubber having no hydrogen-bond cross-linkable moiety (more preferably the diene-based rubber), the type of the polymer component (more preferably the elastomer component), or further using an additive as appropriate. For example, consider the case of adding the above-described thermoplastic polymer composition (more preferably the thermoplastic elastomer composition) to the rubber having no hydrogen-bond cross-linkable moiety (more preferably the diene-based rubber (such as EPDM)), to thereby produce a rubber composition (more preferably a diene-based rubber composition). When the hardness of the thermoplastic polymer composition (more preferably the thermoplastic elastomer composition) is adjusted in advance to be lower than the hardness of the rubber having no hydrogen-bond cross-linkable moiety (more preferably the diene-based rubber) by, for example, adjusting the amount of additives used (for example, it is possible to adjust the hardness (JIS-A hardness) of the thermoplastic polymer composition (more preferably the thermoplastic elastomer composition) to about 5 by adding paraffin oil at a high concentration), it becomes possible to obtain a rubber composition (more preferably a diene-based rubber composition) having a hardness lower than the original hardness of the rubber having no hydrogen-bond cross-linkable moiety (more preferably the diene-based rubber), in the case of mixing the thermoplastic polymer composition (more preferably the thermoplastic elastomer composition) and the rubber having no hydrogen-bond cross-linkable moiety (more preferably

the diene-based rubber) (for example, the hardness (JIS-A hardness) of a diene-based rubber is generally about 30 or more, but the diene-based rubber composition suitable as the rubber composition of the present invention can achieve lower hardness). Note that, even when the hardness of the rubber having no hydrogen-bond cross-linkable moiety (for example, the diene-based rubber) is lowered in this way, it is possible to sufficiently maintain rubber properties such as compression set derived from the rubber having no hydrogen-bond cross-linkable moiety (for example, the diene-based rubber) in the composition, because the rubber composition of the present invention (for example, the diene-based rubber composition) contains a polymer component (for example, an elastomer component) and clay. As described above, depending on the component to be used, the rubber composition of the present invention (more preferably the diene-based rubber composition) can achieve lower hardness than the original hardness of the rubber having no hydrogen-bond cross-linkable moiety (for example, the diene-based rubber) and can also sufficiently maintain the original rubber properties of the rubber having no hydrogen-bond cross-linkable moiety (for example, the diene-based rubber) (compression set, tensile properties, and the like) even when the rubber having no hydrogen-bond cross-linkable moiety (for example, the diene-based rubber) is softened. For this reason, an application to a wider usage can be expected. Note that, here, description has been provided for an example of achieving low hardness in which the hardness of the thermoplastic polymer composition (more preferably the thermoplastic elastomer composition) is adjusted in advance to be lower than the hardness of the rubber having no hydrogen-bond cross-linkable moiety (for example, the diene-based rubber), followed by mixing. However, the method for lowering the hardness is not particularly limited to the above-described method. For example, the hardness may be adjusted by separately adding an additive (for example, paraffin oil) at any stage when producing a rubber composition (more preferably a diene-based rubber composition). Note that, here, description has been provided for an example of achieving low hardness of the rubber having no hydrogen-bond cross-linkable moiety (for example, the diene-based rubber). However, depending on the application to be used, the rubber composition of the present invention (more preferably the diene-based rubber composition) can appropriately adjust properties suitable for its use in addition to the hardness by appropriately changing the type of the rubber having no hydrogen-bond cross-linkable moiety (more preferably the diene-based rubber), the type of the polymer component (more preferably the elastomer component), or further selecting and using an additive as appropriate.

Note that such a rubber composition (more preferably a diene-based rubber composition) is not particularly limited, but can be suitably applied as a material for forming, for example, various products for power trains of various automobiles and the like such as tires, various products for hybrid/electric vehicles, various products for diesel engines, and various automobile-related products such as starters, alternators, engine cooling products, and drive system products. As described above, the use of the rubber composition of the present invention (more preferably the diene-based rubber composition) is not particularly limited, but can be suitably used as a material for forming industrial rubber parts (rubber parts and the like used in various industrial products such as the above-mentioned various automobile-related products and rubber parts used in industrial machines). Examples of the usage of such a rubber composition (more preferably a diene-based rubber composition) include (1) tire portions such as tread, carcass, sidewall, inner-liner, under-tread, and belt portions of tires, (2) radiator grilles, side molding, garnishes (pillar, rear, and cowl top), aero parts (airdams and spoilers), wheel covers, weather strips, cowbelt grilles, air outlet louvers, air scoops, hood bulges, parts of ventilation ports, barrier parts (overfenders, side-seal panels, molding (window, hood, and door belt)), marks in the exterior; parts for interiors and window frames such as weather strips for doors, lights, and wipers, glass runs, and glass run channels, (3) air duct hoses, radiator hoses, and brake hoses, (4) parts for lubricating oil systems such as crankshaft seals, valve stem seals, head cover gaskets, A/T oil cooler hoses, transmission oil seals, P/S hoses, and P/S oil seals, (5) parts for fuel systems such as fuel hoses, emission control hoses, inlet filler hoses, and diaphragms; antivibration parts such as engine mounts and in-tank pump mounts, (6) boots such as CVJ boots and rack and pinion boots, (7) air conditioning parts such as A/C hoses and A/C seals, (8) parts for belts such as timing belts and belts for auxiliaries, (9) sealers such as windshield sealers, vinyl plastisol sealers, anaerobic sealers, body sealers, and spot weld sealers, and the like.

In addition, such a rubber composition (more preferably a diene-based rubber composition) can also be suitably applied to materials and the like for forming various products such as air conditioner-related products such as passenger car air conditioners, bus air conditioners, and refrigerators; body-related products such as combination meters, head-up displays, body products, and relays; driving safety-related products such as inter-vehicle control cruise/pre-crash safety/lane keeping assist systems, steering systems, lighting control systems, airbag-related sensors & ECUs, and brake controls; and the like. In addition, for example, the rubber composition can be applied to materials for forming various products of information communication-related products such as car navigation systems, ETC, data communication modules, and CAN-Gateway ECUs. Moreover, such a rubber composition (more preferably a diene-based rubber composition) can be appropriately applied as materials for forming automotive parts, hoses, belts, sheets, antivibration rubbers, rollers, lining, rubber-lined cloth, sealing materials, gloves, fenders, rubbers for medical applications (syringe gaskets, tubes, catheters), gaskets (for home appliances and for architectural applications), asphalt modifiers, hot-melt adhesives, boots, grips, toys, shoes, sandals, keypads, gears, PET bottle cap liners, and the like as well as materials and the like for forming rubber footwear, belts, hoses, antivibration rubber, rubber rolls, printing blankets, rubber-resin linings, rubber plates (rubber sheets), conductive rubber products, sealing materials, sheet waterproofing, urethane film

waterproofing, civil engineering water shielding sheets, sealing devices, extruded rubber products, sponge rubber products, fenders, building gaskets, seismic isolation rubbers, paving rubber blocks, non-metallic chains, medical·hygienic rubber products, rubberized cloth products, rubber·vinyl gloves, and the like. In addition, such a rubber composition (more preferably a diene-based rubber composition) can also be applied to coating agents such as fingerprint-proof coatings for touch panels, lubricious coatings for metal surfaces, and primers for metal coating. As described above, the rubber composition (more preferably the diene-based rubber composition) can be suitably used as a material for forming various industrial rubber parts.

Hereinabove, the rubber composition of the present invention (more preferably the diene-based rubber composition) has been described. Hereinafter, the cross-linked rubber composition, tire, and industrial rubber parts of the present invention is described.

[Cross-Linked Rubber Composition]

The cross-linked rubber composition of the present invention is a cross-linked product of the rubber composition of the present invention (more preferably a cross-linked product of the diene-based rubber composition).

The cross-linked product of such a rubber composition (more preferably a diene-based rubber composition) can be formed as follows. For example, a rubber composition containing a cross-linking agent (more preferably a diene-based rubber composition (for example, when the cross-linking agent is a sulfur cross-linking agent, it is preferable to further contain the vulcanization accelerator)) is appropriately heated, depending on the type and blending ratio of the cross-linking agent, to a temperature at which a cross-linking reaction proceeds between the rubber having no hydrogen-bond cross-linkable moiety (for example, the diene-based rubber) and the cross-linking agent in the composition, and in the composition, at least the rubber having no hydrogen-bond cross-linkable moiety (for example, the diene-based rubber) and the cross-linking agent are reacted to cross-link (to vulcanize when cross-linking agent is a sulfur-based cross-linking agent) the rubbers (when the rubber having no hydrogen-bond cross-linkable moiety is a diene-based rubber, the diene-based rubbers). As described above, the cross-linked rubber composition of the present invention is obtained by cross-linking a rubber composition (more preferably a diene-based rubber composition), and is a composition containing a cross-linked product of the rubber having no hydrogen-bond cross-linkable moiety (for example, the diene-based rubber), which is a reaction product of the rubber having no hydrogen-bond cross-linkable moiety (for example, the diene-based rubber) and the cross-linking agent.

In addition, the conditions for the cross-linking reaction for obtaining a cross-linked product of the rubber composition (more preferably a cross-linked product of the diene-based rubber composition) are not particularly limited, and known conditions can be appropriately employed. The conditions may be appropriately set depending on the type of the rubber having no hydrogen-bond cross-linkable moiety (for example, the diene-based rubber) or the cross-linking agent in the composition. For example, the conditions may be such that heating is performed at a temperature of 20 to 230°C for 1 to 60 minutes (note that one may appropriately select an optimum temperature from the temperature range so that the cross-linking reaction sufficiently proceeds depending on the type of the cross-linking agent and the rubber having no hydrogen-bond cross-linkable moiety (for example, the diene-based rubber)). Note that, depending on the application, such a cross-linked product of a rubber composition (more preferably a cross-linked product of a diene-based rubber composition) may be subjected to a cross-linking reaction while being appropriately molded. Such a molding method is not particularly limited either, and one may appropriately employ a known molding method (for example, a known method such as press molding using a press machine or cutting molding using a cutting machine) according to the application or intended design. Note that the cross-linkage formed in such a cross-linked product of the rubber composition (more preferably a cross-linked product of the diene-based rubber composition) is preferably a cross-linkage formed using a peroxide-based cross-linking agent (peroxide cross-linkage) from the viewpoint of heat aging resistance, and is preferably a cross-linkage formed using a sulfur-based cross-linking agent from the viewpoint of further improving the physical properties (particularly elongation at break).

[Industrial Rubber Parts]

The industrial rubber part of the present invention includes the above-described cross-linked rubber composition of the present invention. As described above, the industrial rubber part of the present invention only needs to include the cross-linked rubber composition of the present invention. Such an industrial rubber part is preferably rubber parts used for various industrial products (for example, rubber parts in various automobile-related products, rubber parts used in industrial machines, and the like). Examples of such industrial rubber parts include automotive parts (such as tires), hoses, belts, sheets, antivibration rubbers, rollers, lining, rubber-lined cloth, sealing materials, gloves, fenders, rubbers for medical applications (syringe gaskets, tubes, catheters), gaskets (for home appliances and for architectural applications), asphalt modifiers, hot-melt adhesives, boots, grips, toys, shoes, sandals, keypads, gears, PET bottle cap liners, rubber footwear, hoses, antivibration rubber, rubber rolls, printing blankets, rubber·resin linings, rubber plates (rubber

sheets), conductive rubber products, sealing materials, sheet waterproofing, urethane film waterproofing, civil engineering water shielding sheets, sealing devices, extruded rubber products, sponge rubber products, fenders, building gaskets, seismic isolation rubbers, paving rubber blocks, non-metallic chains, medical·hygienic rubber products, rubberized cloth products, rubber-vinyl gloves, and rubber parts (including the products themselves) used in various products such as fingerprint-proof coatings for touch panels, lubricious coatings for metal surfaces, and primers for metal coating. The method for producing such industrial rubber parts is not particularly limited. For example, one may employ a method including cross-linking the rubber composition of the present invention (for example, the diene-based rubber composition) with appropriate molding depending on the application, to thereby produce an industrial rubber part including the cross-linked rubber composition of the present invention.

[Tire]

The tire of the present invention includes the above-described cross-linked rubber composition of the present invention. Thus, it suffices that the tire of the present invention includes the cross-linked rubber composition of the present invention. In such a tire, the cross-linked rubber composition may be contained, for example, as a material for forming a tread portion, a cap tread portion, and a sidewall portion, and the portion of the tire including the cross-linked rubber composition is not particularly limited. Note that, from the viewpoint of wet grip performance and wear resistance, the cross-linked rubber composition is preferably used for the tread portion. The method for producing such a tire is not particularly limited, and a known method can be appropriately used. For example, when producing a tire having a tread portion made of the cross-linked rubber composition, one may employ a method including extruding the rubber composition of the present invention (more preferably the diene-based rubber composition) in an uncross-linked (unvulcanized) state according to the shape of the tread, then using the uncross-linked tread to form a tire by a normal method, thereby forming a tire with an uncross-linked (unvulcanized) tread portion, and then heating the uncross-linked (unvulcanized) tread portion for cross-linking, to thereby obtain a tire with a tread portion made of the cross-linked rubber composition of the present invention. Thus, a known method can be appropriately used to produce a tire with the above-described cross-linked rubber composition of the present invention.

[Examples]

Hereinafter, the present invention is described more specifically based on Examples and Comparative Examples, but the present invention is not limited to the following examples. Note that, in the following Examples and Comparative Examples, rubber compositions prepared using the "diene-based rubber" (rubber compositions obtained in Examples 1 to 19 and Comparative Examples 1 to 14) are referred to as the "diene-based rubber compositions," and rubber compositions obtained by using the "silicone-based rubber" (rubber compositions obtained in Example 20 and Comparative Examples 15 to 18) are referred to as the "silicone-based rubber compositions."

(Synthesis Example 1)

A styrene-ethylene-butylene-styrene block copolymer (manufactured by Kraton under the trade name of "G1633U," molecular weight: 400,000 to 500,000, styrene content of 30% by mass: hereinafter sometimes referred to as "SEBS") at 10 g was put into a pressure kneader, and while mixing under the condition of 180°C, paraffin oil (manufactured by SK Lubricants under the trade name of "YUBASE8J") at 20 g was further added dropwise into the pressure kneader to mix SEBS and paraffin oil for 1 minute. Next, maleic anhydride-modified ethylene-butene copolymer (manufactured by Mitsui Chemicals, Inc. under the trade name of "TAFMER MH5040," crystallinity 4%, glass-transition point -64°C) at 5 g, ethylene-butene copolymer (manufactured by Mitsui Chemicals, Inc. under the trade name of "TAFMER DF7350": hereinafter sometimes referred to as "EBM") at 3.75 g, and anti-aging agent (manufactured by ADEKA Corporation under the trade name of "AO-50") at 0.12 g were further added to the pressure kneader, followed by kneading at 180°C for 2 minutes to obtain a mixture (a). Thereafter, the mixture (a) in the pressure kneader was added with organically modified clay (manufactured by KUNIMINE INDUSTRIES CO., LTD. under the trade name of "Kunfil D-36") at 0.005 g and kneaded at 180°C for 4 minutes. Then, tris(2-hydroxyethyl) isocyanurate (manufactured by NISSEI CORPORATION under the trade name of "TANAC") at 0.131 g was added and kneaded at 180°C for 8 minutes to prepare a thermoplastic elastomer composition (I). Hereinafter, the thermoplastic elastomer composition (I) is sometimes referred to as "TPE-(I)".

(Synthesis Example 2)

A thermoplastic elastomer composition (II) was prepared in the same manner as in Synthesis Example 1 except that 0.051 g of pentaerythritol (manufactured by Mitsubishi Chemical Corporation under the trade name of "Neulizer P")

was added instead of tris(2-hydroxyethyl) isocyanurate. Hereinafter, the thermoplastic elastomer composition (II) is sometimes referred to as "TPE- (II)".

(Synthesis Example 3)

A thermoplastic elastomer composition (III) was prepared in the same manner as in Synthesis Example 1 except that 0.141 g of 2,4-diamino-6-phenyl-1,3,5-triazine (manufactured by NIPPON SHOKUBAI CO., LTD. under the trade name of "Benzoguanamine") was added instead of tris(2-hydroxyethyl) isocyanurate. Hereinafter, the thermoplastic elastomer composition (III) is sometimes referred to as "TPE-(III)".

(Synthesis Example 4)

A thermoplastic elastomer composition (IV) was prepared in the same manner as in Synthesis Example 1 except that 7.5 g of polyethylene (manufactured by Japan Polyethylene Corporation under the trade name of "HJ590N") was added instead of EBM. Hereinafter, the thermoplastic elastomer composition (IV) is sometimes referred to as "TPE-(IV)".

(Synthesis Example 5)

A thermoplastic elastomer composition (V) was prepared in the same manner as in Synthesis Example 4 except that 0.051 g of pentaerythritol (manufactured by Mitsubishi Chemical Corporation under the trade name of "Neulizer P") was added instead of tris(2-hydroxyethyl) isocyanurate. Hereinafter, the thermoplastic elastomer composition (V) is sometimes referred to as "TPE-(V)".

(Synthesis Example 6)

A thermoplastic elastomer composition (VI) was prepared in the same manner as in Synthesis Example 4 except that 0.141 g of 2,4-diamino-6-phenyl-1,3,5-triazine (manufactured by NIPPON SHOKUBAI CO., LTD. under the trade name of "Benzoguanamine") was added instead of tris(2-hydroxyethyl) isocyanurate. Hereinafter, the thermoplastic elastomer composition (VI) is sometimes referred to as "TPE-(VI)".

(Synthesis Example 7)

A comparative thermoplastic elastomer composition (VII) in the form of containing no organically modified clay was prepared in the same manner as in Synthesis Example 4 except that a step was performed in which, after the mixture (a) was obtained, the mixture (a) was directly kneaded at 180°C for 8 minutes without adding organically modified clay, and then the mixture (a) was added with 0.126 g of 3-amino-1,2,4-triazole (manufactured by Tokyo Kasei Kogyo Co., Ltd.) and kneaded at 180°C for 8 minutes, instead of performing the step in which the mixture (a) in the pressure kneader was added with 0.005 g of organically modified clay (manufactured by KUNIMINE INDUSTRIES CO. , LTD. under the trade name of "Kunfil D-36") and kneaded at 180°C for 4 minutes, and then 0.131 g of tris(2-hydroxyethyl) isocyanurate was added and kneaded at 180°C for 8 minutes. Hereinafter, the thermoplastic elastomer composition (VII) is sometimes referred to as "TPE-(VII)".

(Synthesis Example 8)

A thermoplastic elastomer composition (VIII) was prepared in the same manner as in Synthesis Example 1 except that 5 g of the trade name "G1651HU" manufactured by Kraton (styrene content of 33% by mass: hereinafter sometimes referred to as "SEBS-A" for convenience) was used instead of using a styrene-ethylene-butylene-styrene block copolymer manufactured by Kraton under the trade name of "G1633U", the amount of tris(2-hydroxyethyl) isocyanurate used was changed to 0.111 g, the amount of paraffin oil used was changed to 5.15 g, a mixture of 4.15 g of EBM and 2.8 g of polyethylene (manufactured by Japan Polyethylene Corporation under the trade name of "HJ590N") was added instead of adding 3.75 g of EBM, and the amount of the anti-aging agent used was changed to 0.104 g. Hereinafter, the thermoplastic elastomer composition (VIII) is sometimes referred to as "TPE-(VIII)". Note that TPE-(VIII) had a JIS-A hardness of 30.

(Synthesis Example 9)

A thermoplastic elastomer composition (IX) was prepared in the same manner as in Synthesis Example 1

except that the amount of SEBS used was changed to 15 g, the amount of tris(2-hydroxyethyl) isocyanurate used was changed to 0.111 g, the amount of paraffin oil used was changed to 500 g, EBM was not added (used), and the amount of anti-aging agent used was changed to 0.655 g. Hereinafter, the thermoplastic elastomer composition (IX) is sometimes referred to as "TPE- (IX)". Note that TPE-(IX) had a lower hardness than TPE- (VIII) (had a lower hardness grade than TPE-(VIII)).

(Synthesis Example 10)

A styrene-ethylene-butylene-styrene block copolymer (manufactured by Kraton under the trade name of "G1633U") at 15 g was put into a pressure kneader, and while mixing under the condition of 180°C, paraffin oil (manufactured by SK Lubricants under the trade name of "YUBASE8J") at 500 g was further added dropwise into the pressure kneader to mix SEBS and paraffin oil for 1 minute. Next, anti-aging agent (manufactured by ADEKA Corporation under the trade name of "AO-50") at 0.655 g was further added to the pressure kneader, followed by kneading at 180°C for 14 minutes to prepare a comparative thermoplastic elastomer composition (X) (mixture of SEBS, paraffin oil, and the anti-aging agent). Hereinafter, the comparative thermoplastic elastomer composition (X) is sometimes referred to as "TPE-(X)".

Table 1 presents the mass ratio (unit: parts by mass) of the components used in the production of the thermoplastic elastomer compositions (TPE compositions) in Synthesis Examples 1 to 10. Note that the numerical value of the mass ratio of each component presented in Table 1 is a ratio when the content of the maleic anhydride-modified ethylene-butene copolymer is set to 100 parts by mass.

(Synthesis Example 11)

A thermoplastic polymer composition (XI) was obtained in the same manner as in Synthesis Example 4 except that 7 g of maleic anhydride-modified high density polyethylene (manufactured by DuPont under the trade name of "Fusabond E265, " density 0.95 g/cm$^3$, glass transition point -122°C, sometimes referred to as "maleic HDPE" in the following) was used instead of using a maleic anhydride-modified ethylene-butene copolymer (maleic EBM), the amount of tris(2-hydroxyethyl) isocyanurate used was changed to 0.0623 g, the amount of the organically modified clay used was changed to 0.007 g, the styrene-ethylene-butylene-styrene block copolymer (manufactured by Kraton under the trade name of "G1633U") was changed to 14 g, the amount of paraffin oil used was changed to 21 g, the amount of polyethylene used was changed to 14 g, and the amount of the anti-aging agent used was changed to 0.169 g. Hereinafter, the thermoplastic polymer composition (XI) is sometimes referred to as "TPC-(XI)".

(Synthesis Example 12)

A thermoplastic polymer composition (XII) was obtained in the same manner as in Synthesis Example 4 except that a mixture of 3.7 g of maleic anhydride-modified ethylene-butene copolymer (maleic EBM) and 6.3 g of maleic anhydride-modified high density polyethylene (maleic HDPE: manufactured by DuPont under the trade name of "Fusabond E265") was used instead of using a maleic anhydride-modified ethylene-butene copolymer (maleic EBM) alone, the amount of tris(2-hydroxyethyl) isocyanurate used was changed to 0.176 g, the amount of organically modified clay used was changed to 0.01 g, the amount of SEBS used was changed to 6.52 g, the amount of paraffin oil used was changed to 15.22 g, the amount of polyethylene (manufactured by Japan Polyethylene Corporation under the trade name of "HJ590N": HDPE) used was changed to 15 g, when the polyethylene (HDPE) was charged into the pressure kneader, 5.22 g of EBM was added together with 15 g of that polyethylene (HDPE), and furthermore, the amount of the anti-aging agent used was changed to 0.117 g. Hereinafter, the thermoplastic polymer composition (XII) is sometimes referred to as "TPC-(XII) ".

Table 1 presents the mass ratio (unit: parts by mass) of the components used in the production of the thermoplastic elastomer compositions (TPE compositions) in Synthesis Examples 1 to 10, and the mass ratio (unit: parts by mass) of the components used in the production of the thermoplastic polymer compositions (TPC compositions) in Synthesis Examples 11 and 12. Note that the numerical value of the mass ratio of each component presented in Table 1 is a ratio when the total amount of the polymer having a cyclic acid anhydride group in the side chain (the content of maleic anhydride-modified ethylene-butene copolymer in Synthesis Examples 1 to 10, the content of maleic anhydride-modified high density polyethylene in Synthesis Example 11, and the total amount of maleic anhydride-modified ethylene-butene copolymer and maleic anhydride-modified high density polyethylene in Synthesis Example 12) is set to 100 parts by mass. Note that, from the type of maleic anhydride-modified ethylene-butene copolymer used in Synthesis Examples 1 to 9 and 12 and the type of maleic anhydride-modified high density polyethylene used in Synthesis Examples 11 and 12, it is apparent that each of the reaction products of these components used in the synthesis examples (polymers having a cyclic acid anhydride group in the side chain) and the compound (X) used in the synthesis examples has a glass transition point of 25°C or lower.

[Table 1]

| | | Synthesis Example 1 [TPE-(I)] | Synthesis Example 2 [TPE-(II)] | Synthesis Example 3 [TPE-(III)] | Synthesis Example 4 [TPE-(IV)] | Synthesis Example 5 [TPE-(V)] | Synthesis Example 6 [TPE-(VI)] | Synthesis Example 7 [TPE-(VII)] | Synthesis Example 8 [TPE-(VIII)] | Synthesis Example 9 [TPE-(IX)] | Synthesis Example 10 [TPE-(X)] | Synthesis Example 11 [TPE-(XI)) | Synthesis Example 12 [TPE-(XII)) |
|---|---|---|---|---|---|---|---|---|---|---|---|---|---|
| Polymer Having Cyclic Acid Anhydride Group in Side Chain | Maleic Anhydride-Modified Ethylene-Butene Copolymer | 100 | 100 | 100 | 100 | 100 | 100 | 100 | 100 | 100 | - | - | 37 |
| | Maleic Anhydride-Modified High Density Polyethylene | - | - | - | - | - | - | - | - | - | - | 100 | 63 |
| Compound (X) | Tris(2-Hydroxyethyl) Isocyanurate | 2.62 | - | - | 2.62 | - | - | - | 2.22 | 2.22 | - | 0.89 | 1.76 |
| | Pentaerythritol | - | 1.02 | - | - | 1.02 | - | - | - | - | - | - | - |
| | 2,4-diamino-6-phenyl-1,3,5-triazine | - | - | 2.82 | - | - | 2.82 | - | - | - | - | - | - |
| | 3-amino-1,2,4-triazole | - | - | - | - | - | - | 2.52 | - | - | - | - | - |
| Organically Modified Clay | | 0.1 | 0.1 | 0.1 | 0.1 | 0.1 | 0.1 | - | 0.1 | 0.1 | - | 0.1 | 0.1 |
| SEBS (manufactured by Kraton under trade name of "G1633U") | | 200 | 200 | 200 | 200 | 200 | 200 | 200 | - | 3000 | 3000 | 200 | 65.2 |
| SEBS-A (manufactured by Kraton under trade name of 'G1651HU") | | - | - | - | - | - | - | - | 103 | - | - | - | - |
| Paraffin Oil | | 400 | 400 | 400 | 400 | 400 | 400 | 400 | 345 | 10000 | 10000 | 300 | 152.2 |
| α-Olefin-Based Resin | EBM | 75 | 75 | 75 | - | - | - | - | 83 | - | - | - | 52.2 |
| | Polyethylene | - | - | - | 150 | 150 | 150 | 150 | 59 | - | - | 200 | 150 |

(continued)

| | Synthesis Example 1 [TPE-(I)] | Synthesis Example 2 [TPE-(II)] | Synthesis Example 3 [TPE-(III)] | Synthesis Example 4 [TPE-(IV)] | Synthesis Example 5 [TPE-(V)] | Synthesis Example 6 [TPE-(VI)] | Synthesis Example 7 [TPE-(VII)] | Synthesis Example 8 [TPE-(VIII)] | Synthesis Example 9 [TPE-(IX)] | Synthesis Example 10 [TPE-(X)] | Synthesis Example 11 [TPE-(XI)) | Synthesis Example 12 [TPE-(XII)) |
|---|---|---|---|---|---|---|---|---|---|---|---|---|
| Anti-Aging Agent | 2.4 | 2.4 | 2.4 | 2.4 | 2.4 | 2.4 | 2.4 | 2.08 | 13.1 | 13.1 | 2.4 | 1.17 |

(Example 1)

First, as a component used for the preparation of a diene-based rubber composition, a powder material (total amount 18 g) was prepared made of a powder mixture containing 16 g of silica (manufactured by Tosoh Silica Corporation under the trade name of "AQ"), 1.2 g of zinc oxide (3 types of zinc oxide manufactured by HAKUSUI TECH CO., LTD.) as a vulcanization acceleration aid, 0.4 g of stearic acid (manufactured by Nippon Fine Chemical Co., Ltd.) as a vulcanization acceleration aid, and 0.4 g of an anti-aging agent (manufactured by OUCHI SHINKO CHEMICAL INDUSTRIAL CO., LTD. under the trade name of "NOCRAC 224").

Next, into a pressure kneader heated to 150°C (manufactured by Toyo Seiki Seisaku-sho, Ltd. under the trade name of "Labo Plastomill," capacity 100 mL), 40 g of styrene butadiene rubber as a diene-based rubber (manufactured by ZEON CORPORATION under the trade name of "Nipol 1502," hereinafter sometimes referred to as "SBR") and 4 g of TPE-(I) were put and plasticized by kneading for 1 minute at a temperature of 150°C and a rotation speed of 30 rpm. After that, into the pressure kneader, 9 g of the powder material (half the amount of the powder material prepared in advance) and 1.28 g of a silane coupling agent (manufactured by Evonik Industries AG [former company name: Evonik Degussa] under the trade name of "Si-69") were further added, and the condition of the rotational speed was changed from 30 rpm to 50 ppm, followed by kneading at a temperature of 150 °C and a rotational speed of 50 rpm for 1 minute and 30 seconds. Then, 9 g of the powder material (the other half of the powder material prepared in advance) was further added, followed by kneading at a temperature of 150°C and a rotational speed of 50 rpm for 1 minute and 30 seconds to obtain a mixture. Next, the ram (floating weight) was moved up and down so that the powder material, adhering to the wall surface between the material inlet of the pressure kneader and the kneading chamber of the kneader, was introduced into the kneading chamber, and then the mixture was further kneaded at a temperature of 150°C and a rotational speed of 50 rpm for 1 minute. Next, the ram (floating weight) was moved up and down again in the pressure kneader, and then the mixture was further kneaded for 3 minutes at a temperature of 150°C and a rotational speed of 50 rpm and discharged to obtain a diene-based rubber composition (63.28 g). As described above, a diene-based rubber composition in the form of containing no cross-linking agent was obtained.

Next, an open roll machine (roll size: diameter 1 inch × length 2 inches, number of rolls: 2) was used to knead 60.116 g of the diene-based rubber composition in the form of containing no cross-linking agent obtained as described above, 0.76 g of oil-treated sulfur (manufactured by Tsurumi Chemical Industry Co., Ltd. under the trade name of "GOLDEN FLOWER OIL TREATED SULFUR POWDER") as a cross-linking agent, 0.38 g of a sulfenamide-based accelerator (N-cyclohexyl-2-benzothiazylsulfenamide: manufactured by OUCHI SHINKO CHEMICAL INDUSTRIAL CO., LTD. under the trade name of "NOCCELER CZ") as a vulcanization accelerator, and 0.19 g of a guanidine-based accelerator (1,3-diphenylguanidine manufactured by OUCHI SHINKO CHEMICAL INDUSTRIAL CO., LTD. under the trade name of "NOCCELER D") as a vulcanization accelerator, thereby obtaining a diene-based rubber composition (unvulcanized) in the form of containing a cross-linking agent. Note that the conditions employed during kneading were conditions in which, under the room temperature (25°C) condition, the rotational speed of the rear roll was 10 rpm and the rotational ratio of the front and rear rolls (front:rear) was 1:1.1.

Next, 50 g of the diene-based rubber composition (unvulcanized) in the form of containing a cross-linking agent was used and subjected to press vulcanization (vulcanized while being press-molded) at 160°C for 30 minutes with a press molding machine (manufactured by DUMBBELL CO., LTD.), to thereby obtain a sheet-shaped cross-linked rubber composition (rubber sheet made of a cross-linked product of the diene-based rubber composition) having a length of 150 mm, a width of 150 mm, and a thickness of 2 mm.

(Examples 2 to 6 and Comparative Example 1)

A diene-based rubber composition was prepared in the same manner as in Example 1 except that, instead of using TPE-(I), Example 2 used TPE-(II), Example 3 used TPE-(III), Example 4 used TPE-(IV), Example 5 used TPE-(V), Example 6 used TPE-(VI), and Comparative Example 1 used TPE-(VII) being a comparative TPE containing no organically modified clay. Then, a sheet-shaped cross-linked rubber composition (rubber sheet) was prepared.

(Comparative Example 2)

A diene-based rubber composition was prepared in the same manner as in Example 1 except that polyethylene (manufactured by Japan Polyethylene Corporation under the trade name of "HJ590N") was used as a comparative component instead of using TPE-(I). Then, a sheet-shaped cross-linked rubber composition (rubber sheet) was prepared.

Regarding the components used in Examples 1 to 6 and Comparative Examples 1 and 2, Table 2 presents the mass ratio [unit: parts by mass] of the components contained in the diene-based rubber composition (unvulcanized) in the form containing a cross-linking agent. Note that the numerical value of the mass ratio of each component presented in Table 2 is a ratio when the content of the diene-based rubber is set to 100 parts by mass.

[Table 2]

| | | Example 1 | Example 2 | Example 3 | Example 4 | Example 5 | Example 6 | Comparative Example 1 | Comparative Example 2 |
|---|---|---|---|---|---|---|---|---|---|
| Diene-Based Rubber | SBR | 100 | 100 | 100 | 100 | 100 | 100 | 100 | 100 |
| TPE Composition (With Clay) | TPE-(I) | 10 | - | - | - | - | - | - | - |
| | TPE-(II) | - | 10 | - | - | - | - | - | - |
| | TPE-(III) | - | - | 10 | - | - | - | - | - |
| | TPE-(IV) | - | - | - | 10 | - | - | - | - |
| | TPE-(V) | - | - | - | - | 10 | - | - | - |
| | TPE-(VI) | - | - | - | - | - | 10 | - | - |
| Comparative Component (Without Clay) | TPE-(VII) | - | - | - | - | - | - | 10 | - |
| | Polyethylene | - | - | - | - | - | - | - | 10 |
| Powder Material | Silica | 40 | 40 | 40 | 40 | 40 | 40 | 40 | 40 |
| | Zinc Oxide | 3 | 3 | 3 | 3 | 3 | 3 | 3 | 3 |
| | Stearic Acid | 1 | 1 | 1 | 1 | 1 | 1 | 1 | 1 |
| | Anti-Aging Agent | 1 | 1 | 1 | 1 | 1 | 1 | 1 | 1 |
| Silane Coupling Agent | Trade Name "Si-69" | 3.2 | 3.2 | 3.2 | 3.2 | 3.2 | 3.2 | 3.2 | 3.2 |
| Cross-Linking Agent | Oil Treated Sulfur | 2 | 2 | 2 | 2 | 2 | 2 | 2 | 2 |
| Vulcanization Accelerator | Trade Name "NOCCELER CZ" | 1 | 1 | 1 | 1 | 1 | 1 | 1 | 1 |
| | Trade Name "NOCCELER D" | 0.5 | 0.5 | 0.5 | 0.5 | 0.5 | 0.5 | 0.5 | 0.5 |

[Measurement of Characteristics of Diene-Based Rubber Compositions Obtained in Examples 1 to 6 and Comparative Examples 1 and 2, and Cross-Linked Products Thereof]

<Measurement of Vulcanization Rate (t95)>

Diene-based rubber compositions (unvulcanized) in the form of containing a cross -linking agent were produced in the same manner as in the methods employed in Examples 1 to 6 and Comparative Examples 1 and 2. Next, using a rotorless rheometer (manufactured by Toyo Seiki Seisaku-sho, Ltd.), each of the diene-based rubber compositions (unvulcanized) in the form of containing a cross-linking agent was vulcanized at 160°C for 50 minutes to measure the relationship between time and torque and determine the maximum torque value, thereby obtaining a time required to reach a torque value of 95% of the maximum torque value (time to reach 95% of the maximum torque: t95 [unit: minutes]). The measured values of t95 thus obtained were employed as the vulcanization rates of the diene-based rubber compositions obtained in Examples 1 to 6 and Comparative Examples 1 and 2. Table 3 presents the obtained results.

<Measurement of Loss Tangent (tanδ) as Index Related to Viscoelasticity>

Each of the sheet-shaped cross-linked rubber compositions (rubber sheets) obtained in Examples 1 to 6 and Comparative Examples 1 and 2 was used to measure tanδ at 0°C and tanδ at 60°C in accordance with JIS K-6394 (published in 2007). Specifically, using a viscoelasticity measuring device (manufactured by UBM under the trade name of "REOGEL E-4000"), the rubber sheet was measured in accordance with JIS K 6394 by changing the measurement temperature from -10°C to 60°C under the conditions of strain: 20 μm (0.1%) and frequency: 10 Hz, to thereby obtain tanδ at 0°C [tanδ (0°C)] and tanδ at 60°C [tanδ (60°C)]. From the measured values, the balance between them (tanδ (0°C)/tanδ (60°C)) was determined. Table 3 presents the measurement results. Note that the values of tanδ (0°C) and tanδ (60°C) presented in Table 3 were relative values when the values of tanδ (0°C) and tanδ (60°C) of the sheet-shaped cross-linked rubber composition (rubber sheet) obtained in Comparative Example 1 were converted to 100. Note that, when a tire is manufactured, it can be said that the wet grip property is better as the value of tanδ is larger under the condition of a measurement temperature of 0°C, and it can be said that the fuel economy (rolling resistance) is better as the value of tanδ is smaller under the condition of a measurement temperature of 60°C.

<Measurement of 300 % Modulus and Rate of Change Thereof>

First, each of the sheet-shaped cross-linked rubber compositions (rubber sheets) obtained in Examples 1 to 6 and Comparative Examples 1 and 2 was used to prepare a No. 3 dumbbell-shaped test piece in accordance with JIS K6251 (published in 2010), and a tensile test was carried out at a tensile speed of 500 mm/min to measure the 300% modulus (M300) [MPa] . Note that this measurement was carried out using both the test pieces before and after the heat aging test described below. Then, the value of the 300% modulus of the test piece before the test of the heat aging test (300% Mod before the test) and the value of the 300% modulus of the test piece after the test (300% Mod after the test) were used to calculate the following formula:

$$[\text{rate of change }(\%)] = \{([M2] - [M1])/[M2]\} \times 100$$

(in the formula, the rate of change (%) indicates the rate of change in the value of 300% modulus, M1 indicates the value of the 300% modulus of the test piece before the heat aging test (before the test), and M2 indicates the value of the 300% modulus of the test piece after the heat aging test (after the test)),
to thereby obtain the absolute value of the rate of change of the value of 300% modulus (300% Mod). Table 3 presents the obtained results. Note that it can be determined that the smaller the absolute value of the rate of change of the 300% modulus, the better the heat aging resistance (heat resistance).

(Heat Aging Test)

The employed heat aging test (aging acceleration test for measuring heat aging resistance) was a test in which the No. 3 dumbbell-shaped test piece is put into a gear oven and heat-aged by being heating for 72 hours under the conditions of atmospheric gas: air and temperature: 120°C in accordance with JIS K6257 (published in 2010).

[Table 3]

| | | Comparative Example 1 | Comparative Example 2 | Example 1 | Example 2 | Example 3 | Example 4 | Example 5 | Example 6 |
|---|---|---|---|---|---|---|---|---|---|
| Vulcanization Rate (t95: [unit] min) | | 21.41 | 20.63 | 20.35 | 20.20 | 20.28 | 20.18 | 20.11 | 20.15 |
| Viscoelasticity | tanδ (0°C) | 100.00 | 101.29 | 103.88 | 104.55 | 103.28 | 105.17 | 103.33 | 104.55 |
| | tanδ (60°C) | 100.00 | 106.67 | 97.58 | 99.61 | 98.71 | 98.79 | 99.13 | 98.55 |
| | tanδ (0°C) / tanδ (60°C) | 100.00 | 94.96 | 106.46 | 104.96 | 104.63 | 106.46 | 104.24 | 106.09 |
| Heat Resistance | 300% Mod Before Test | 5.81 | 6.79 | 4.53 | 4.39 | 4.66 | 7.28 | 7.11 | 7.18 |
| | 300% Mod After Test | 14.01 | 16.7 | 10.10 | 10.23 | 10.34 | 14.62 | 14.33 | 14.50 |
| | Absolute Value of Rate of Change (%) of 300% Mod | 141.1 | 146.4 | 123.0 | 133.0 | 121.9 | 100.8 | 101.5 | 101.9 |

(Examples 7 to 12 and Comparative Examples 3 to 4)

Diene-based rubber compositions and sheet-shaped cross-linked rubber compositions (rubber sheets) were prepared by employing the same methods as those employed in Examples 1 to 6 and Comparative Examples 1 and 2 except that natural rubber (NR: STR-CV60, made in Thailand) at 40 g was used instead of SBR so as to obtain the compositions presented in Table 4, and the press vulcanization time was changed from 30 minutes to 15 minutes.

Regarding the components used in Examples 7 to 12 and Comparative Examples 3 to 4, Table 4 presents the mass ratio [unit: parts by mass] of the components contained in the diene-based rubber composition (unvulcanized) in the form containing a cross-linking agent. Note that Table 4 also presents, for reference, the mass ratio of the components contained in the diene-based rubber composition (unvulcanized) in the form containing the cross-linking agent obtained in Example 1. In addition, the numerical value of the mass ratio of each component presented in Table 4 is the ratio when the content of the diene-based rubber is set to 100 parts by mass.

[Table 4]

| | | Example 1 | Example 7 | Example 8 | Example 9 | Example 10 | Example 11 | Example 12 | Comparative Example 3 | Comparative Example 4 |
|---|---|---|---|---|---|---|---|---|---|---|
| Diene-Based Rubber | NR | - | 100 | 100 | 100 | 100 | 100 | 100 | 100 | 100 |
| | SBR | 100 | - | - | - | - | - | - | - | - |
| TPE Composition (With Clay) | TPE-(I) | 10 | 10 | - | - | - | - | - | - | - |
| | TPE-(II) | - | - | 10 | - | - | - | - | - | - |
| | TPE-(III) | - | - | - | 10 | - | - | - | - | - |
| | TPE-(IV) | - | - | - | - | 10 | - | - | - | - |
| | TPE-(V) | - | - | - | - | - | 10 | - | - | - |
| | TPE-(VI) | - | - | - | - | - | - | 10 | - | - |
| Comparative Component (Without Clay) | TPE-(VII) | - | - | - | - | - | - | - | 10 | - |
| | Polyethylene | - | - | - | - | - | - | - | - | 10 |
| Powder Material | Silica | 40 | 40 | 40 | 40 | 40 | 40 | 40 | 40 | 40 |
| | Zinc Oxide | 3 | 3 | 3 | 3 | 3 | 3 | 3 | 3 | 3 |
| | Stearic Acid | 1 | 1 | 1 | 1 | 1 | 1 | 1 | 1 | 1 |
| | Anti-Aging Agent | 1 | 1 | 1 | 1 | 1 | 1 | 1 | 1 | 1 |
| Silane Coupling Agent | Trade Name "Si-69" | 3.2 | 3.2 | 3.2 | 3.2 | 3.2 | 3.2 | 3.2 | 3.2 | 3.2 |
| Cross-Linking Agent | Oil Treated Sulfur | 2 | 2 | 2 | 2 | 2 | 2 | 2 | 2 | 2 |
| Vulcanization Accelerator | Trade Name "NOCCELER CZ" | 1 | 1 | 1 | 1 | 1 | 1 | 1 | 1 | 1 |
| | Trade Name "NOCCELER D" | 0.5 | 0.5 | 0.5 | 0.5 | 0.5 | 0.5 | 0.5 | 0.5 | 0.5 |

[Measurement of Characteristics of Diene-Based Rubber compositions Obtained in Examples 7 to 12 and Comparative Examples 3 and 4, and Cross-Linked Products Thereof]

For the diene-based rubber compositions obtained in Examples 7 to 12 and Comparative Examples 3 and 4, the vulcanization rate (t95) was measured by employing the same method as described above in <Measurement of Vulcanization Rate (t95)>. Table 5 presents the measurement results.

In addition, for the cross-linked rubber compositions (rubber sheets) obtained in Examples 7 to 12 and Comparative Examples 3 and 4, the same method as described above in <Measurement of Loss Tangent (tanδ) as Index Related to Viscoelasticity> was employed to obtain tanδ at 0°C [tanδ (0°C)] and tanδ at 60°C [tanδ (60°C)]. From the measured values, the balance between them (tanδ (0°C)/tanδ (60°C)) was determined. Table 5 presents the measured results. Note that the values of tanδ (0°C) and tanδ (60°C) presented in Table 5 were relative values when the values of tanδ (0°C) and tanδ (60°C) of the sheet-shaped cross-linked rubber composition (rubber sheet) obtained in Comparative Example 3 were converted to 100.

<Measurement of 200 % Modulus and Rate of Change Thereof>

The measurement was carried out by employing the same method as described above in <Measurement of 300% Modulus and Rate of Change Thereof> to determine the value of 200% modulus (200% Mod) before and after the heat aging test and the absolute value of the rate of change thereof except that, in the tensile test, 200% modulus (M200) [MPa] was measured instead of 300% modulus (M300) [MPa] (the rate of extending the test piece was changed from 300% to 200%). Table 5 presents the obtained results.

[Table 5]

| | | Comparative Example 3 | Comparative Example 4 | Example 7 | Example 8 | Example 9 | Example 10 | Example 11 | Example 12 |
|---|---|---|---|---|---|---|---|---|---|
| Vulcanization Rate (t95: [unit] min) | | 8.21 | 8.05 | 7.97 | 7.91 | 7.89 | 7.83 | 7.95 | 7.98 |
| Viscoelasticity | tanδ (0°C) | 100.00 | 100.99 | 107.43 | 103.88 | 104.11 | 102.97 | 103.68 | 102.99 |
| | tanδ (60°C) | 100.00 | 100.00 | 98.08 | 98.11 | 97.65 | 98.08 | 99.43 | 98.71 |
| | tanδ (0°C) / tanδ (60°C) | 100.00 | 100.99 | 109.53 | 105.88 | 106.62 | 104.99 | 104.27 | 104.34 |
| Heat Resistance | 200% Mod Before Test | 2.46 | 3.49 | 2.18 | 2.22 | 2.28 | 2.26 | 2.35 | 2.32 |
| | 200% Mod After Test | 3.05 | 2.84 | 1.82 | 1.92 | 1.99 | 1.97 | 2.69 | 2.67 |
| | Absolute Value of Rate of Change (%) of 200% Mod | 24.0 | 18.6 | 16.5 | 13.5 | 12.7 | 14.7 | 14.5 | 15.1 |

<On Diene-Based Rubber Compositions and the Like Obtained in Examples and Comparative Examples>

As is apparent from the results presented in Table 3 and Table 5, it was confirmed that, when the rubber compositions of the present invention containing a diene-based rubber, an elastomer component, and an organically modified clay (Examples 1 to 12: diene-based rubber compositions) were compared with the rubber compositions in the form of containing no organically modified clay (Comparative Examples 1 to 4: diene-based rubber compositions) having the same type of the diene-based rubber, the rubber compositions of the present invention (Examples 1 to 12: diene-based rubber compositions) had a faster cross-linking rate (vulcanization rate), and it was possible to further improve the productivity of rubber products. In addition, when similarly comparing compositions having the same type of diene-based rubber, it was revealed that the rubber compositions of the present invention (Examples 1 to 12: diene-based rubber compositions) had a larger value of tanδ (0°C) and a smaller value of tanδ (60°C), and had a higher balance between them (tanδ (0°C)/tanδ (60°C)) in comparison with the rubber compositions in the form of containing no organically modified clay (Comparative Examples 1 to 4: diene-based rubber compositions) . It was revealed that, from the above results, the rubber compositions of the present invention (Examples 1 to 12: diene-based rubber compositions) make it possible to produce tires that can exhibit wet grip properties and low fuel consumption (so-called rolling resistance) at a higher level in a well-balanced manner, and to further improve the productivity of such tires.

In addition, it was revealed that, from the results presented in table 3, the rubber compositions of the present invention containing a diene-based rubber, an elastomer component, and an organically modified clay (Examples 1 to 6: diene-based rubber compositions) had a smaller absolute value of the rate of change of 300% modulus than the rubber compositions in the form of containing no organically modified clay (Comparative Examples 1 and 2: diene-based rubber compositions), and the present invention (Examples 1 to 6) makes it possible to enhance the heat resistance (heat aging resistance) to higher levels (makes it possible to improve heat resistance). Similarly, from the results presented in Table 5, any of the rubber compositions of the present invention containing a diene-based rubber, an elastomer component, and an organically modified clay (Examples 7 to 12: diene-based rubber compositions) had a smaller absolute value of the change rate of 200% modulus than the rubber compositions in the form containing no organically modified clay (Comparative Examples 3 and 4: diene-based rubber compositions), and the present invention (Examples 7 to 12) makes it possible to enhance the heat resistance to higher levels (makes it possible to improve heat resistance).

Note that, as is apparent from the results presented in Tables 3 and 5, it was revealed that the rubber compositions of the present invention (Examples 1 to 12: diene-based rubber compositions) exhibit the characteristics as described above (in particular e.g. the cross-linking rate is fast and heat resistance can be further improved), and thus can be suitably applied to the production of various industrial rubber parts in addition to tires, and make it possible to further improve the productivity and heat aging resistance of such industrial rubber parts.

(Example 13)

First, as a component used for the preparation of a diene-based rubber composition, a powder material (total amount 17.1 g) was prepared made of a powder mixture containing 15 g of carbon black (manufactured by Tokai Carbon Co., Ltd. under the trade name of "N339"), 1.5 g of zinc oxide (3 types of zinc oxide manufactured by HAKUSUI TECH CO., LTD.) as a vulcanization acceleration aid, 0.3 g of stearic acid (manufactured by Nippon Fine Chemical Co., Ltd.) as a vulcanization acceleration aid, and 0.3 g of an anti-aging agent (manufactured by OUCHI SHINKO CHEMICAL INDUSTRIAL CO., LTD. under the trade name of "NOCRAC 6C").

Next, into a pressure kneader heated to 150°C (manufactured by Toyo Seiki Seisaku-sho, Ltd. under the trade name of "Labo Plastomill," capacity 100 mL), 30 g of ethylene propylene diene rubber as a diene-based rubber (manufactured by Mitsui Chemicals, Inc. under the trade name of "3092PM," hereinafter sometimes referred to as "EPDM") and 9 g of TPE- (VIII) were put and plasticized by kneading for 1 minute at a temperature of 150°C and a rotation speed of 30 rpm. After that, into the pressure kneader, 8.55 g of the powder material (half the amount of the powder material prepared in advance) and 9 g of a paraffin oil (manufactured by SK Lubricants under the trade name of "YUBASE8J") were further added, and the condition of the rotational speed was changed from 30 rpm to 50 ppm, followed by kneading at a temperature of 150 °C and a rotational speed of 50 rpm for 1 minute and 30 seconds. Then, 8.55 g of the powder material (the other half of the powder material prepared in advance) was further added, followed by kneading at a temperature of 150°C and a rotational speed of 50 rpm for 1 minute and 30 seconds to obtain a mixture. Next, the ram (floating weight) was moved up and down so that the powder material, adhering to the wall surface between the material inlet of the pressure kneader and the kneading chamber of the kneader, was introduced into the kneading chamber, and then the mixture was further kneaded at a temperature of 150°C and a rotational speed of 50 rpm for 1 minute. Next, the ram (floating weight) was moved up and down again in the pressure kneader, and then the mixture was further kneaded for 3 minutes at a temperature of 150 °C and a rotational speed of 50 rpm and discharged to obtain a diene-based rubber composition (65.1 g). As described above, a diene-based rubber composition in the form of containing no cross-linking agent was obtained.

Next, an open roll machine (roll size: diameter 1 inch × length 2 inches, number of rolls: 2) was used to knead 60.76 g of the diene-based rubber composition in the form of containing no cross-linking agent obtained as described above, 0.28 g of oil-treated sulfur (manufactured by Tsurumi Chemical Industry Co. , Ltd. under the trade name of "GOLDEN FLOWER OIL TREATED SULFUR POWDER") as a cross-linking agent, 0.56 g of thiuram-based accelerator (tetrakis(2-ethylhexyl) thiuram disulfide: manufactured by OUCHI SHINKO CHEMICAL INDUSTRIAL CO., LTD. under the trade name of "NOCCELER TOTN") as a vulcanization accelerator, 0.14 g of dithiocarbamate-based accelerator (zinc dibenzyldithiocarbamate: manufactured by OUCHI SHINKO CHEMICAL INDUSTRIAL CO., LTD. under the trade name "NOCCELER ZTC") as a vulcanization accelerator, and 0.42 g of sulfenamide-based accelerator (N-cyclohexyl-2-benzothiazylsulfenamide: manufactured by OUCHI SHINKO CHEMICAL INDUSTRIAL CO., LTD. under the trade name "NOCCELER CZ") as a vulcanization accelerator, thereby obtaining a diene-based rubber composition (unvulcanized) in the form of containing a cross-linking agent. Note that the conditions employed during kneading were conditions in which, under the room temperature (25°C) condition, the rotational speed of the rear roll was 10 rpm and the rotational ratio of the front and rear rolls (front:rear) was 1:1.1.

Next, 50 g of the diene-based rubber composition (unvulcanized) in the form of containing a cross-linking agent was used and subjected to press vulcanization (vulcanized while being press-molded) at 160°C for 35 minutes with a press molding machine (manufactured by DUMBBELL CO., LTD.), to thereby obtain a sheet-shaped cross-linked rubber composition (rubber sheet made of a cross-linked product of the diene-based rubber composition) having a length of 150 mm, a width of 150 mm, and a thickness of 1 mm.

(Example 14)

A diene-based rubber composition was prepared in the same manner as in Example 13 except that TPE- (IX) was used instead of using TPE-(VIII). Then, a sheet-shaped cross-linked rubber composition (rubber sheet) was prepared.

(Comparative Example 5)

A diene-based rubber composition was prepared in the same manner as in Example 13 except that TPE-(VIII) was not used. Then, a sheet-shaped cross-linked rubber composition (rubber sheet) was prepared.

(Comparative Examples 6 to 8)

Diene-based rubber compositions were prepared in the same manner as in Example 13 except that, instead of using TPE-(VIII), as comparative components, Comparative Example 6 used polyethylene (manufactured by Japan Polyethylene Corporation under the trade name of "HJ590N"), Comparative Example 7 used a commercially available thermoplastic elastomer (manufactured by ExxonMobil under the trade name of "Santoprene 121-50M100": containing no clay), and Comparative Example 8 used TPE-(X). Then, sheet-shaped cross-linked rubber compositions (rubber sheets) were prepared.

Regarding the components used in Examples 13 and 14 and Comparative Examples 5 to 8, Table 6 presents the mass ratio [unit: parts by mass] of the components contained in the diene-based rubber composition (unvulcanized) in the form containing a cross-linking agent. Note that the numerical value of the mass ratio of each component presented in Table 6 is a ratio when the content of the diene-based rubber is set to 100 parts by mass.

[Table 6]

| | | Example 13 | Example 14 | Comparative Example 5 | Comparative Example 6 | Comparative Example 7 | Comparative Example 8 |
|---|---|---|---|---|---|---|---|
| Diene-Based Rubber | EPDM | 100 | 100 | 100 | 100 | 100 | 100 |
| TPE Composition (With Clay) | TPE-(VIII) | 30 | - | - | - | - | - |
| | TPE-(IX) | - | 30 | - | - | - | - |
| Comparative Component (Without Clay) | TPE-(X) | - | - | - | - | - | 30 |
| | Polyethylene | - | - | - | 30 | - | - |
| | Santoprene | - | - | - | - | 30 | - |
| Powder Material | Carbon Black | 50 | 50 | 50 | 50 | 50 | 50 |
| | Zinc Oxide | 5 | 5 | 5 | 5 | 5 | 5 |
| | Stearic Acid | 1 | 1 | 1 | 1 | 1 | 1 |
| | Anti-Aging Agent | 1 | 1 | 1 | 1 | 1 | 1 |
| Additive | Paraffin Oil | 30 | 30 | 30 | 30 | 30 | 30 |
| Cross-Linking Agent | Oil Treated Sulfur | 1 | 1 | 1 | 1 | 1 | 1 |
| Vulcanization Accelerator | Trade Name "NOCCELER TOTN" | 2 | 2 | 2 | 2 | 2 | 2 |
| | Trade Name "NOCCELER ZTC" | 0.5 | 0.5 | 0.5 | 0.5 | 0.5 | 0.5 |
| | Trade Name "NOCCELER CZ" | 1.5 | 1.5 | 1.5 | 1.5 | 1.5 | 1.5 |

[Measurement of Characteristics of Diene-Based Rubber compositions Obtained in Examples 13 and 14 and Comparative Examples 5 to 8, and Cross-Linked Products Thereof]

For the diene-based rubber compositions obtained in Examples 13 and 14 and Comparative Examples 5 to 8, the vulcanization rate (t95) was measured by employing the same method as described above in <Measurement of Vulcanization Rate (t95)>. Table 7 presents the measurement results.

In addition, for the cross-linked rubber compositions (rubber sheets) obtained in Examples 13 and 14 and Comparative Examples 5 to 8, the same method as described above in <Measurement of Loss Tangent (tanδ) as Index Related to Viscoelasticity> was employed to obtain tanδ at 0°C [tanδ (0°C)] and tanδ at 60°C [tanδ (60°C)]. From the measured values, the balance between them (tanδ (0°C) /tanδ (60°C)) was determined. Table 7 presents the measured results. Note that the values of tanδ (0°C) and tanδ (60°C) presented in Table 7 were relative values when the values of tanδ (0°C) and tanδ (60°C) of the sheet-shaped cross-linked rubber composition (rubber sheet) obtained in Comparative Example 5 were converted to 100.

Moreover, for the cross-linked rubber compositions (rubber sheets) obtained in Examples 13 and 14 and Comparative Examples 5 to 8, the same method as described above in <Measurement of 300% Modulus and Rate of Change Thereof > was employed to measure 300% modulus [MPa] before and after the heat aging test, thereby determining the absolute value of the rate of change of the value of 300% modulus (300% Mod). Table 7 presents the obtained results.

[Table 7]

| | | Example 13 | Example 14 | Comparative Example 5 | Comparative Example 6 | Comparative Example 7 | Comparative Example 8 |
|---|---|---|---|---|---|---|---|
| Vulcanization Rate (t95: [unit] min) | | 13.56 | 13.22 | 14.55 | 14.98 | 14.68 | 14.68 |
| Viscoelasticity | tanδ (0°C) | 104.61 | 104.46 | 100.00 | 101.51 | 98.77 | 101.12 |
| | tanδ (60°C) | 97.76 | 98.80 | 100.00 | 99.98 | 99.89 | 102.35 |
| | tanδ (0°C) / tanδ (60°C) | 107.01 | 105.73 | 100.00 | 101.53 | 98.88 | 98.80 |
| Heat Resistance | 300% Mod Before Test | 5.15 | 3.03 | 6.61 | 6.77 | 6.7 | 2.86 |
| | 300% Mod After Test | 8.54 | 5.04 | 11.34 | 12.47 | 11.69 | 4.89 |
| | Absolute Value of Rate of Change (%) of 300% Mod | 66 | 66.3 | 72 | 84 | 74.5 | 71.0 |

(Example 15)

First, as a component used for the preparation of a diene-based rubber composition, a powder material (total amount 17.1 g) was prepared made of a powder mixture containing 15 g of carbon black (manufactured by Tokai Carbon Co., Ltd. under the trade name of "N339"), 1.5 g of zinc oxide (3 types of zinc oxide manufactured by HAKUSUI TECH CO., LTD.) as a vulcanization acceleration aid, 0.3 g of stearic acid (manufactured by Nippon Fine Chemical Co., Ltd.) as a vulcanization acceleration aid, and 0.3 g of an anti-aging agent (manufactured by OUCHI SHINKO CHEMICAL INDUSTRIAL CO., LTD. under the trade name of "NOCRAC 6C").

Next, into a pressure kneader heated to 150°C (manufactured by Toyo Seiki Seisaku-sho, Ltd. under the trade name of "Labo Plastomill," capacity 100 mL), 30 g of ethylene propylene diene rubber as a diene-based rubber (manufactured by Mitsui Chemicals, Inc. under the trade name of "3092PM," hereinafter sometimes referred to as "EPDM") and 9 g of TPE- (VIII) were put and plasticized by kneading for 1 minute at a temperature of 150°C and a rotation speed of 30 rpm. After that, into the pressure kneader, 8.55 g of the powder material (half the amount of the powder material prepared in advance) and 9 g of a paraffin oil (manufactured by SK Lubricants under the trade name of "YUBASE8J") were further added, and the condition of the rotational speed was changed from 30 rpm to 50 ppm, followed by kneading at a temperature of 150°C and a rotational speed of 50 rpm for 1 minute and 30 seconds. Then, 8.55 g of the powder material (the other half of the powder material prepared in advance) was further added, followed by kneading at a temperature of 150°C and a rotational speed of 50 rpm for 1 minute and 30 seconds to obtain a mixture. Next, the ram (floating weight) was moved up and down so that the powder material, adhering to the wall surface between the material inlet of the pressure kneader and the kneading chamber of the kneader, was introduced into the kneading chamber, and then the mixture was further kneaded at a temperature of 150°C and a rotational speed of 50 rpm for 1 minute. Next, the ram (floating weight) was moved up and down again in the pressure kneader, and then the mixture was further kneaded for 3 minutes at a temperature of 150°C and a rotational speed of 50 rpm and discharged to obtain a diene-based rubber composition (65.1 g). As described above, a diene-based rubber composition in the form of containing no cross-linking agent was obtained.

Next, an open roll machine (roll size: diameter 1 inch × length 2 inches, number of rolls: 2) was used to knead 60.76 g of the diene-based rubber composition in the form of containing no cross-linking agent obtained as described above, and 2.28 g of dicumyl peroxide (manufactured by NOF Corporation under the trade name "PERCUMYL D-40") as a cross-linking agent, thereby obtaining a diene-based rubber composition (unvulcanized) in the form of containing a cross-linking agent . Note that the conditions employed during kneading were conditions in which, under the room temperature (25°C) condition, the rotational speed of the rear roll was 10 rpm and the rotational ratio of the front and rear rolls (front:rear) was 1:1.1.

Next, 50 g of the diene-based rubber composition (unvulcanized) in the form of containing a cross-linking agent was used and subjected to press vulcanization (vulcanized while being press-molded) at 160°C for 50 minutes with a press molding machine (manufactured by DUMBBELL CO., LTD.), to thereby obtain a sheet-shaped cross-linked rubber composition (rubber sheet made of a cross-linked product of the diene-based rubber composition) having a length of 150 mm, a width of 150 mm, and a thickness of 1 mm.

(Comparative Example 9)

A diene-based rubber composition was prepared in the same manner as in Example 15 except that, as a comparative component, a commercially available styrenic thermoplastic elastomer (manufactured by Mitsubishi Chemical Corporation under the trade name of "RABALON T320C," TPS, hardness Hsl5 (JIS-A hardness): containing no clay) was used instead of using TPE-(VIII). Then, a sheet-shaped cross-linked rubber composition (rubber sheet) was prepared.

Regarding the components used in Example 15 and Comparative Example 9, Table 8 presents the mass ratio [unit: parts by mass] of the components contained in the diene-based rubber composition (unvulcanized) in the form containing a cross-linking agent. Note that the numerical value of the mass ratio of each component presented in Table 8 is a ratio when the content of the diene-based rubber is set to 100 parts by mass.

[Table 8]

| | | Example 15 | Comparative Example 9 |
|---|---|---|---|
| Diene-Based Rubber | EPDM | 100 | 100 |
| TPE Composition (With Clay) | TPE-(VIII) | 30 | - |
| Comparative Component (Without Clay) | Styrenic Thermoplastic Elastomer [TPS: Hardness Hs15 (JIS-A)] | - | 30 |

(continued)

| | | Example 15 | Comparative Example 9 |
|---|---|---|---|
| Powder Material | Carbon Black | 50 | 50 |
| | Zinc Oxide | 5 | 5 |
| | Stearic Acid | 1 | 1 |
| | Anti-Aging Agent | 1 | 1 |
| Additive | Paraffin Oil | 30 | 30 |
| Cross-Linking Agent | Dicumyl Peroxide (Purity 40%) | 8.15 | 8.15 |

[Measurement of Characteristics of Diene-Based Rubber compositions Obtained in Example 15 and Comparative Example 9, and Cross-Linked Products Thereof]

For the diene-based rubber compositions obtained in Example 15 and Comparative Example 9, the vulcanization rate (t95) was measured by employing the same method as described above in <Measurement of Vulcanization Rate (t95)>. Table 9 presents the measurement results.

In addition, for the cross-linked rubber compositions (rubber sheets) obtained in Example 15 and Comparative Example 9, the same method as described above in <Measurement of Loss Tangent (tanδ) as Index Related to Viscoelasticity> was employed to obtain tanδ at 0°C [tanδ (0°C)] and tanδ at 60°C [tanδ (60°C)]. From the measured values, the balance between them (tanδ(0°C) /tanδ (60°C)) was determined. Table 9 presents the measured results. Note that the values of tanδ (0°C) and tanδ (60°C)presented in Table 9 were relative values when the values of tanδ (0°C) and tanδ (60°C) of the sheet-shaped cross-linked rubber composition (rubber sheet) obtained in Comparative Example 9 were converted to 100.

Moreover, for the cross-linked rubber compositions (rubber sheets) obtained in Example 15 and Comparative Example 9, the same method as described above in <Measurement of 300% Modulus and Rate of Change Thereof> was employed to measure 300% modulus [MPa] before and after the heat aging test, thereby determining the absolute value of the rate of change of the value of 300% modulus (300% Mod). Table 9 presents the obtained results.

[Table 9]

| | | Example 15 | Comparative Example 9 |
|---|---|---|---|
| Vulcanization Rate (t95: [unit] min) | | 13.78 | 15.02 |
| Viscoelasticity | tanδ (0°C) | 105.54 | 100.00 |
| | tanδ (60°C) | 96.78 | 100.00 |
| | tanδ (0°C) / tanδ (60°C) | 109.05 | 100.00 |
| Heat Resistance | 300% Mod Before Test | 4.95 | 5.61 |
| | 300% Mod After Test | 4.87 | 5.88 |
| | Absolute Value of Rate of Change (%) of 300% Mod | 2 | 4.8 |

(Example 16)

First, as a component used for the preparation of a diene-based rubber composition, a powder material (total amount 17.1 g) was prepared made of a powder mixture containing 15 g of carbon black (manufactured by Tokai Carbon Co., Ltd. under the trade name of "N339"), 1.5 g of zinc oxide (3 types of zinc oxide manufactured by HAKUSUI TECH CO., LTD.) as a vulcanization acceleration aid, 0.3 g of stearic acid (manufactured by Nippon Fine Chemical Co., Ltd.) as a vulcanization acceleration aid, and 0.3 g of an anti-aging agent (manufactured by OUCHI SHINKO CHEMICAL INDUSTRIAL CO., LTD. under the trade name of "NOCRAC 6C").

Next, into a pressure kneader heated to 150°C (manufactured by Toyo Seiki Seisaku-sho, Ltd. under the trade name of "Labo Plastomill," capacity 100 mL), 30 g of chloroprene rubber as a diene-based rubber (manufactured by Denka Company Limited under the trade name of "M-40, " hereinafter sometimes referred to as "CR") and 9 g of TPE-(VIII) were put and plasticized by kneading for 1 minute at a temperature of 150°C and a rotation speed of 30 rpm. After that,

into the pressure kneader, 8.55 g of the powder material (half the amount of the powder material prepared in advance) and 3 g of a paraffin oil (manufactured by SK Lubricants under the trade name of "YUBASE8J") were further added, and the condition of the rotational speed was changed from 30 rpm to 50 ppm, followed by kneading at a temperature of 150°C and a rotational speed of 50 rpm for 1 minute and 30 seconds. Then, 8.55 g of the powder material (the other half of the powder material prepared in advance) was further added, followed by kneading at a temperature of 150°C and a rotational speed of 50 rpm for 1 minute and 30 seconds to obtain a mixture. Next, the ram (floating weight) was moved up and down so that the powder material, adhering to the wall surface between the material inlet of the pressure kneader and the kneading chamber of the kneader, was introduced into the kneading chamber, and then the mixture was further kneaded at a temperature of 150°C and a rotational speed of 50 rpm for 1 minute. Next, the ram (floating weight) was moved up and down again in the pressure kneader, and then the mixture was further kneaded for 3 minutes at a temperature of 150°C and a rotational speed of 50 rpm and discharged to obtain a diene-based rubber composition (59.1 g). As described above, a diene-based rubber composition in the form of containing no cross-linking agent was obtained.

Next, an open roll machine (roll size: diameter 1 inch × length 2 inches, number of rolls: 2) was used to knead 56.1 g of the diene-based rubber composition in the form of containing no cross-linking agent obtained as described above, 1.14 g of magnesium oxide as a cross-linking agent, and 0.28 g of 2-imidazoline-2-thiol as a vulcanization accelerator (ETU, manufactured by SANSHIN CHEMICAL INDUSTRY CO., LTD. under the trade name "Sanceler 22C-ETU"), thereby obtaining a diene-based rubber composition (unvulcanized) in the form of containing a cross-linking agent. Note that the conditions employed during kneading were conditions in which, under the room temperature (25°C) condition, the rotational speed of the rear roll was 10 rpm and the rotational ratio of the front and rear rolls (front:rear) was 1:1.1.

Next, 50 g of the diene-based rubber composition (unvulcanized) in the form of containing a cross-linking agent was used and subjected to press vulcanization (vulcanized while being press-molded) at 160°C for 20 minutes with a press molding machine (manufactured by DUMBBELL CO., LTD.), to thereby obtain a sheet-shaped cross-linked rubber composition (rubber sheet made of a cross-linked product of the diene-based rubber composition) having a length of 150 mm, a width of 150 mm, and a thickness of 1 mm.

(Comparative Example 10)

A diene-based rubber composition was prepared in the same manner as in Example 16 except that, as a comparative component, a polyethylene (manufactured by Japan Polyethylene Corporation under the trade name of "HJ590N" ) was used instead of using TPE-(VIII). Then, a sheet-shaped cross-linked rubber composition (rubber sheet) was prepared.

Regarding the components used in Example 16 and Comparative Example 10, Table 10 presents the mass ratio [unit: parts by mass] of the components contained in the diene-based rubber composition (unvulcanized) in the form containing a cross-linking agent. Note that the numerical value of the mass ratio of each component presented in Table 10 is a ratio when the content of the diene-based rubber is set to 100 parts by mass.

[Table 10]

| | | Example 16 | Comparative Example 10 |
|---|---|---|---|
| Diene-Based Rubber | CR | 100 | 100 |
| TPE Composition (With Clay) | TPE-(VIII) | 30 | - |
| Comparative Component (Without Clay) | Polyethylene | - | 30 |
| Powder Material | Carbon Black | 50 | 50 |
| | Zinc Oxide | 5 | 5 |
| | Stearic Acid | 1 | 1 |
| | Anti-Aging Agent | 1 | 1 |
| Additive | Paraffin Oil | 10 | 10 |
| Cross-Linking Agent | Magnesium Oxide | 4 | 4 |
| Cross-Linking Accelerator | 2-Imidazoline-2-Thiol | 1 | 1 |

[Measurement of Characteristics of Diene-Based Rubber compositions Obtained in Example 16 and Comparative Example 10, and Cross-Linked Products Thereof]

For the diene-based rubber compositions obtained in Example 16 and Comparative Example 10, the vulcanization rate (t95) was measured by employing the same method as described above in <Measurement of Vulcanization Rate (t95)>. Table 11 presents the measurement results.

In addition, for the cross-linked rubber compositions (rubber sheets) obtained in Example 16 and Comparative Example 10, the same method as described above in <Measurement of Loss Tangent (tanδ) as Index Related to Viscoelasticity> was employed to obtain tanδ at 0°C [tanδ (0°C)] and tanδ at 60°C [tanδ (60°C)]. From the measured values, the balance between them (tanδ(0°C) /tanδ (60°C)) was determined. Table 11 presents the measured results. Note that the values of tanδ (0°C) and tanδ (60°C) presented in Table 11 were relative values when the values of tanδ (0°C) and tanδ (60°C) of the sheet-shaped cross-linked rubber composition (rubber sheet) obtained in Comparative Example 10 were converted to 100.

Moreover, for the cross-linked rubber compositions (rubber sheets) obtained in Example 16 and Comparative Example 10, the same method as described above in <Measurement of 300% Modulus and Rate of Change Thereof> was employed to measure 300% modulus [MPa] before and after the heat aging test, thereby determining the absolute value of the rate of change of the value of 300% modulus (300% Mod). Table 11 presents the obtained results.

[Table 11]

| | | Example 16 | Comparative Example 10 |
|---|---|---|---|
| Vulcanization Rate (t95: [unit] min) | | 13.34 | 15.98 |
| Viscoelasticity | tanδ (0°C) | 103.46 | 100.00 |
| | tanδ (60°C) | 98.87 | 100.00 |
| | tanδ (0°C) / tanδ (60°C) | 104.64 | 100.00 |
| Heat Resistance | 300% Mod Before Test | 9.88 | 12.8 |
| | 300% Mod After Test | 9.96 | 14.5 |
| | Absolute Value of Rate of Change (%) of 300% Mod | 1 | 13 |

<On Diene-Based Rubber Compositions and the Like Obtained in Examples 13 to 16 and Comparative Examples 5 to 10>

As is apparent from the results presented in Table 7, Table 9, and Table 11, it was confirmed that, when the rubber compositions of the present invention containing a diene-based rubber, an elastomer component, and an organically modified clay (Examples 13 to 16: diene-based rubber compositions) were compared with the rubber compositions in the form of containing no organically modified clay (Comparative Examples 5 to 10: diene-based rubber compositions) having common component compositions except for TPE composition containing organically modified clay (with clay) and comparative component (without clay) (when Examples 13 and 14 were compared with Comparative Examples 5 to 8, Example 15 with Comparative Example 9, and Example 16 with Comparative Example 10), the rubber compositions of the present invention (Examples 13 to 16: diene-based rubber compositions) had a faster cross-linking rate (vulcanization rate), and it was possible to further improve the productivity of rubber products. In addition, when similarly comparing compositions having common component compositions except for TPE composition containing organically modified clay (with clay) and comparative component (without clay), it was revealed that the rubber compositions of the present invention (Examples 13 to 16: diene-based rubber compositions) had a larger value of tanδ (0°C) and a smaller value of tanδ (60°C), and had a higher balance between them (tanδ(0°C) /tanδ (60°C)) in comparison with the rubber compositions in the form of containing no organically modified clay (Comparative Examples 5 to 10: diene-based rubber compositions). It was revealed that, from the above results, the rubber compositions of the present invention (Examples 13 to 16: diene-based rubber compositions) make it possible to produce tires that can exhibit wet grip properties and low fuel consumption (so-called rolling resistance) at a higher level in a well-balanced manner, and to further improve the productivity of such tires. Moreover, when comparing compositions having common component compositions except for TPE composition containing organically modified clay (with clay) and comparative component (without clay), it was revealed that the rubber compositions of the present invention (Examples 13 to 16: diene-based rubber compositions) had a smaller rate of change of 300% modulus than the comparative rubber compositions (Comparative Examples 5 to 10: diene-based rubber composition), and the present invention (Examples 13 to 16) makes it possible to enhance the heat resistance to higher levels (makes it possible to improve heat resistance).

Note that, as is apparent from the results presented in Table 7, Table 9, and Table 11, it was revealed that the

rubber compositions of the present invention (Examples 13 to 16: diene-based rubber compositions) exhibit the characteristics as described above (in particular e. g. the cross-linking rate is fast and heat resistance can be further improved), and thus can be suitably applied to the production of various industrial rubber parts in addition to tires, and make it possible to further improve the productivity and heat aging resistance of such industrial rubber parts.

(Example 17)

A diene-based rubber composition was prepared in the same manner as in Example 15 except that 9 g of TPC-(XI) was used instead of using TPE-(VIII). Then, a sheet-shaped cross-linked rubber composition (rubber sheet) was prepared.

(Example 18)

A diene-based rubber composition was prepared in the same manner as in Example 15 except that 9 g of TPC-(XII) was used instead of using TPE-(VIII). Then, a sheet-shaped cross-linked rubber composition (rubber sheet) was prepared.

Regarding the components used in Examples 17 and 18, Table 12 presents the mass ratio [unit: parts by mass] of the components contained in the diene-based rubber composition (unvulcanized) in the form containing a cross-linking agent. Note that the numerical value of the mass ratio of each component presented in Table 12 is a ratio when the content of the diene-based rubber is set to 100 parts by mass. Note that, for reference, Table 12 also presents the composition of the diene-based rubber composition obtained in Comparative Example 9.

[Table 12]

| | | Example 17 | Example 18 | Comparative Example 9 |
|---|---|---|---|---|
| Diene-Based Rubber | EPDM | 100 | 100 | 100 |
| TPC Composition (With Clay) | TPC-(XI) | 30 | - | - |
| | TPC-(XII) | - | 30 | - |
| Comparative Component (Without Clay) | Styrenic Thermoplastic Elastomer [TPS: Hardness Hs15 (JIS-A)] | - | - | 30 |
| Powder Material | Carbon Black | 50 | 50 | 50 |
| | Zinc Oxide | 5 | 5 | 5 |
| | Stearic Acid | 1 | 1 | 1 |
| | Anti-Aging Agent | 1 | 1 | 1 |
| Additive | Paraffin Oil | 30 | 30 | 30 |
| Cross-Linking Agent | Dicumyl Peroxide (Purity 40%) | 8.15 | 8.15 | 8.15 |

[Measurement of Characteristics of Diene-Based Rubber compositions Obtained in Examples 17 and 18, and Cross-Linked Products Thereof]

For the diene-based rubber compositions obtained in Examples 17 and 18, the vulcanization rate (t95) was measured by employing the same method as described above in <Measurement of Vulcanization Rate (t95)>. Table 13 presents the measurement results.

In addition, for the cross-linked rubber compositions (rubber sheets) obtained in Examples 17 and 18, the same method as described above in <Measurement of Loss Tangent (tanδ) as Index Related to Viscoelasticity> was employed to obtain tanδ at 0°C [tanδ (0°C)] and tanδ at 60°C [tanδ (60°C)]. From the measured values, the balance between them (tanδ(0°C) /tanδ (60°C)) was determined. Table 13 presents the measured results. Note that the values of tanδ (0°C) and tanδ (60°C) presented in Table 13 were relative values when the values of tanδ (0°C) and tanδ (60°C) of the sheet-shaped cross-linked rubber composition (rubber sheet) obtained in Comparative Example 9 were converted to 100.

Moreover, for the cross-linked rubber compositions (rubber sheets) obtained in Examples 17 and 18, the same method as described above in <Measurement of 300% Modulus and Rate of Change Thereof> was employed to measure 300% modulus [MPa] before and after the heat aging test, thereby determining the absolute value of the rate of change

of the value of 300% modulus (300% Mod). Table 13 presents the obtained results. Note that Table 13 also presents the measurement results of the cross-linked rubber composition obtained in Comparative Example 9.

[Table 13]

| | | Example 17 | Example 18 | Comparative Example 9 |
|---|---|---|---|---|
| Vulcanization Rate (t95: [unit] min) | | 13.59 | 13.47 | 15.02 |
| Viscoelasticity | tanδ (0°C) | 102.8 | 103.5 | 100.00 |
| | tanδ (60°C) | 99.1 | 98.7 | 100.00 |
| | tanδ (0°C) / tanδ (60°C) | 103.73 | 104.86 | 100.00 |
| Heat Resistance | 300% Mod Before Test | 9.98 | 8.92 | 5.61 |
| | 300% Mod After Test | 10.3 | 8.99 | 5.88 |
| | Absolute Value of Rate of Change (%) of 300% Mod | 3.2 | 0.8 | 4.8 |

(Example 19)

First, as a component used for the preparation of a diene-based rubber composition, a powder material (total amount 17.4 g) was prepared made of a powder mixture containing 15 g of carbon black (manufactured by Tokai Carbon Co., Ltd. under the trade name of "N339"), 1.5 g of zinc oxide (3 types of zinc oxide manufactured by HAKUSUI TECH CO., LTD.) as a vulcanization acceleration aid, 0.6 g of stearic acid (manufactured by Nippon Fine Chemical Co., Ltd.) as a vulcanization acceleration aid, and 0.3 g of an anti-aging agent (manufactured by OUCHI SHINKO CHEMICAL INDUSTRIAL CO., LTD. under the trade name of "NOCRAC 6C").

Next, into a pressure kneader heated to 150°C (manufactured by Toyo Seiki Seisaku-sho, Ltd. under the trade name of "Labo Plastomill," capacity 100 mL), 30 g of butyl rubber as a diene-based rubber (manufactured by JSR Corporation under the trade name of "JSR365," hereinafter sometimes referred to as "IIR") and 9 g of TPE-(VIII) were put and plasticized by kneading for 1 minute at a temperature of 150°C and a rotation speed of 30 rpm. After that, into the pressure kneader, 8.7 g of the powder material (half the amount of the powder material prepared in advance) and 1.5 g of a naphthene oil (manufactured by JXTG Nippon Oil & Energy Corporation under the trade name of "SNH220") were further added, and the condition of the rotational speed was changed from 30 rpm to 50 ppm, followed by kneading at a temperature of 150°C and a rotational speed of 50 rpm for 1 minute and 30 seconds. Then, 8.7 g of the powder material (the other half of the powder material prepared in advance) was further added, followed by kneading at a temperature of 150°C and a rotational speed of 50 rpm for 1 minute and 30 seconds. Next, the ram (floating weight) was moved up and down so that the powder material, adhering to the wall surface between the material inlet of the pressure kneader and the kneading chamber of the kneader, was introduced into the kneading chamber, and then the mixture in the pressure kneader was further kneaded at a temperature of 150°C and a rotational speed of 50 rpm for 1 minute . Next, the ram (floating weight) was moved up and down again in the pressure kneader, and then the mixture was further kneaded for 3 minutes at a temperature of 150°C and a rotational speed of 50 rpm and discharged to obtain a diene-based rubber composition (57.9 g). As described above, a diene-based rubber composition in the form of containing no cross-linking agent was obtained.

Next, an open roll machine (roll size: diameter 1 inch × length 2 inches, number of rolls: 2) was used to knead 55.3 g of the diene-based rubber composition in the form of containing no cross-linking agent obtained as described above, and 3.44 g of brominated alkylphenol-formaldehyde resin (trade name "TACKIROL 250-I" manufactured by Taoka Chemical Co., Ltd.) as a cross-linking agent, thereby obtaining a diene-based rubber composition (unvulcanized) in the form of containing a cross-linking agent. Note that the conditions employed during kneading were conditions in which, under the room temperature (25°C) condition, the rotational speed of the rear roll was 10 rpm and the rotational ratio of the front and rear rolls (front:rear) was 1:1.1.

Next, 40 g of the diene-based rubber composition (unvulcanized) in the form of containing a cross-linking agent was used and subjected to press vulcanization (vulcanized while being press-molded) at 160°C for 40 minutes with a press molding machine (manufactured by DUMBBELL CO., LTD.), to thereby obtain a sheet-shaped cross-linked rubber composition (rubber sheet made of a cross-linked product of the diene-based rubber composition) having a length of 150 mm, a width of 150 mm, and a thickness of 1 mm.

(Comparative Example 11)

A diene-based rubber composition was prepared in the same manner as in Example 19 except that TPE-(VIII) was not used. Then, a sheet-shaped cross-linked rubber composition (rubber sheet) was prepared.

(Comparative Examples 12 to 14)

Diene-based rubber compositions were prepared in the same manner as in Example 19 except that, instead of using TPE-(VIII), as comparative components, Comparative Example 12 used polyethylene (manufactured by Japan Polyethylene Corporation under the trade name of "HJ590N") , Comparative Example 13 used a commercially available thermoplastic elastomer (manufactured by ExxonMobil under the trade name of "Santoprene 121-50M100": containing no clay), and Comparative Example 14 used a commercially available styrenic thermoplastic elastomer (manufactured by Mitsubishi Chemical Corporation under the trade name of "RABALON T320C," TPS, hardness Hsl5 (JIS-A hardness) : containing no clay). Then, sheet-shaped cross-linked rubber compositions (rubber sheets) were prepared.

Regarding the components used in Example 19 and Comparative Examples 11 to 14, Table 14 presents the mass ratio [unit: parts by mass] of the components contained in the diene-based rubber composition (unvulcanized) in the form containing a cross-linking agent. Note that the numerical value of the mass ratio of each component presented in Table 14 is a ratio when the content of the diene-based rubber is set to 100 parts by mass.

[Table 14]

| | | Example 19 | Comparative Example 11 | Comparative Example 12 | Comparative Example 13 | Comparative Example 14 |
|---|---|---|---|---|---|---|
| Diene-Based Rubber | Butyl Rubber (IIR) | 100 | 100 | 100 | 100 | 100 |
| TPE Composition (With Clay) | TPE-(VIII) | 30 | - | - | - | - |
| Comparative Component (Without Clay) | Polyethylene | - | - | 30 | - | - |
| | Santoprene | - | - | - | 30 | - |
| | Styrenic Thermoplastic Elastomer [TPS: Hardness Hs15 (JIS-A)] | - | - | - | - | 30 |
| Powder Material | Carbon Black | 50 | 50 | 50 | 50 | 50 |
| | Zinc Oxide | 5 | 5 | 5 | 5 | 5 |
| | Stearic Acid | 2 | 2 | 2 | 2 | 2 |
| | Anti-Aging Agent | 1 | 1 | 1 | 1 | 1 |
| Additive | Naphthene Oil | 5 | 5 | 5 | 5 | 5 |
| Cross-Linking Agent | Brominated Alkylphenol Resin | 12 | 12 | 12 | 12 | 12 |

[Measurement of Characteristics of Diene-Based Rubber compositions Obtained in Example 19 and Comparative Examples 11 to 14, and Cross-Linked Products Thereof]

For the diene-based rubber compositions obtained in Example 19 and Comparative Examples 11 to 14, the vulcanization rate (t95) was measured by employing the same method as described above in <Measurement of Vulcanization Rate (t95)>. Table 15 presents the measurement results.

In addition, for the cross-linked rubber compositions (rubber sheets) obtained in Example 19 and Comparative Examples 11 to 14, the same method as described above in <Measurement of Loss Tangent (tanδ) as Index Related to Viscoelasticity> was employed to obtain tanδ at 0°C [tanδ (0°C)] and tanδ at 60°C [tanδ (60°C)] . From the measured values, the balance between them (tanδ (0°C)/tanδ (60°C)) was determined. Table 15 presents the measured results.

Note that the values of tanδ (0°C) and tanδ (60°C) presented in Table 15 were relative values when the values of tanδ (0°C) and tanδ (60°C) of the sheet-shaped cross-linked rubber composition (rubber sheet) obtained in Comparative Example 11 were converted to 100.

Moreover, for the cross-linked rubber compositions (rubber sheets) obtained in Example 19 and Comparative Examples 11 to 14, the same method as described above in <Measurement of 300% Modulus and Rate of Change Thereof> was employed to measure 300% modulus [MPa] before and after the heat aging test, thereby determining the absolute value of the rate of change of the value of 300% modulus (300% Mod). Table 15 presents the obtained results.

[Table 15]

| | | Example 19 | Comparative Example 11 | Comparative Example 12 | Comparative Example 13 | Comparative Example 14 |
|---|---|---|---|---|---|---|
| Vulcanization Rate (t95: [unit] min) | | 33.5 | 38.9 | 37.5 | 39.1 | 38.8 |
| Viscoelasticity | tanδ (0°C) | 122.5 | 100.0 | 108.10 | 106.6 | 103.5 |
| | tanδ (60°C) | 94.3 | 100.0 | 102.40 | 101.2 | 100.2 |
| | tanδ (0°C) / tanδ (60°C) | 129.9 | 100.0 | 105.6 | 105.3 | 103.3 |
| Heat Resistance | 300% Mod Before Test | 4.35 | 4.22 | 4.28 | 4.26 | 4.16 |
| | 300% Mod After Test | 4.21 | 3.85 | 3.91 | 3.88 | 3.76 |
| | Absolute Value of Rate of Change (%) of 300% Mod | 3.2 | 8.8 | 8.6 | 8.9 | 9.6 |

<On Diene-Based Rubber Compositions and the Like Obtained in Examples 17 to 19 and Comparative Examples 9 and 11 to 14>

As is apparent from the results presented in Table 13 and Table 15, it was confirmed that, when the rubber compositions of the present invention containing a diene-based rubber, a polymer component (in Example 19, an elastomer component suitable as a polymer component), and an organically modified clay (Examples 17 to 19: diene-based rubber compositions) were compared with the rubber compositions in the form of containing no organically modified clay (Comparative Example 9 and Comparative Examples 11 to 14: diene-based rubber compositions) having common component compositions except for TPE composition containing organically modified clay (with clay), TPC composition containing organically modified clay (with clay), and comparative component (without clay) (when Examples 17 and 18 were compared with Comparative Example 9, and Example 19 with Comparative Examples 11 to 14), any of the rubber compositions of the present invention (Examples 17 to 19: diene-based rubber compositions) had a faster cross-linking rate (vulcanization rate), and it was possible to further improve the productivity of rubber products. In addition, when similarly comparing compositions having common component compositions except for TPE composition containing organically modified clay (with clay), TPC composition containing organically modified clay (with clay), and comparative component (without clay), it was revealed that the rubber compositions of the present invention (Examples 17 to 19: diene-based rubber compositions) had a larger value of tanδ (0°C) and a smaller value of tanδ (60°C), and had a higher balance between them (tanδ(0°C) /tanδ (60°C)) in comparison with the rubber compositions in the form of containing no organically modified clay (Comparative Example 9 and Comparative Examples 11 to 14: diene-based rubber compositions). It was revealed that, from the above results, the rubber compositions of the present invention (Examples 17 to 19: diene-based rubber compositions) make it possible to produce tires that can exhibit wet grip properties and low fuel consumption (so-called rolling resistance) at a higher level in a well-balanced manner, and to further improve the productivity of such tires. Moreover, when comparing compositions having common component compositions except for TPE composition containing organically modified clay (with clay), TPC composition containing organically modified clay (with clay), and comparative component (without clay), it was revealed that the rubber compositions of the present invention (Examples 17 to 19: diene-based rubber compositions) had a smaller rate of change of 300% modulus than the comparative rubber compositions (Comparative Example 9 and Comparative Examples 11 to 14: diene-based rubber composition), and the present invention (Examples 17 to 19) makes it possible to enhance the heat resistance to higher levels (makes it possible to improve heat resistance).

Note that, as is apparent from the results presented in Table 13 and Table 15, it was revealed that the rubber

compositions of the present invention (Examples 17 to 19: diene-based rubber compositions) exhibit the characteristics as described above (in particular e.g. the cross-linking rate is fast and heat resistance can be further improved), and thus can be suitably applied to the production of various industrial rubber parts in addition to tires, and make it possible to further improve the productivity and heat aging resistance of such industrial rubber parts.

(Example 20)

First, into a pressure kneader heated to 150°C (manufactured by Toyo Seiki Seisaku-sho, Ltd. under the trade name of "Labo Plastomill," capacity 100 mL), 30 g of millable silicone rubber (manufactured by Dow Corning Toray Co., Ltd. under the trade name of "SH851U") as a silicone-based rubber and 9 g of TPE- (VIII) were put and plasticized by kneading for 2 minutes at a temperature of 150°C and a rotation speed of 30 rpm. After that, into the pressure kneader, 7.5 g of fumed silica (manufactured by Nippon Aerosil Co., Ltd. under the trade name of "Aerosil R 104," powder material) was further added, and the condition of the rotational speed was changed from 30 rpm to 50 ppm, followed by kneading at a temperature of 150°C and a rotational speed of 50 rpm for 1.5 minutes. Then, 7.5 g of fumed silica (manufactured by Nippon Aerosil Co., Ltd. under the trade name of "Aerosil R 104") was further added, followed by kneading at a temperature of 150°C and a rotational speed of 50 rpm for 1.5 minutes. Next, the ram (floating weight) was moved up and down so that the fumed silica (powder material), adhering to the wall surface between the material inlet of the pressure kneader and the kneading chamber of the kneader, was introduced into the kneading chamber, and then the mixture in the pressure kneader was further kneaded at a temperature of 150°C and a rotational speed of 50 rpm for 1 minute. Next, the ram (floating weight) was moved up and down again in the pressure kneader, and then the mixture was further kneaded for 3 minutes at a temperature of 150°C and a rotational speed of 50 rpm and discharged to obtain a silicone-based rubber composition (54 g). As described above, a silicone-based rubber composition in the form of containing no cross-linking agent was obtained.

Next, an open roll machine (roll size: diameter 1 inch × length 2 inches, number of rolls: 2) was used to knead 50 g of the silicone-based rubber composition in the form of containing no cross-linking agent obtained as described above, and 0.21 g of an organic peroxide (manufactured by Dow Corning Toray Co., Ltd. under the trade name of "RC-4 (50P)," 2,5-dimethyl-2,5-di(t-butylperoxy) hexane, concentration 50% by mass, paste form) as a cross-linking agent, thereby obtaining a diene-based rubber composition (unvulcanized) in the form of containing a cross-linking agent. Note that the conditions employed during kneading were conditions in which, under the room temperature (25°C) condition, the rotational speed of the rear roll was 10 rpm and the rotational ratio of the front and rear rolls (front:rear) was 1:1.1.

Next, 40 g of the silicone-based rubber composition (unvulcanized) in the form of containing a cross-linking agent was used and subjected to press vulcanization (vulcanized while being press-molded) at 160°C for 30 minutes with a press molding machine (manufactured by DUMBBELL CO., LTD.), to thereby obtain a sheet-shaped cross-linked rubber composition (rubber sheet made of a cross-linked product of the silicone-based rubber composition) having a length of 150 mm, a width of 150 mm, and a thickness of 1 mm.

(Comparative Example 15)

A silicone-based rubber composition was prepared in the same manner as in Example 20 except that TPE-(VIII) was not used. Then, a sheet-shaped cross-linked rubber composition (rubber sheet) was prepared.

(Comparative Examples 16 to 18)

Diene-based rubber compositions were prepared in the same manner as in Example 20 except that, instead of using TPE-(VIII), as comparative components, Comparative Example 16 used polyethylene (manufactured by Japan Polyethylene Corporation under the trade name of "HJ590N"), Comparative Example 17 used a commercially available thermoplastic elastomer (manufactured by ExxonMobil under the trade name of "Santoprene 121-50M100": containing no clay), and Comparative Example 18 used a commercially available styrenic thermoplastic elastomer (manufactured by Mitsubishi Chemical Corporation under the trade name of "RABALON T320C," TPS, hardness Hsl5 (JIS-A hardness) : containing no clay). Then, sheet-shaped cross-linked rubber compositions (rubber sheets) were prepared.

Regarding the components used in Example 20 and Comparative Examples 15 to 18, Table 14 presents the mass ratio [unit: parts by mass] of the components contained in the diene-based rubber composition (unvulcanized) in the form containing a cross-linking agent. Note that the numerical value of the mass ratio of each component presented in Table 16 is a ratio when the content of the diene-based rubber is set to 100 parts by mass.

[Table 16]

| | | Example 20 | Comparative Example 15 | Comparative Example 16 | Comparative Example 17 | Comparative Example 18 |
|---|---|---|---|---|---|---|
| Silicone-Based Rubber | Millable Silicone Rubber | 100 | 100 | 100 | 100 | 100 |
| TPE Composition (With Clay) | TPE-(VIII) | 30 | - | - | - | - |
| Comparative Component (Without Clay) | Polyethylene | - | - | 30 | - | - |
| | Santoprene | - | - | - | 30 | - |
| | Styrenic Thermoplastic Elastomer [TPS: Hardness Hs15 (JIS-A)] | - | - | - | - | 30 |
| Powder Material | Fumed Silica | 50 | 50 | 50 | 50 | 50 |
| Cross-Linking Agent | Organic Peroxide "2,5-Dimethyl-2,5-Di (t-Butylperoxy) Hexane" | 0.75 | 0.75 | 0.75 | 0.75 | 0.75 |

[Measurement of Characteristics of Silicone-Based Rubber compositions Obtained in Example 20 and Comparative Examples 15 to 18, and Cross-Linked Products Thereof]

For the silicone-based rubber compositions obtained in Example 20 and Comparative Examples 15 to 18, the vulcanization rate (t95) was measured by employing the same method as described above in <Measurement of Vulcanization Rate (t95)>. Table 17 presents the measurement results.

In addition, for the cross-linked rubber compositions (rubber sheets) obtained in Example 20 and Comparative Examples 15 to 18, the same method as described above in <Measurement of Loss Tangent (tanδ) as Index Related to Viscoelasticity> was employed to obtain tanδ at 0°C [tanδ (0°C)] and tanδ at 60°C [tanδ (60°C)] . From the measured values, the balance between them (tanδ (0°C)/tanδ (60°C)) was determined. Table 17 presents the measured results. Note that the values of tanδ (0°C) and tanδ (60°C) presented in Table 17 were relative values when the values of tanδ (0°C) and tanδ (60°C) of the sheet-shaped cross-linked rubber composition (rubber sheet) obtained in Comparative Example 15 were converted to 100.

Moreover, for the cross-linked rubber compositions (rubber sheets) obtained in Example 20 and Comparative Examples 15 to 18, the same method as described above in <Measurement of 300% Modulus and Rate of Change Thereof> was employed to measure 300% modulus [MPa] before and after the heat aging test, thereby determining the absolute value of the rate of change of the value of 300% modulus (300% Mod). Table 17 presents the obtained results.

[Table 17]

| | | Example 20 | Comparative Example 15 | Comparative Example 16 | Comparative Example 17 | Comparative Example 18 |
|---|---|---|---|---|---|---|
| Vulcanization Rate (t95: [unit] min) | | 17.4 | 19.7 | 18.9 | 19.2 | 19.3 |
| Viscoelasticity | tanδ (0°C) | 112.0 | 100.0 | 102.3 | 103.3 | 102.6 |
| | tanδ (60°C) | 97.4 | 100.0 | 99.6 | 99.7 | 99.9 |
| | tanδ (0°C) / tanδ (60°C) | 115.0 | 100.0 | 102.7 | 103.6 | 102.7 |

(continued)

| | | Example 20 | Comparative Example 15 | Comparative Example 16 | Comparative Example 17 | Comparative Example 18 |
|---|---|---|---|---|---|---|
| Heat Resistance | 300% Mod Before Test | 8.76 | 8.98 | 9.78 | 9.54 | 8.21 |
| | 300% Mod After Test | 8.66 | 7.67 | 9.22 | 8.79 | 7.77 |
| | Absolute Value of Rate of Change (%) of 300% Mod | 1.1 | 14.6 | 5.7 | 7.9 | 5.4 |

<On Silicone-Based Rubber Compositions and the Like Obtained in Example 20 and Comparative Examples 15 to 18>

As is apparent from the results presented in Table 17, it was confirmed that, when the rubber composition of the present invention containing a silicone-based rubber, an elastomer component, and an organically modified clay (Example 20: silicone-based rubber composition) was compared with the rubber compositions in the form of containing no organically modified clay (Comparative Examples 15 to 18: comparative silicone-based rubber compositions), the rubber composition of the present invention (Example 20: silicone-based rubber composition) had a faster cross-linking rate (vulcanization rate), and it was possible to further improve the productivity of rubber products. In addition, it was revealed that the rubber composition of the present invention (Example 20: silicone-based rubber composition) had a larger value of tanδ (0°C) and a smaller value of tanδ (60°C), and had a higher balance between them (tanδ (0°C)/tanδ (60°C)) in comparison with the rubber compositions in the form of containing no organically modified clay (Comparative Examples 15 to 18: comparative silicone-based rubber compositions). It was revealed that, from the above results, the rubber composition of the present invention (Example 20: silicone-based rubber composition) makes it possible to produce tires that can exhibit wet grip properties and low fuel consumption (so-called rolling resistance) at a higher level in a well-balanced manner, and to further improve the productivity of such tires. Moreover, it was revealed that the rubber composition of the present invention (Example 20: silicone-based rubber composition) had a smaller rate of change of 300% modulus than the comparative rubber compositions (Comparative Examples 15 to 18: comparative silicone-based rubber compositions), and the present invention (Example 20) makes it possible to enhance the heat resistance to higher levels (makes it possible to improve heat resistance).

Note that, as is apparent from the results presented in Table 17, it was revealed that the rubber composition of the present invention (Example 20: silicone-based rubber composition) exhibits the characteristics as described above (in particular e.g. the cross-linking rate is fast and heat resistance can be further improved), and thus can be suitably applied to the production of various industrial rubber parts in addition to tires, and makes it possible to further improve the productivity and heat aging resistance of such industrial rubber parts.

[Industrial Applicability]

As has been described above, the present invention makes it possible to provide a rubber composition (more preferably a diene-based rubber composition) which can achieve a sufficiently high value of tanδ at 0°C (loss tangent: tanδ (0°C)) and simultaneously a sufficiently low value of tanδ at 60°C (loss tangent: tanδ (60°C)) after cross-linking, which can achieve a sufficiently high balance between the value of tanδ (0°C) and the value of tanδ (60°C), and which further has a faster cross-linking rate, a cross-linked rubber composition which is a cross-linked product thereof, a tire, and an industrial rubber part containing the cross-linked rubber composition.

As above, when cross-linked, the rubber composition of the present invention (more preferably the diene-based rubber composition) can have the value of tanδ (0 °C) as an index of wet grip properties and the value of tanδ (60°C) as an index of rolling resistance (low fuel consumption) at sufficiently higher levels in a more balanced manner, and thus is particularly useful as a tire material and the like.

## Claims

**1.** A rubber composition comprising:

a rubber having no hydrogen-bond cross-linkable moiety;

at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below, and polymers (B) each of which contains a hydrogen-bond cross-linkable moiety and a covalent-bond cross-linking moiety in a side chain and has a glass-transition point of 25°C or below; and
a clay, wherein
a content of the polymer component is 0.01 to 300 parts by mass relative to 100 parts by mass of the rubber, and an amount of the clay contained is 20 parts by mass or less relative to 100 parts by mass of the polymer component.

**2.** The rubber composition according to claim 1, further comprising at least one bulking agent selected from the group consisting of silica and carbon black at a ratio of 10 to 150 parts by mass relative to 100 parts by mass of the rubber.

**3.** The rubber composition according to claim 1 or 2, wherein the hydrogen-bond cross-linkable moiety contained in the side chain of the polymer (B) is a hydrogen-bond cross-linkable moiety having a carbonyl-containing group and/or a nitrogen-containing heterocycle.

**4.** The rubber composition according to any one of claims 1 to 3, wherein the clay is an organically modified clay.

**5.** The rubber composition according to any one of claims 1 to 4, wherein a cross-link in the covalent-bond cross-linking moiety contained in the side chain of the polymer (B) is formed by at least one bond selected from the group consisting of amide, ester, lactone, urethane, ether, thiourethane, and thioether.

**6.** A cross-linked rubber composition which is a cross-linked product of the rubber composition according to any one of claims 1 to 5.

**7.** A tire comprising the cross-linked rubber composition according to claim 6.

**8.** An industrial rubber part comprising the cross-linked rubber composition according to claim 6.

## INTERNATIONAL SEARCH REPORT

International application No. PCT/JP2018/029135

A. CLASSIFICATION OF SUBJECT MATTER
Int.Cl. C08L21/00(2006.01)i, B60C1/00(2006.01)i, C08J3/24(2006.01)i, C08K3/04(2006.01)i, C08K3/34(2006.01)i, C08K3/36(2006.01)i, C08L101/02(2006.01)i

According to International Patent Classification (IPC) or to both national classification and IPC

B. FIELDS SEARCHED

Minimum documentation searched (classification system followed by classification symbols)
Int.Cl. C08L21/00, B60C1/00, C08J3/24, C08K3/04, C08K3/34, C08K3/36, C08L101/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2017-57393 A (JX ENERGY CORPORATION) 23 March 2017, claim 1, paragraphs [0187], [0194], [0195], [0268], [0277], table 1 (Family: none) | 1-8 |
| X | WO 2017/047274 A1 (JX ENERGY CORPORATION) 23 March 2017, claim 1, paragraphs [0245], [0253], [0254], [0313], [0317]-[0324], table 1 & EP 3351595 A1, claim 1, paragraphs [0229], [0237], [0238], [0297], [0301]-[0308], table 1 & CN 108026377 A & KR 10-2018-0054594 A & TW 201726817 A | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 October 2018 (26.10.2018) | 06 November 2018 (06.11.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010196004 A
- JP 2011148892 A
- JP 5918878 B
- JP 2006131663 A
- JP 2017057322 A
- JP 2017057393 A
- JP 2017057323 A
- JP 6000714 B
- US 3287440 A
- US 3709840 A
- US 4311628 A
- JP 2016020450 A
- JP 2016193970 A
- WO 2017047274 A